(19) Europäisches Patentamt
European Patent Office
Office européen des brevets

(11) EP 1 787 811 A2

(12) EUROPEAN PATENT APPLICATION

(43) Date of publication:
**23.05.2007 Bulletin 2007/21**

(21) Application number: **07004696.6**

(22) Date of filing: **19.07.2002**

(51) Int Cl.:
***B41F 13/00*** *(2006.01)* ***G06K 15/00*** *(2006.01)*
***G06F 3/12*** *(2006.01)* ***H04N 1/60*** *(2006.01)*

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **30.07.2001 US 308709**

(62) Document number(s) of the earlier application(s) in accordance with Art. 76 EPC:
**02750170.9 / 1 412 187**

(71) Applicant: **The Ackley Martinez Company DBA MGI Studio**
**Dallas, TX 75229 (US)**

(72) Inventor: **The designation of the inventor has not yet been filed**

(74) Representative: **Klunker . Schmitt-Nilson . Hirsch**
**Winzererstrasse 106**
**80797 München (DE)**

Remarks:
This application was filed on 07 - 03 - 2007 as a divisional application to the application mentioned under INID code 62.

# (54) Color management processing system and method

(57) A color management processing method is disclosed. The method includes providing a first set of one-dimensional profile density values for a proofing system according to a first set of specifications, providing a first set of system admixture density values for the proofing system according to the first set of specifications, and providing a second set of one-dimensional density values using a press output device according to a second set of specifications. The method also includes providing a second set of system admixture density values using the press output device according to the second set of specifications, creating a proof of a production print job using a second proofing system compliant with the first set of specifications, and providing the production print job in response to the first and second sets of one-dimensional density values and the first and second sets of system admixture density values.

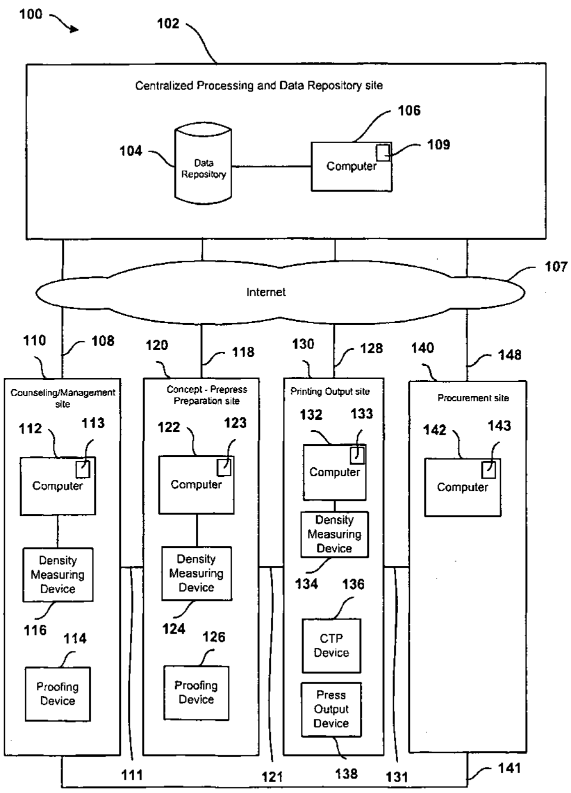

FIG. 1

EP 1 787 811 A2

## Description

### TECHNICAL FIELD OF THE INVENTION

This invention relates in general to the field of printing and, more particularly, to a color management processing system and method.

### BACKGROUND OF THE INVENTION

Traditional practices in preparation of production material in the graphic arts community, including printing in the areas of art, photography, graphic design and publication, has usually included very specific procedures. For example, practitioners often exchange image data files that are to be used in print production between the separate stages of concept-prepress preparation and the production print job. For example, a customer may approve image data that has been proofed at an advertising agency. The image data file representing the customer approved proofs may need to be transferred to one or more sites for press production, such as sites that supply a variety of magazines or newspapers.

A few methods have attempted to address some of these issues, including the use of Specifications for Web Offset Publications (SWOP®) and methods laid out by the International Color Consortium (ICC). Unfortunately, each of these may suffer from disadvantages. For example, ICC color management systems have attempted to design technical aspects of the concept-prepress preparation stage to fit the characteristics of a specific press that are to be used in the production print job. In other words, these systems are designed to provide a method for proofing flexibility to simulate the characteristics of a particular press.

Moreover, methods, such as those generally practiced aspects of SWOP®, design technical aspects of the concept-prepress preparation stage to fit characteristics for a contract proofing system that is designed by manufacturers to simulate an "average" press. Additional methods utilize specifications and guidelines published by Specifications for Newsprint Advertising Production (SNAP) and General Requirements for Applications in Commercial offset Lithography (GRACoL®).

Another recently-proposed method utilizes ICC color management methods, coupled with traditional press make-ready methods of measuring color samples on a color bar, but may not provide values that are directly related to color appearance of an image in relation to a color bar. Using this method, the appearance of a color, not density and dot gain numbers, is used to match a printed result to a proof. Another shortcoming, for example, is due to the CIE colorimetry methods employed, which suffer from the inability to properly compensate for changes in substrate color appearance.

### SUMMARY OF THE INVENTION

Unfortunately, the concept-prepress preparation stage in the printing industry is typically separated chronologically as well as geographically from the print production process, and thus print production on a particular press may result in a printed image that is very different from the customer approved proof. Unfortunately, this method typically results in a customer having to re-approve the press image, creating spoilage of resources and loss of valuable time. Moreover, unfortunately, practitioners believe methods such as using SWOP or those laid out by the ICC are impractical for many reasons, among which includes the inability for such a system to accommodate the exchange of image data files as normally used in the industry. For example, in the publishing industry, multiple presses are typically used, for example, to print a single advertisement in multiple magazines.

In addition, systems using SNAP and GRACoL may suffer from a first disadvantage in that they do not typically provide for sufficient methods of communication between all parties during the process of exchanging and using image data files. This lack of communication between buyers and practitioners may prevent effective exchange of color management information, frustrating attempts to adjust color appearances that would satisfy high-end print buyers. These adjustments in color appearances could be used to partially compensate for deviations in color values from targeted values. These deviations are typically significant and are usually inherent in day-to-day production of off-press production proofs, including contract and non-contract proofing systems. Moreover, all of these methods suffer from a second disadvantage in that they typically address only portions of the color management process and do not utilize the characteristics of specific presses, but rather compromise to those of an average press.

Furthermore, methods using CIE colorimetry may impose the need to characterize process and proofing systems multiple times using multiple types of substrates, a process that is impractical and inefficient. Moreover, the method assumes that a color gamut achievable on a press is not typically less than a color gamut presented by reference printing conditions. Unfortunately, proofing systems which are representative of reference printing conditions typically have admixture characteristics that greatly differ from the press. Thus, this assumption may be incorrect, and may result in compromise rather than remedying any gamut mismatches that may occur. Furthermore, this method assumes static fingerprinting of a press to provide color characterization data that may be used from one production print job to another. Unfortunately, this assumption may not be true because press characteristics are typically not static - they change daily, or even between production print jobs. Moreover, the general commercial printing and publishing industry may only use limited regions of quality lithographic printing generally-accepted four color gamut or intensity ranges due to these inconsistencies and disadvantages from which these methods and systems suffer.

From the foregoing, it may be appreciated that a need has arisen for an improved color management system and method. In accordance with teachings of the present invention, systems and methods are provided that may substantially reduce or eliminate disadvantages and problems of conventional printing systems.

A color management processing method is disclosed. The method includes providing a first set of one-dimensional profile density values for a proofing system according to a first set of specifications, providing a first set of system admixture density values for the proofing system according to the first set of specifications, and providing a second set of one-dimensional density values using a press output device according to a second set of specifications. The method also includes providing a second set of system admixture density values using the press output device according to the second set of specifications, creating a proof of a production print job using a second proofing system compliant with the first set of specifications, and providing the production print job in response to the first and second sets of one-dimensional density values and the first and second sets of system admixture density values.

A color management system is also disclosed. The system includes a Counseling/Management site communicatively coupled to a processing site and operable to receive density values generated by at least one reflective four-color reproduction system, measure the density values, and perform quality control related to the density values. The processing site is operable to evaluate characteristics from the density values, and calculate factors in response to the density values and the evaluation and transmit the factors to a subscriber site. The factors are to be used to adjust and generate image data to be printed.

Another color management system is also disclosed. The system includes a central data repository in a processing site operable to store adjustment data to be used in performing a production print job using one of a plurality of press output devices and in response to one of a plurality of proofing systems, the processing site further operable to store transformation data associated with the plurality of proofing systems and the plurality of press output devices. The system also includes logic in the processing site operable to communicate over the network with the central data repository and operable to cause identifiers for the one of the plurality of proofing systems and the one of the plurality of press output devices to be received at the processing site over the network. The logic is also operable to cause adjustment data to be provided from the central data repository over the network to at least one of a plurality of subscribers in response to the provided proofing system and press system identifiers, the adjustment data to be used in performing a production print job using the one of the plurality of press output devices and in response to the one of the plurality of proofing systems. The processing site is operable to communicate with the plurality of subscribers.

Another color management method is also disclosed. The method includes providing identifiers for one of a plurality of proofing systems and one of a plurality of press output devices over a network, associating transformation data with the plurality of proofing systems and the plurality of press output devices, and storing the transformation data in the central data repository located in a processing site. The method further comprises calculating adjustment data in response to the provided proofing system and press system identifiers and the transformation data the adjustment data to be used in performing a production print job using the one of the plurality of press output devices and least one of a plurality of subscribers in response to the provided proofing system and press system identifiers, The method also includes communicating the adjustment data to at leasts one of the plurality of subscribers from the processings its over the network..

Unfortunately, a proof includes inherent tone and color differences from a press sheet, and a great deal of time is consumed in assessing how to improve the coincidence of the tone and color reproduction characteristics of a press to those of a proofing system. Moreover, SWOP specifications do not typically discuss several variables such as proportionality failure rates, system admixture characteristics, and color gamut mismatches that color scientists use in characterizing color reproduction. International Color Consortium (ICC) color management systems have also attempted to address the color management process by utilizing colorimetry measurements, usually in a single graphic data file multi-dimensional transformation process, but practitioners in the printing press industry usually believe that this type of adaptation is inadequate. These systems also fail to separate or compensate for these variables. ICC-colorimetry based color management systems also attempt to map points on a larger color gamut to a nearest point on a smaller color gamut by a variety of corrections, such as relative or absolute colorimetric or photometric. Unfortunately, this type of gamut mapping has typically resulted in compromises that are unacceptable in the printing industry. Moreover, these systems usually attempt to map colors to be used with a proofing device, which usually has a larger color gamut, to those to be used with a printing device, which usually has a smaller color gamut. These systems and methods typically limit the output achievable by a printing press.

Unfortunately and for example, the SWOP approach suffers from inconsistencies and inaccuracies because, among other things, this approach utilizes dot gain and print contrast measurements, which may not provide the right measurements to perform aspects of accurate color management. Moreover, these systems and methods do not consider varying effects from the principle variables that ultimately should be addressed in the color management process. For example, tonal reproduction characteristics vary widely with characteristics of a reflective reproduction device such as electrophotographic, thermal, laser and inkjet printers, and offset lithography, letter press, gravure, and flexography printing presses and peripheral conditions, and traditionally are reported as dot gain and print contrast. Many of these variations that may be caused by fluctuations in press printing conditions' printing characteristics including, but not limited to, variations due to paper/base substrates, inks, plates, fountain solutions, image transferring cylinder blankets, press mechanical settings and ambient moisture/temperature conditions may change batch-to-batch or day-to-day. These fluctuations usually affect the printing device's reproduction characteristics during each production print job and, unfortunately, it is not practical to track down causes of these fluctuations.

Aspects of the invention may provide several important advantages. Various embodiments of the invention may have none, some, or all of these advantages. For example, one aspect of the invention is a method for gathering data such as density data that provides more control in the color management process. The method includes providing reference profile density values for at least one color combination having a plurality of colors produced by a reference device using a reference colorant set. The reference colorant set has reference initial percent dot values (IPDVs) for the at least one color combination. The method also includes providing current profile density values for at least one color combination produced by a current device using a current colorant set. The current colorant set has current IPDVs for the at least one color combination. The method also includes quantifying reference theoretical percent dot values (TPDVs) as efficiency attributes using the reference colorant set and quantifying current TPDVs as efficiency attributes using the current colorant set. The method also includes calculating percent dot value correction factors that compensate for at least one difference between image data produced with the reference colorant set and image data to be printed with the current colorant set in response to the reference efficiency attributes and the current efficiency attributes, the factors to be used to adjust and generate the image data to be printed. Such calculations may provide substantially representative characteristics of a full tonal scale (1-100%) for press and/or proofing conditions, and the ability to provide factors that may be applied to, for example, digital representations of images, at a computer-to-plate (CTP) or direct imaging press production phase. In other words the accuracy, with which the appearance of the outputs of one reflective reproductive system may be made to correspond to another, may be improved.

Another aspect of the invention may also provide for separately compensating for two of five principle variables. For example, one embodiment of a system admixture compensation method includes identifying system admixture characteristics of data produced by a reference colorant set as reference TPDVs in response to reference profile density values and reference IPDVs. The method also includes identifying system admixture of data produced by a current colorant set as current TPDVs in response to current profile density values and current IPDVs. The method also includes providing color gamut density adjustment factors (CGDAFs) if the sum of at least one of the factors and a corresponding at least one of the initial reference IPDVs exceeds 100 percent. The CGDAFs may correct the color gamut mismatch and at least one of the factors may be calculated by determining a control component and calculating a product of a first value equal to a targeted solid major density aimpoint of the control component and the at least one factor, and a second value equal to a reference TPDV, for the control component, that is required to achieve a measured density for at least one of a plurality of color channels if a system using the reference colorant set had perfect efficiency divided by a current TPDV, for the control component, that is required to achieve a measured density for at least one of a second plurality of color channels if a second system using the current colorant set had perfect efficiency to obtain the at least one factors. In addition, at least one of the factors compensates for at least one difference between image data produced with the reference colorant set and image data to be printed with the current colorant set and is used to adjust and generate the image data to be printed. Such advantages provide the present invention the advantage of compensating for differences between multiple colorant sets and their corresponding RM/CRSs with different additivity failure characteristics, for a variety of systems.

Another aspect of the invention may also separate out factors that may be caused by fluctuations in printing press and peripheral printing conditions' printing characteristics that affect the printing device's reproduction characteristics. These fluctuations include, but are not limited to, variations due to paper/base substrates, inks, plates, fountain solutions, image transferring cylinder blankets, press mechanical settings, ambient air conditions, ambient moisture conditions, ambient temperature conditions, and chemical residue conditions, which may change batch-to-batch or day-to-day. Chemical residue conditions vary with characteristics of, for example, plate or blanket wash chemistry, roller residue, wear and tear on press components, and a variety of ambient air conditions.

Another aspect of the present invention is a data form. The system admixture data form includes a first column representing a plurality of one-dimensional color control regions produced using a colorant set. The first column is located approximately along a first axis generally parallel to an output path of a press output device. The system admixture data form also includes a second column representing a plurality of multi-dimensional color control regions produced using the colorant set. The second column is located approximately along a second axis generally parallel to and at a lateral spacing from the first column. The first axis and the second axis are positioned proximate to one another and the lateral spacing does not exceed a predetermined distance. In a particular embodiment, the predetermined distance does not exceed 25 millimeters. In yet another embodiment, the second column is selected from the group consisting of the magenta, red, green, cyan, yellow, blue, and neutral families.

One embodiment of a system admixture data form provides for arrangement of data in color families. The present invention provides the advantage of allowing for the use of color image editing engine (CIEE) functionality, which allows adjustments to be made to all color families as desired. The present invention provides the advantage of providing suitable color samples for which applicable measurements may be taken. In addition, one or more aspects of the present invention may provide the advantage of reducing calculation inaccuracies by reducing any differences in ink film thickness and tone reproduction characteristics between measurements. Such an advantage may reduce system errors that affect color manageability.

Another aspect of the invention may also provide for calculation of CGDAFs, which may reduce or remove the effects of compromises reached by traditional color management systems' photometric or colorimetric corrections. Moreover, CGDAFs may be utilized in a method in conjunction with percent dot value color correction factors (PDCCFs) and/or secondary PDCCFs to calculate a density that corresponds to a larger than 100 % dot value to be used with a printing device, which usually has a smaller color gamut, to those to be used with a proofing device, which usually has a larger color gamut. Other technical advantages may be readily ascertainable by those skilled in the art from the following figures, description and claims.

One aspect of the invention is a printing adjustment method that includes providing a plurality of solid and screened density values produced by a proofing device that represent intended density values. The method also includes providing a plurality of solid and screened density values produced by a press output device. The method also provides calculating, in response to selected ones of the plurality of density values produced by the press output device and selected ones of the plurality of density values produced by the proofing device, required percent dot values to be used to print on the press output device a plurality of adjusted density values that approximately correspond to the intended density values. In a particular embodiment, the plurality of solid density values produced by the press output device are varied approximately linearly in density along a first axis, the first axis approximately perpendicular to direction in which output of the press output device is produced.

Also in a particular embodiment, the step of calculating may also include selecting from the plurality of solid density values produced by the press output device values that approximately correspond to solid density aimpoints, providing a statistical representation of the selected values, performing a regression analysis of the selected values that approximately correspond to solid density aimpoints, and using ones of the plurality of solid density values produced by the press output device that approximately correspond to the selected values that approximately correspond to solid density aimpoints. The step of calculating may also include applying first adjustments to at least one of the density values produced by the press output device, in response to the regression analysis and at least one of the density values produced by the proofing device. The step of calculating may also include using interpolation in response to the first adjustments to provide the required percent dot values.

Another aspect of the invention is a printing adjustment data form, which includes a plurality of solid color control regions, produced by a press output device, which correspond to positions approximately along an axis, and a plurality of screened color control regions produced by the press output device. Density values for at least two of the plurality of solid color control regions are intentionally varied using predetermined values along the axis. In a particular embodiment, the density values are varied approximately linearly along the axis. In another embodiment, the density values are varied by regulating ink-film thickness along the axis.

Another aspect of the invention is a printing adjustment system, which includes a press output device operable to print image data having density values and a computer operable to provide input data to the press output device. The computer is further operable to read a plurality of solid and screened density values produced by a proofing device that represent intended density values and read a plurality of solid and screened density values produced by the press output device. The computer is also further operable to calculate, in response to selected ones of the plurality of density values produced by the press output device and selected ones of the plurality of density values produced by the proofing device, required percent dot values to be used to print on the press output device a plurality of adjusted density values that approximately correspond to the intended density values.

Another aspect of the invention is a printing adjustment application, which includes a computer-readable medium and software residing on the computer-readable medium. The software is operable to determine a mathematical relationship between a density value of a first plurality of solid color regions of image data produced by a press output device and a density value of a plurality of screened color regions of image data produced by the press output device. The first plurality of solid color regions of image data produced by the press output device are intentionally varied using predetermined values. The software is further operable to adjust, in response to the mathematical relationship, the density value of the plurality of screened color regions of image data produced by the press output device and a density value of ones of a second plurality of solid color regions of image data produced by a press output device selected in response to a plurality of solid color regions of image data produced by a proofing device. The plurality of solid color regions of image data produced by the proofing device represent intended density values. The software is further operable to interpolate by adjusting at least one of the plurality of screened color regions of image data produced by the press output device in response to an amount proportional to a product of a first value and a second value. The first value is a difference between percent dot values of two of the plurality of screened color regions of image data produced by the press output device, and the second value is a ratio of a difference between at least one of the intended density values and one of the two of the plurality of screened color regions of image data produced by the press output device to the difference between the two of the plurality of screened color regions of image data produced by the press output device. The software is further operable to determine a required percent dot value in response to the interpolation, the required percent dot value operable to cause the color density value of at least one of the regions of the image data produced by the press output device to approach the intended density values of the corresponding region produced by the proofing device.

Another aspect of the invention is a printed image, which includes a substrate and image data. The image data is produced by a press output device residing on the substrate, and produced in response to required percent dot values automatically calculated in response to selected ones of a first plurality of solid and screened density values representing intended density values and selected ones of a second plurality of solid and screened density values. The required percent dot values produced by the press output device provide adjusted density values that approximately correspond to the intended density values. The first plurality of solid and screened density values is produced by a proofing device and the second plurality of solid and screened density values is produced by the press output device.

Another aspect of the invention is a printing adjustment method that includes providing a first plurality of solid and screened density values produced by a press output device and providing a second plurality of solid and screened density values. The method also includes automatically calculating density variance data between a statistical representation of at least a subset of the first plurality of solid and screened density values and corresponding representations of ones of at least a subset of the second plurality of solid and screened density values, the density variance data operable to be used to automatically calculate tonal reproduction adjustment values to produce data on the press output device before performing a print production run.

Another aspect of the invention is a printing adjustment method that includes providing press profile data from a press output device and providing proofing device profile data. The method also includes automatically, when desired, calculating adjustment values in density that correspond to percent data values to be printed on the press output device in response to at least one of the group consisting of the press profile data and the proofing device profile data, the adjustment values operable to reduce effects on image data produced by the press output device, the effects resulting from fluctuations in at least one of printing press and peripheral printing conditions' printing characteristics.

Another aspect of the invention is a printing adjustment method that includes providing a plurality of segments produced by a press output device having a plurality of ink fountain zone controls, each of the segments having a width, a plurality of segment solid density color values each having an offset value measurable as a fraction of the width, and a segment center. The method also includes identifying at least a portion of the segments as encompassed segments relative to designated copy matter to be printed by the press output device, the encompassed segments having a first end segment and a second end segment. The method also includes calculating color density variations for at least a portion of the plurality of segment solid density color values. The method also includes calculating, in response to the offset values and at least a portion of the color density variations, adjustment data for at least one of the ink fountain zone controls, the adjustment data operable to be used to adjust ink deliverable by the ink fountain zone control.

The invention may also provide a method for gathering data that is representative of and provides more control of a press' characteristics in reproducing tonal screened areas as the solid ink density is regulated across the cylinder of the press. The density may be regulated to meet specifications for low-level, mid-level, and high-level solid density aimpoints with transitions between the aimpoints that may be approximately linear. Such an advantage provides substantially representative characteristics of a full tonal scale (1-100%) for press conditions, and the ability to provide factors that may be applied at a computer-to-plate (CTP) or direct imaging press production phase. In other words, the accuracy with which an appearance of a print production job (press output data or print sheet) may match the output of a proofing device, whether digital or otherwise (a proof), may be improved.

The invention may also provide the advantage of using color bar segments to apply color adjustments to tonal reproduction characteristics, which provides acceptable color approval at a press check phase of production. Such an advantage may eliminate the sole reliance upon the manipulation of ink film thickness that is typically required in other conventional systems to alter tonal color areas, and which compromises printed images solid and near solid areas as other tonal areas are adjusted.

Another technical advantage of the invention is that the invention may also compensate for fluctuations in printing press and peripheral printing conditions' printing characteristics that affect the printing device's reproduction characteristics. These fluctuations include, but are not limited to, variations due to paper/base substrates, inks, plates, fountain solutions, image transferring cylinder blankets, press mechanical settings, ambient air conditions, ambient moisture conditions, ambient temperature conditions, and chemical residue conditions, which may change batch-to-batch or day-to-day. These include, but are not limited to fluctuations in chemical residue conditions such as plate or blanket wash chemistry, roller residue, wear and tear on press components, and a variety of ambient air conditions. Such an advantage may improve the accuracy with which the reproduction characteristics of a printing device may be measured, and subsequently with which the appearance of press output data may be matched to a proof. In a particular embodiment, these fluctuations may be compensated for by using Interim Press Profile Adjustments.

Still another technical advantage of the invention is that the invention also may utilize regression equations that may be used to calculate more precise tonal, or screened, color density values. Such an advantage may also improve the accuracy with which the appearance of press output data may be matched to a proof. Yet another technical advantage of the invention is that the invention may also provide color bar segments that may be used to provide color measurements that may be compared to desired aimpoints, and calculations are made of density variations, which may be recorded and reported. For example, use of the invention does not require annotations of density readings by hand. Moreover, use of aspects of the invention provide precise density variations specifically related to each ink fountain zone control, while eliminating traditional methods' requirements for sheet alignment and the visual translations of color sample positions into ink fountain zone control positions. The method may also provide the advantage of reducing the number of distance measurements that must be taken that relate to a specific printing press that would otherwise be required with conventional systems. These advantages may save resources such as time and materials, and may improve accuracy of products printed on the production run.

Such an advantage may also reduce the dependency of the method on any particular printing press or model of press output device. These advantages may also provide an operator valuable information about which keys may require adjustment and if so, the degree of adjustment necessary, and may permit enhanced precision in the control of the ink film thickness, which subsequently controls the solid ink density that may be measured at each color sample. The foregoing advantages may also allow more precise matching of solid, as well as tonal, densities for press output data to a proof, and may allow more precise calculation of adjustment values which may then be used to print a production job whose appearance more accurately matches a proof output.

## BRIEF DESCRIPTION OF THE DRAWINGS

For a more complete understanding of the present invention, the objects and advantages thereof, reference is now made to the following descriptions taken in connection with the accompanying drawings in which:

FIGURE 1 is a block diagram of an example of a system that may be used to perform color management according to an embodiment of the present invention;
FIGURE 2 illustrates a method for color management according to an embodiment of the present invention;
FIGURE 3 illustrates a method for performing a production print job according to an embodiment of the present invention;
FIGURE 4 graphically illustrates an example of a relationship between a density range of solid major density values on the color gamuts, or color intensity ranges, of two sets of printing inks according to an embodiment of the present invention;
FIGURE 5 is an example of a method for providing printing adjustments in accordance with the present invention;
FIGURE 6 is an exemplary System Admixture Data Form ("SADF") in accordance with teachings of the present invention;
FIGURE 7 is an example of a method for providing Color Gamut Density Adjustment Factors (CGDAFs) in accordance with teachings of the present invention;
FIGURE 8 is an example of a method for providing Percent Dot Color Correction Factors in accordance with teachings of the present invention;
FIGURE 9 graphically illustrates an example of a relationship between additivity failure and a color gamut;
FIGURE 10 is a high-level diagram illustrating an exemplary computer that may be used with the present invention;
FIGURE 11 is an example of a method for providing printing adjustments in accordance with the present invention;
FIGURE 12 is an exemplary Printing Adjustment Data Form ("PADF") in accordance with teachings of the present invention;
FIGURE 13 is an example of a method for creating a Proofing Device Profile in accordance with teachings of the present invention;
FIGURE 14 is an example of a method for creation of a Press Profile in accordance with teachings of the present invention;
FIGURE 15 is an example of a method for performing a printing press run of a PADF in accordance with teachings of the present invention;
FIGURE 16A is an example of a Press Color Bar that may be used in accordance with teachings of the present invention;

FIGURE 16B graphically illustrates aspects of a Press Color Bar that may be used in accordance with teachings of the present invention;

FIGURE 17 is an example of a method for performing an improved press make-ready procedure in accordance with teachings of the present invention;

FIGURE 18 is an example of a method for measuring data for a Press Profile in accordance with teachings of the present invention;

FIGURE 19 is an example of a method for creating 1D Transformation Data and applying the data in a production run in accordance with teachings of the present invention;

FIGURE 20 is an example of a method for creating 1D Transformation Data in accordance with teachings of the present invention;

FIGURE 21 is an example of a method for adjusting of Press Profile major densities to account for differences between a Proofing Device Profile and a Press Profile in accordance with teachings of the present invention;

FIGURE 22 is an example of a method for creating 1D Transformation Data values in accordance with teachings of the present invention;

FIGURE 23 is an example of a method for performing print production quality control in accordance with teachings of the present invention;

FIGURE 24 is an example of another method for performing print production quality control in accordance with teachings of the present invention; and

FIGURE 25 is a high-level diagram illustrating an exemplary computer that may be used with the present invention.

## DETAILED DESCRIPTION OF THE DRAWINGS

The present invention provides several important advantages. Various embodiments of the invention may have none, some, or all of these advantages. One aspect of the present invention may facilitate matching of an image printed on a press output system to that printed using a proofing system. For example, a first objective of one aspect of the present invention is to provide for more accurate matching of densities of these images by providing specifications to be used in both the proofing devices and press output devices in conjunction with the methods in U.S. Patent Application Serial No. 10/086,080, entitled PRINTING ADJUSTMENT SYSTEM AND METHOD, filed February 27, 2002, and U.S. Patent Application Serial No. __________________, entitled SYSTEM ADMIXTURE COMPENSATION SYSTEM AND METHOD, filed on even date herewith, the disclosures of which are incorporated herein by reference. Another objective of an aspect of the present invention is to provide images printed using press output systems that have a larger gamut than those that may be provided using traditional press output systems.

Moreover, another aspect of the invention envisions facilitating aspects of the color management process that relate to the hard copy output where proofing devices and previous output devices that are Reflective Multi-Color Reproduction Systems (RM/CRS), such as Reflective Four-Color CRP (R4/CRS), Three-Color CRS (R3/CRS), and/or other multi-color systems as applicable, now known or as developed in the future, are used by characterizing, and separately compensating for, several variables such as tone reproduction, light reflectance proportionality, system admixture characteristics, and color intensity and saturation gamut mismatches that color scientists use in characterizing color reproduction processes. One embodiment of the present invention performs adjustments that, at least in part, accommodate and compensate for the interdependency of three of these variables. Such adjustments may provide improvements over traditional methods that may suffer from inaccurate or incorrect calculations that result from an inability to take into account these interdependencies. These variables are discussed in further detail in conjunction with TABLE II.

Aspects of the present invention may provide more precise control of these variables involved in the color management process than traditional color management systems. More precise control of at least some of these variables may provide higher quality printed products that include color with higher intensity and depth. Such color with higher intensity and depth may not typically be accomplished using generally accepted prior art methods without producing unexpectedly large errors between the appearance between a press sheet and proof color. For example, the range of solid major densities that may be used as Solid Major Density Aimpoints may be increased by approximately 40 percent across three of four color channels, and that are discussed in further detail in conjunction with FIGURE 4, allow the color gamut of press systems to be enlarged approximately 167 percent over color gamuts that have been traditionally used in general industry printing practices. To illustrate when comparing a set of Red, Green, and Blue samples (created, e.g., by respective overprint combinations of magenta and yellow colorants, cyan and yellow colorants, and cyan and magenta colorants, as discussed below) generated by methods of the present invention to a set of samples generated by general industry methods, the set of samples generated by methods of the present invention appear to an average observer to be higher in color intensity, saturation and/or depth or, in other words, more "colorful." The difference between the sample sets may be objectively represented by using CIELAB color difference equations to generate $\Delta E$ values of Red = 11.9, Green = 15.4, and Blue = 10.8. In many cases, color critics skilled in the art of color matching, such as high-end print buyers, may be able to discern $\Delta E$ value differences below 3.0.

Preparation of all prior-to-platemaking final proofing is contemplated by utilizing a limited number, such as 10, of proofing systems that may be defined for the purposes of this description as Universal Proofing Systems (UPS). These UPS may be utilized similarly to contract proofing systems which, in the industry, mean that they have been certified or otherwise accepted as compliant with a set of specifications such as SWOP®, a process described in this description utilizing the term "certified." For example, by being compliant with values of specifications such as those described in Tables III, V, and VI, UPS provide very similar appearances to one another of images proofed from common files. One advantage of such UPS is that the creative and other processes of print production do not necessarily have to rely on a specific press and/or proof system.

Using methods of the present invention, a print job may be tailored to a particular press. For example, aspects of the present invention contemplate providing this tailoring in a phase of production such as computer-to-plate (CTP) or direct imaging (DI) platemaking that is later than other phases used with traditional methods of color management. For example, aspects of the present invention include characterization of data for all UPS and/or a particular press to be used. These characterization data, and any subsequent transformation data, may be applied to a production print job in order to provide a close appearance match between results printed on a particular press and that of the chosen UPS. As one example, in publication advertising printing, magazines typically include ads that are prepared in different locations. In such an example, different transformations may be applied to each ad, depending on the UPS used to proof the ad and the particular proof used to obtain customer approval of the ad.

Adjustments of production print job data in response to surrounding printing conditions are contemplated, which provide flexibility to alter a press' printing characteristics to meet desired characteristics, where other traditional systems may suffer from limitations such as wear or mechanical problems in the equipment. Furthermore, utilizing aspects of the present invention, the printer may achieve higher productivity and higher efficiencies over traditional systems that require a printer to guess at the values for these adjustments. For example, in traditional methods for setting up a press to meet a proof that has been accepted by a customer, the pressman generally must guess at adjusting the press to meet tone reproduction characteristics acceptable to a customer, which usually results in wasted time, resources, and inaccuracies. In addition, a color separator using methods or systems contemplated herein may also gain efficiency by not having to set up its processes to meet characteristics of a multitude of presses, but rather may create its work and achieve customer approval based upon the characteristics out of the chosen UPS. Such an advantage also may reduce wastage of resources and may achieve higher productivity.

Color density measurements may be used to facilitate matching the appearance of the outputs of one RM/CRS to another using a System Admixture Data Form (SADF) and/or a Printing Adjustment Data Form (PADF). Systems and methods of the present invention contemplate the use of a variety of RM/CRS press output devices 138, such as offset lithography, letter press, gravure, flexography, and screen printing systems and that may be used with various lithographic processes in development such as waterless lithography, printing with single fluid water-based inks, and plateless digital offset, and in some aspects, with electrophotographic, thermal, and inkjet printing processes. Various aspects of the invention may be used with some or all proofing and press output devices as discussed in further detail in conjunction with FIGURE 1.

TABLE I lists examples of traditional processes that are used in high-volume print production. It may be useful to distinguish these traditional methods used in color management of the color separation process from aspects of the present invention that may be used in the printing and publishing industries. For example, as illustrated in process steps 4A-C, colors of original copy and/or other color specifications such as those provided or dictated by artistic director's instructions, merchandise samples, and corporate logo /brand colors, may be matched to the colors on a contract proofing system of choice. On the other hand, systems and methods of the present invention address aspects of color management that include process steps 5, 8, and 14 as illustrated in TABLE I, and that are distinct from these color separation processes. As technology permits, systems and methods of the present invention also contemplate addressing aspects of color management that include interim proofing steps such as 1B, 2B, 3D and 4D.

TABLE I

| Traditional Processes for High-Volume Print Production |
|---|
| PROCESS |
| 1. Concept |
| A. Pencil Sketching and Colorization |
| B. Interim Office Machine Color Proofing |
| |
| 2. Photography and art |

(continued)

| Traditional Processes for High-Volume Print Production |
| --- |
| PROCESS |
| A. Digital Photography and Digital Art |
| B. Interim Non-Contract Color Proofing |
| |
| 3. Graphic Design and Typesetting |
| A. Desktop Publishing Applications |
| B. Interim Non-Contract Color Proofing |
| |
| 4. Prepress, Color Separation processes |
| A. Scanning |
| B. Color Correction |
| C. Creative Imaging |
| D. Interim Non-Contract Color Proofing |
| |
| 5. Contract Color Proofing of Random Images |
| |
| 6. Random Color Image Approval |
| |
| 7. Prepress, Page Assembly |
| |
| 8. Contract Color Proofing of Assembled Pages |
| |
| 9. Assembled Pages Color Image Approval |
| |
| 10. Prepress, Assembled Printing Forms |
| |
| 11. Content and Position Proofing |
| |
| 12. Prepress CTP Platemaking or Press Direct Imaging |
| |
| 13. Press Make-ready |
| |
| 14. Press Production Run |

Aspects of the present invention address *five* (5) principal variables listed in TABLE II affecting products produced by RM/CRS. The present description categorizes RM/CRSs into two types for which specifications may be prepared. For example, when evaluating additivity failure at the red, green and blue color families' corner samples, as described in conjunction with FIGURE 6, a Type-1 RM/CRS may be defined as a system having a high efficiency additivity failure character with respect to measurement of the color densities as discussed below, which typically does not exhibit much underefficient additivity failure. These systems may include, but are not limited to, those involved in limited quantity printing, proofing, and business-office use. As another example, a Type-2 RM/CRS may be defined as a system having a low efficiency additivity failure character with respect to measurement of the color densities as discussed below, which typically exhibits underefficient additivity failure. These systems may include, but are not limited to, those involved in high volume offset lithography printing.

Traditional commercial printing industry practice usually includes utilizing a photomechanical proofing RM/CRS that may be characterized as having high-efficiency additivity failure to proof images that are then put to use by the Offset Lithographic Printing process that creates RM/CRSs that can be characterized as having low-efficiency additivity failure. Unfortunately, this method usually results in variations in "system admixture" and "Color Intensity Gamut Size Type-B Mismatch" variables, which presents challenges to the color management process. As one example, the Solid Density Type-1 Specifications provided in TABLE IV provides a color range or gamut necessary that may overcome these otherwise limiting characteristics.

TABLE II illustrates these variables, general attributability to variations thereof, and methods to accommodate effects of these variations. The present invention contemplates separately compensating for all of these variables for aspects of color management as discussed in conjunction with TABLE I, in contrast to traditional color management systems.

Methods such as ICC color management methods do not attempt to separate these variables, but to perform processing through a single multi-dimensional transformation process by using lookup tables in an integrative process whose gamut mapping techniques alter color values to obtain a best fit of one color gamut with another, and thus do not separately compensate for variable *color intensity gamut size mismatch - Type B.* As another example, SWOP® has traditionally characterized these variables and attempted to compensate for some of these variations by utilizing solid ink density, ink color (hue) and sequence, and dot gain and print contrast. Unfortunately, these methods do not address the variables *system admixture, color intensity gamut size mismatch Type A* and *light reflectance proportionality from screened areas*.

TABLE II

Principal Variables affecting aspects of Color Management

| Variable | Measured By | Methods discussed herein to accommodate effects of these variables and generally performed in process(es) illustrated in Table I |
|---|---|---|
| Tone Reproduction | Density measurements | 1D Transformation Data; *step 12,* use of Specifications of Table VI directed to Variable: *Tone Reproduction; steps 5, 8, 14, 1-B, 2-B, 3-B, and/or 4-D* |
| Principal Variables affecting aspects of Color Management | | |
| System Admixture | Density measurements; Additivity Failure evaluation | System Admixture Transformation Data; *step 12* |
| Principal Variables affecting aspects of Color Management | | |
| Color Intensity Gamut Size Mismatch Type B | Density measurements of R, G, B overprint color contributions; Additivity Failure evaluation | Application of CGDAF to Solid Major Density Aimpoints to provide Solid Major Density Aimpoints for a print production run; *step 14* System Admixture Transformation Data; *step 12* |
| Color Intensity Gamut Size Mismatch Type A | Density measurements of C, M, Y color samples for solid major density, solid middle, and solid minor densities | Specifications of Tables III, IV, V; *steps 5, 8, 14, 1-B, 2-B, 3-B, and/or 4-D* |
| Light Reflectance Proportionality From Screened Areas | Density measurements; evaluation of Proportionality Failure characteristics | Specifications of Table V; *step 12, steps 5, 8, 14, 1-B, 2-B, 3-B, and/or 4-D* |

TABLES III-VI illustrate examples of specifications that, when applied to a proofing RM/CRS that is using a particular colorant set, are based on application of the colorant set on gloss/dull coated smooth-texture white paper substrates and, when applied to offset lithography inks, are based on applying approximately 1.0 micron ink film thickness on these substrates. The concentration of base colorants in the working colorants, or pigment in the inks, may be adjusted in accordance with aspects of the present invention and the colorants' or inks' transparency attributes should be equivalent to those of generally accepted printing industry practices and contract proofing systems. As examples, colorants for Type-1 RM/CRSs may include those used in printing off-press photomechanical proofs and inks for Type-2 RM/CRSs may include offset lithography printing inks. Although exemplary values in TABLE III-VI are given using Status-T density, many types of density measurements may be used such as, but not limited to, ISO Status - T, A, M, E and I spectral types of density. As another example, values in TABLE V may be measured utilizing, for example, screened areas described as 50%, amplitude modulated, 6.69 lines per millimeter, square hard-edge dot, halftone screening. The use of one, some or all of the specifications in TABLES III, V, and VI may create a UPS that may be adopted to meet the standardization or uniform production needs of the printing and publishing industries.

TABLE III

Solid Density Specifications for Type-1 RM/CRS directed to Variables:

*Color Intensity Gamut Size Mismatch, Type A and Light Reflectance Proportionality of Screened Areas*

| Color Channel | Targeted Solid Major Density, -P Aimpoint | Solid Middle Density, - P Proportionality Percentage (Colorant Hue) | Solid Minor Density, -P Proportionality Percentage (Colorant Hue) |
|---|---|---|---|
| Cyan | C 1.60 | M - 28 % | Y - 10% |
| Magenta | M 1.60 | Y - 47 % | C - 12 % |
| Yellow | Y 1.10 | M - 8 % | C- 2% |
| Black | C 1.85 | M - 98 % | Y - 97 % |

Use of one, some or all of the TABLE III specifications may allow creation of a larger color intensity gamut than is allowed with, for example, traditional printing industry practices in proofing color images. This advantage may provide more intense and colorful printed images with additional contrast and sharpness that printing industry customers may generally regard as more effective in advertising and promotion applications. This advantage may also allow the color separation tradesman to more closely match the intense colors of original copy such as photography or reflective art and other production print job requirements such as merchandise samples, corporate logo/brand colors and creative director's instructions.

The extent of a color intensity range of a proof may be preserved when one, some or all of these specifications are utilized in conjunction with the system admixture compensation methods discussed in conjunction with FIGURES 3 - 4 of System Admixture Compensation Application. Such an advantage may preserve color intensities, desired by customers, that may be dulled with the use of traditional methods, and usually as a result of variations in the variable "Color Intensity Gamut Size Type-B Mismatch".

One, some or all of these specifications provided in TABLE III may also be used to ensure that the hue and one-dimensional (1D) major densities of each of these colorants is compatible with the hue and I D major densities of each of the corresponding colorants of Type-2 RM/CRS. Such an advantage may allow corresponding colorants (for example, cyan colorants used in each system) used with each type of RM/CRS to assist in meeting an objective of the present invention, to provide for more accurate matching of 1D densities of these images by providing specifications, such as those discussed in Tables III-VI, to be used in respective proofing and press output systems. In addition, such a process may prevent the rise of two of the five (5) principal variables, "Color Intensity Gamut Size Type-A Mismatch" and "Light Reflectance Proportionality From Screened Areas".

Providing solid major densities and proportionality percentages such as the ones illustrated in TABLE III may create a larger color intensity range, desired by customers, that would otherwise be dulled with the use of traditional methods, when affected by variations in the variables which are "Color Intensity and Saturation Gamut Size Type-A Mismatch" and "Light Reflectance Proportionality From Screened Areas". When utilized in conjunction with the system admixture compensation methods discussed in conjunction with FIGURE 5, these Solid Density Type-1 Specifications in TABLE III are used, to provide the Target Solid Major Densities employed in producing a SADF image on proof RM/CRSs.

TABLE IV

Solid Density Specifications for Type-2/RM/CRS directed to variables *Color Intensity Gamut Size Mismatch Type B,* *Color Intensity and Saturation Gamut Size Mismatch Type A,*

*and Light Reflectance Proportionality from Screened Areas*

| Color Channel | Targeted Solid Major Density, -P* | Solid Middle Density, -P Proportionality Percentage (Colorant Hue) | Solid Minor Density, -P Proportionality Percentage (Colorant Hue) |
|---|---|---|---|
| Cyan | C 1.85 | M - 28 % | Y - 10% |
| Magenta | M 1.85 | Y - 47 % | C- 12% |
| Yellow | Y 1.25 | M - 8 % | C - 2 % |
| Black | C 1.85 | M - 98 % | Y - 97 % |

* (at 1.0 micron ink-film thickness)

The examples of Solid Density Type-2 Specification provided in TABLE IV may provide higher densities than those used with traditional printing industry practice. Such densities may be used to accommodate any CGDAF gamut expansion that may be applied to the relatively lower exemplary densities of the Solid Density Type-1 Specifications illustrated in TABLE III, when utilized in conjunction with the system admixture compensation methods discussed in conjunction with FIGURES 7 - 8. The values for Targeted Solid Major Densities-P in TABLE IV are provided for a 1.0 micron ink-film thickness. Ink film thickness may be varied approximately between -15% and +15% of a targeted 1.0 micron "ideal" ink film thickness to provide other values for a Targeted Solid Major Density Aimpoints that -are prescribed for a production print job by the application of a CGDAF to the Type-1 RM/CRS Targeted Solid Major Density Aimpoint, and that may easily be accommodated on systems that utilize, for example, sheet-fed and heat-set web offset lithographic printing. Use of one, some or all of these densities provided in TABLE IV, in conjunction with the application of CGDAFs, may preserve any gain in gamut values provided by TABLE III, even with variations in the variables.

The use of one, some, or all of these specifications provided in TABLE IV may also be used to ensure that the hue, 1D major densities and tonal densities of each of these colorants is compatible with the hue, 1D major densities and tonal and solid densities of each of the corresponding colorants of Type-1 RM/CRS when utilized in conjunction with the system admixture compensation methods discussed below. Such an advantage may allow corresponding colorants (for example, cyan colorants used in each system) used with each type of RM/CRS to assist in more accurate matching of 1D densities of these images by providing specifications such as those discussed in Tables III-VI to be used in respective proofing and press output systems. In addition, such a process may prevent the rise of two of the five (5) principal variables, "Color Intensity Gamut Size Type-A Mismatch" and "Light Reflectance Proportionality From Screened Areas".

The use of one, some, or all of these Solid Density Type-2 Specifications illustrated in TABLE IV, when utilized in conjunction with the Solid Density Type-1 Specifications as illustrated in TABLE III, may provide a larger color gamut that delivers improved sharpness, contrast and intensity of color than that delivered by prior art approaches. These specifications as illustrated in TABLE IV may be used as a result of the ability to provide a printing adjustment method and system admixture compensation method discussed below in conjunction with FIGURES 5 - 25, which, among other things, provide for accurate duplication of color on a proof by a printing press. For example as discussed below, FIGURES 5-10 discuss a system admixture compensation method using system admixture density values, and FIGURES 11-25 discuss a printing adjustment system and method using, among other things, one-dimensional profile density values. Colors having higher intensity and strength, such as Process Blue, include a larger "colorfulness" than those of typically-used colorants such as Process Cyan. Were these Solid Density Specifications discussed in Tables III and IV to be used with traditional printing methods, a resulting printed product would typically suffer from low fidelity, where the output of the printing press may deviate significantly from the output of a contract proof. That is, traditional printing and calibration methods may not provide an accurate and repeatable color management method especially in conjunction with the use of the higher densities as provided in the specifications discussed in TABLES III and IV.

TABLE V

Specifications directed to Variable *Light Reflectance Proportionality From Screened Areas*

| Color Channel | Tonal Middle Density Proportionality Percentage | Tonal Minor Density Proportionality Percentage |
|---|---|---|
| Cyan | M - 43 % | Y - 16% |
| Magenta | Y - 64 % | C - 20 % |
| Yellow | M - 13 % | C - 2 % |
| Black | M - 98 % | Y - 97 % |

TABLE V illustrates examples of Light Reflectance Proportionality Specifications. These specifications may be used with colorants that may be used in either a Type-1 and Type-2 RM/CRS, and may facilitate suppression of one of the five (5) principal variables, "Light Reflectance Proportionality From Screened Areas". The variable represents the middle or minor density proportionality percentage to the major density throughout the screened areas. A difference in the variable commonly occurs between RM/CRSs when the proportionality percentages of the solid areas are comparable but the proportionality percentages at one or more of the screened areas are significantly different. These specifications may be used for proportionality percentages for Type-1 & 2 RM/CRS colorant sets' colorant's hue at the 50% control set point at, for example, a specified amplitude modulated halftone screening parameter of 170 lines per inch for C, M, K and 85 lines per inch for Y. In some embodiments, it may be advantageous to generate additional specifications for other control set points, including values for 5%, 10%, 25%, 75%, and 90% control set points. The reflectance attributes of base colorants such as pigments and dyes used in creating colorants such as inks and toners may be assessed, and subsequently controlled, by the Light Reflectance Proportionality Specifications.

TABLE VI

Specifications directed to Variable:

*Tone Reproduction*

| Control Set Point and | Tonal Major Density Targets | | | |
|---|---|---|---|---|
| Screen Percentage | Cyan | Magenta | Yellow | Black |
| 90 | 1.35 | 1.35 | .90 | 1.45 |
| 75 | 1.00 | 1.00 | .65 | 1.00 |
| 50 | .55 | .55 | .38 | .60 |
| 25 | .25 | .25 | .17 | .25 |
| 10 | .11 | .11 | .07 | .11 |
| 5 | .06 | .06 | .04 | .06 |

TABLE VI illustrates examples of Tone Reproduction Specifications. These specifications may be used for tonal major densities for Type-1 colorant sets' 90%, 75%, 50%, 25%, 10%, and 5% control set points. The use of one, some, or all of these specifications used in tandem with methods such as the ones discussed in conjunction with FIGURES 11 - 25 may enable a systematic approach to the matching of printing press results to proof appearance in terms of suppressing one of the five (5) principal variables, "Tone Reproduction". The use of one, some, or all of these Tone Reproduction Specifications in conjunction with Tables III and V enable the establishment of a UPS.

In addition, methods of the present invention perform calculations to accommodate and compensate for the interdependency of three of the five variables. For example, if the variable *System Admixture Characteristics* so indicates, by the sum of a percent dot value color correction factor (PDCCF) and an Initial Percent Dot Value (IPDV) for a Sample of Interest (SOI) as discussed below in conjunction with FIGURES 5-10, then calculation of a color gamut density adjustment factor (CGDAF) may be performed, which addresses the variable *Color Intensity Gamut Size Mismatch Type B.* To illustrate, altering Solid Major Density-P Aimpoints to be used on a production run as discussed in conjunction with FIGURE 5, may result in altering 1D Transformation Data useful in addressing the *Tone Reproduction* variable as discussed in conjunction with FIGURE 18. That is, Solid Major Density-P Aimpoints, which affect the variable *Tone Reproduction,* and Solid Major Density-P Aimpoints are calculated from CGDAFs (to suppress *Color Intensity Gamut Size Mismatch Type B),* which in turn are dependent on *System Admixture Characteristics.* Methods similar to those methods discussed in conjunction with FIGURES 2 and 3 may be performed that compensate for these interdependencies and increase the accuracy of adjustments that may be made to image data to match the appearance of a production print image to that of a proof, over traditional methods.

FIGURE 1 is a block diagram of an example of a system that may be used to perform color management according to teachings of the present invention. Color management system 100 includes a Centralized Processing and Data Repository Site (CPDR) 102 that may be used to provide access by various sites to color management and client counseling service functionality. This access may be provided using many implementations including implementation of Application Service Provider (ASP) and/or other client-server functionality for a plurality of subscriber sites. FIGURE 1 illustrates a color management system 100 that may include one or more of each of Counseling/Management Site 110, Concept-Prepress Site 120, Print Output Site 130, and Procurement Site 140 coupled to a CPDR site 102 through a network such as the Internet 107. In a particular embodiment, one or more of sites 120, 130 and/or 140 may be co-located. As one example, Procurement site 140 may be co-located with Concept-Prepress site 120 and/or Print Output site 130 as may be the case where a very large corporation performs its own Concept-Prepress preparation, printing and procurement, for example, advertising space in a publication. Each of sites 102, 110, 120, 130, and 140 may be, for example, a small organization with private data networks, or a larger organization distributed over a number of locations and/or jurisdictions that uses both public and private networks. Each of sites 102, 110, 120, and Print Output Site 130 may also include a variety of networking protocols. Any or all of these sites may also include security infrastructure that includes devices now known or hereafter developed such as a firewall (not explicitly shown and which performs standard functions of a firewall at the perimeter of a secure site, rejecting unauthorized network traffic by filtering out or passing data according to a set of filtering rules configured by a system administrator), through which data from sites 110, 120, 130, and 140 may first pass.

Various sites 110, 120, 130, and 140 may be directly or indirectly connected to CPDR site 102 by any suitable data transmission means generally available now or in the future. For example, as illustrated in FIGURE 1, site 110 may be connected to CPDR site 102 by a communication link 108 such as a broadband connection, satellite, leased line, DSL or ISDN line across the Internet 107. Other sites 120, 130, and 140 may be respectively connected to CPDR site 102 by communication links 118, 128, 148 that may be, for example, by dedicated line, a dial-up connection, across Internet 107 (not explicitly shown) or by other methods. Communication links 108, 118, 128, and 148 and sites 102, 110, 120, 130 and 140 may be portions of the public switched telephone network (PSTN), private or public data networks, or global communication networks such as the Internet, satellite systems, other wireline or wireless networks, or any other local, regional, or global communication networks. Similarly, sites 110, 120, 130, and 140 may also be interconnected using a variety of techniques, and as shown by examples of communication links 111, 121, 131, and 141, which represent any type of direct or indirect communication link, including those discussed above. Alternatively or in addition, these sites may be interconnected through Internet 107.In other words, depending on the implementation, sites 102, 110, 120, 130, and 140 may reside in the same or different locations, regions, or jurisdictions be directly or indirectly interconnected using a variety of techniques now known or hereafter developed including, as desired. Such interconnectivity improves color management by, among other things, the ability to exchange factors for transforming image data files, and which may significantly reduce processing time and improve the process of quality control for publishers and printers.

CPDR site 102 includes at least one computer 106 coupled to a data repository 104, which may be any suitable storage medium including, but not limited to, optical storage media such as CD-ROM, disk arrays, magnetic disk, or other media. Data repository 104 may be distributed over a plurality of devices, resident on computer 106, or a combination of both. CPDR site 102 also manages one or more central databases 104. Data repository 104 may be organized as desired using by example and not by limitation, hierarchical, object-oriented, or relational technology.

Computers 106, 112, 122, 132, and 142 may be used to refer to any computer (including server computers) utilized by users of system 100 such as, but not limited to, computers that are adapted to execute any of the well-known MS-DOS, PC-DOS, OS2, UNIX, MAC-OS, and Windows operating systems or other operating systems including unconventional operating systems. Data processing may also be performed using special purpose digital circuitry contained either in computers 106, 112, 122, 132, and 142 or in separate devices. Such dedicated digital circuitry may include, for example, application-specific integrated circuitry (ASIC), state machines, fuzzy logic, as well as other conventional circuitry.

Sites 110, 120, 130, and 140 may also conform to an interface provided by CPDR site 102, and may request processing as desired using CPDR site 102. A user of any site may communicate with CPDR site 102 in, for example, a client-server implementation, using a variety of methods including, but not limited to, application program interfaces (APIs), graphical user interfaces (GUIs), remote method invocation (RMI), distributed network interfaces, HTML, and XML. In a particular embodiment, sites 110, 120, 130, and/or 140 may include a GUI from which users may request processing from CPDR site 102. In a particular embodiment, these requests may be serviced by CPDR site 102. Alternatively, or in addition, several CPDR sites 102 may be linked together to perform such processing.

Computer 106 includes logic 109, which may reside in computer 106 and/or in other subsystems, include one or more processing modules and preferably includes computer readable program code for automatically performing color management processing. Logic 109 may be executed on a computer or other processor, may receive requests for one or many aspects of color management processing, administrative processing, or management processing from each of sites 110, 120, 130, and 140, and automatically perform processing as desired. Logic 109 may also include a network interface for each of sites 110, 120, 130, and 140 to invoke over Internet 107 to request or receive requests for one or many aspects of color management processing as desired. For example, logic 109 may be used to receive requests from, or pass along requests to, Counseling/Management site 110 for functions related to centralized counseling. As other examples, logic 109 may be used to maintain and update data repository 104, and to communicate with Concept - Prepress Preparation Site 120, Print Output Site 130, and/or Procurement Site 140. These interfaces may be programming language interfaces such as a JAVA interface or XML Schema. Methods of the present invention may be performed on a computer or any other suitable platform, may be performed using a variety of logical or functional configurations, and may be performed in multiple or single steps. Various methods may also omit various steps discussed below, depending on the embodiment. In addition, each of the methods may include additional error checking and/or processing steps. These methods may utilize any language, including object-oriented, FORTRAN, C, JAVA and other languages, and in a particular embodiment may be written in a high-level language such as Clipper. These methods may be stored in machine-readable form on CD-ROM, magnetic disk, or other media, are accessible via the Internet, or are downloadable for input into computers such as those illustrated in FIGURE 1.

Each of sites 110, 120, 130, and 140 includes respective logic 113, 123, 133, and 143 that reside on respective computers 112, 122, 132, and 142. Each of these logic modules may also reside in other subsystems, include one or more processing modules, and preferably includes computer readable program code for automatically performing various processing as described below. In a particular embodiment, logic 113, 123, 133, and 143 may be structured as client-site software in a client-server configuration in conjunction with logic 109. That is, logic 109 and logic 113, 123, 133, and 143 are operable to communicate with one another and invoke processes that are required to perform desired color management, administrative, and/or management processing.

Procurement site 140 is a subscriber site such as a corporation, advertising agency, broker, artist, photographer, or graphic designer, that directly or indirectly purchases printed products and/or publication or advertisement space. Procurement site 140 includes at least one computer 142 with logic 143 resident therein, and is operable to communicate with CPDR site 102 to complete a service order. In many cases, Procurement site 140 may be geographically separated from CPDR site 102, Counseling/Management site 110, Concept-Prepress Preparation site 120, and/or Print Output site 130. An operator at Procurement site 140 may access logic 143 to update a PQC Record with business information necessary to contractually specify a PQC Record to be applied in color management of a particular print job or advertisement. Communication between Procurement site 140 and CPDR site 102 is advantageous because advertisements that are prepared at different locations and using various UPS may be printed concurrently on the same press layout form and match customer-approved proofs. This communication is also important because it facilitates the same advertisement having the same color appearance, whether printed in multiple publications and/or by multiple printers. Thus, in accordance with the methods of the present invention that include recording, storing, and making various data centrally accessible in data repository 104 to sites 102, 110, 120, 130, and 140, these data may be used to adjust the output of a press according to the needs of high-end print buyers and pressmen alike. These data include, but are not limited to, production proof quality control data, proof density deviation adjustment data, print production quality control data, and other density readings that may be measured all in accordance with the present invention.

Counseling/Management site 110 may be utilized by personnel who provide expert evaluation and assessment, instruction, guidance and training services. Counseling/Management site 110 includes at least one computer 112 coupled to at least one density measuring device 116. Density measuring device 116 (and density measuring devices 124 and 134) may be a color density measurement device such as a spectrophotometer, densitometer, scanner, or any other device operable to provide density values. Alternatively, color density measurements can be performed manually by providing values with, for example, a scanner, spectrophotometer, or densitometer and then by inputting the resulting measurements using a keyboard or other means (not explicitly shown). Counseling/Management site 110 also includes at least one proofing device 114, which may be coupled to computer 112, density measuring device 116, or both, depending on the application. Counseling/Management site 110 may be used to perform a variety of services upon request or otherwise. For example, Counseling/Management site 110 may provide expert evaluation, assessment, instruction and/or guidance to users of system 100. Counseling/Management site 110 may also provide training services, depending on the application. Counseling/Management site 110 is operable to transfer to, and receive data from, CPDR site 102 as desired over communication link 108 using a variety of data formats and transfer techniques. For example, in a particular embodiment, Counseling/Management site 110 is operable to receive requests for evaluations from CPDR site 102 as desired. Any responses, reports, and/or data created by Counseling/Management site 110 may be transferred to CPDR site 102 in one of many electronic formats.

Concept - Prepress site 120 is a subscriber site that includes at least one computer 122 coupled to at least one density measuring device 124. Concept - Prepress site 120 also includes at least one proofing device 126 which may be coupled to computer 122, density measuring device 124, or both for automated data transfer for proofing or for running a print production job, depending on the application. Concept - Prepress site 120 performs proof preparation process steps as discussed in conjunction with FIGURE 2.

Print Output Site 130 is a subscriber site that performs print production jobs. In a particular embodiment, Print Output Site 130 may also perform proof preparation process steps as discussed in conjunction with Concept - Prepress site 120. Print Output Site 130 includes at least one computer 132 coupled to at least one density measuring device 134. Print Output Site 130 also includes at least one CTP Device 136 and at least one press output device 138, each of which may be coupled to computer 132, density measuring device 134, or both for automated data transfer for running a print production job, depending on the application and the technology. Print Output Site 130 is operable to transfer to, and receive data from, CPDR site 102 as desired over communication link 128 using a variety of data formats and transfer techniques. Press output device 138 may be any printing device such as an offset lithographic production printing press that is capable of providing printed products using presses such as offset lithography, letter press, flexography, gravure and screen printing.

The present invention contemplates full automation of these devices as technology permits, although traditional systems utilize computers that are currently standalone from a printing device and CTP platemaking devices that are standalone from the printing device. For example, the invention contemplates the use of networked systems that incorporate modem data processing and transfer capabilities, and where adjustment values or factors may automatically be electronically provided to any CTP platemaking device now known or developed in the future. As one example, direct imaging methods may be used to rewrite cylinders while on a press output device. In addition, density measuring devices 124 and 134 such as a densitometer may also have an interface to each system.

System 100 may provide centralized counseling functions as desired to subscribers such as Concept-Prepress Site 120 and Print Output Site 130. For example, Counseling/Management site 110 may create, maintain, and distribute upon request data as desired during all aspects of the color management process. For example, Counseling/Management site 110 may control PADF, SADF, proof quality control (QC) strips, color bars, and Tone Reproduction Specifications such as those discussed in TABLE VI for proofing device calibration, and any other files, forms or other data that may provide support. For example, centralized counsel site 110 may also control lists of substrate types, certified proofing systems, certified ink sets, and others.

Counseling/Management site 110 may also provide training for personnel. Training may be provided by a number of methods including communicating one-on-one by means such as telephone or email, and by seminars or other written methods of communication. Counseling/Management site 110 may also provide real-time on-line troubleshooting upon request by a subscriber and/or other personnel. For example, Counseling/Management site 110 may provide support for troubleshooting, test runs that set up or produce PADFs and SADFs. Moreover, Counseling/Management site 110 may also assess the suitability of the subscriber's PADFs and SADFs sheet samples, and work with the subscriber to resolve any issues identified in the assessment. For example, Counseling/Management site 110 may provide measurement and data collection from subscriber provided press PADF and SADF sheets, evaluate the integrity of the data, and correct or make suggestion for correcting, any problem that arise. An evaluation of printing characteristics may be performed for identifying press or material problems incurred in providing PADF and/or SADF sheets. For example, print contrast may be studied across a wide range of solid density on a PADF, and/or additivity failure may be studied for RGB solid overprints on a PADF. Evaluation also may be performed to provide information regarding CMYK ink solids proportionality across a wide range of solid density on a PADF.

Counseling/Management site 110 may also communicate to subscribers and resolve problems identified in Printing Characteristics Study evaluation, analyzing calculated 1D Transformation Data, System Admixture Transformation Data, and CGDAF data, and make empirical adjustments if necessary to compensate for system noise affects on data collection. Such system noise arises with problems in creating suitable samples and created by measurement device anomalies in measuring various types of RM/CRS hard copy samples. Counseling/Management site 110 may also perform continuous research and development on these system noise issues as desired or requested. Counseling/Management site 110 may also perform real-time on-line trouble shooting on production press runs when consulted by subscriber and/or personnel of Counseling/Management site 110, such as field sales representatives. Counseling/Management site 110 may also provide specifications to proofing materials suppliers and ink suppliers so that their products conform to the color management system's requirements. Counseling/Management site 110 may also perform periodically scheduled quality control evaluation of proofing material supplier's batch samples and ink supplier's batch samples and communicate to these suppliers and resolve problems as required.

System 100 may provide administrative and managerial functions as desired to subscribers. For example, a subscriber's site may initiate and/or perform a variety of functions, including defining environment parameters such as, but not limited to, system administrative functions such as definitions for subscriber users, including log-in, password and other security issues, and other matters. A subscriber site may also perform press operation administrative issues such as definition and list of press devices at the subscriber's site, definition and list for CTP/DI devices, software, and maintenance of versions thereof, and other site operational information.

In a particular embodiment, a subscriber site may initiate a color management service order and communicate with CPDR site 102 regarding a variety of aspects of the service order including, for example, item descriptions, quantities, substrates, delivery dates, estimates and final billing arrangements, and other matters.

Furthermore, CPDR site 102, Counseling/Management site 110, or a combination of both, may perform maintenance and security functions as well as accounting and managerial functions. For example, either or both sites may perform maintenance on subscriber files, system control files, and others as desired. Either or both CPDR site 102 and Counseling/Management site 110 may include additional logic and administration of subscriber site and/or system security. In addition, either or both sites may perform accounting function such as tracking and maintaining subscriber accounts, invoicing and auditing of subscriber accounts, performing costs accounting for various services performed for subscriber, and/or providing, distributing and/or maintaining management information reports.

As will be described in more detail in conjunction with FIGURE 2 and FIGURES 5 - 25, system 100 is also operable to perform a variety of functions that facilitate color management services being provided by system 100. For example, a subscriber site may download relevant files such as instruction and training information and/or standard system file data such as PADF, SADF, proof QC strip, color bars, Tone Reproduction Specifications such as those discussed in TABLE IV for proofing device calibration, substrate types list, certified proofing system lists, certified ink sets lists and other files. Each subscriber site may also create plate set profiles and perform a variety of procedures, depending on the application. For example, each subscriber site may perform one or more quality control procedures for ink batch, PADF and SADF test runs and/or proof quality control. Alternatively, or in addition, each subscriber site may perform a CTP/DI plate making process which may include specifying a press, proofing system, substrate type, and/or Interim Press Profile Adjustment. Such a process may also include receiving and/or calculating CIEE Transformation Setup, 1D Transformation Data, and/or Solid Major Density -P Aimpoints to be used in a print production run, as discussed below. Each subscriber site may also, alternatively, or in addition, perform procedures for plate quality control, process make-ready, and/or print production quality control. If applicable, a subscriber site may also create a new Interim Press Profile Adjustment.

In addition, the color management process as described in further detail in conjunction with FIGURE 2 may also include functions performed by CPDR site 102, Counseling/Management site 110, or a combination of both. For example, one or both sites may perform a variety of functions for creating proofing systems' PADF and SADF test samples, including proofing quality control procedures and measurements and data collection. One or both sites may also evaluate the integrity of this data. Alternatively, or in addition, one or both sites may also evaluate the integrity of data collected from subscriber-provided printed test sample sheets provided using PADF and SADF measurements. Moreover, one or both sites may study printing characteristics for material problems incurred in running PADF and/or SADF forms. Evaluation of printing characteristics may be performed for identifying press or material problems incurred in providing PADF and/or SADF sheets, which may include evaluation of print contrast across a wide range of solid density on a PADF, study of additivity failure for RGB solid overprints on a PADF, and/or ink compliance regarding CMYK ink solids proportionality across a wide range of solid density on a PADF. Alternatively, or in addition, one or both sites may also create, for all press and proofing system combinations as desired, PDCCF data, Secondary PDCCF data, CGDAF data, and/or CIEE Transformation Set Up data.

The Concept - Prepress site and the Printing Output site preferably have access to expertise from the Counseling/Management site. Since all of these sites would have access to CPDR site 102, users at all sites may have the ability to access the same data and would be able to troubleshoot problems more efficiently. The Concept - Prepress Preparation site and the Printing Output site may also advantageously not need to invest in the time or equipment necessary to perform the high volume of density measurements required when reading the PADF or SADF forms. The Counseling/Management site will perform these measurements with specialized density measuring devices that may provide, for example, high volume, automated, customized processing of the PADF and SADF test forms.

Another advantage of the present invention is that most of the processing logic and all of the complex algorithms may reside at CPDR site 102. Any improvements to the software that is maintained in CPDR site 102 may be immediately available to all of the Concept - Prepress Preparation sites 120 and all of the Printing Output sites, as well as Counseling/Management site 110, which may promote industry wide uniform and standardized production of concept-prepress preparation. Yet another advantage of the present invention is that CPDR site 102 will contain data from all of the Concept - Prepress Preparation site 120 and all of the Print Output Site 130. This vast amount of data will make complex research and analysis possible that would not be possible if each site retained its own data.

FIGURES 2 and 3 illustrate examples of methods that may be used according to teachings of the present invention. Generally, a UPS may be set up by adjusting the system and colorants so that proofs are created to the specifications in TABLES III, V and VI. For example, Tone Reproduction Specifications such as those discussed in TABLE VI guide the operator creating the proof in providing the desired tonal reproduction characteristics to be applied. For example, an operator may then adjust the proofing system or data file so that proper densities are achieved for a corresponding percent dot value. If these specifications are published, they may be reviewed in print or on the Internet.

A particular press may be profiled by printing a PADF and a SADF at Print Output Site 130. The printed PADF and SADF may then be transferred to Counseling/Management site 110, by mail or other technique that provides the color density values. Counseling/Management site 110 then may read all or a selected portion of values from the PADF and SADF. These density values may be transferred to CPDR site 102 for storage in the database. Similarly, proofs of PADFs and SADFs may be provided by Counseling/Management site 110 for a particular UPS. In this manner, PADFs and SADFs may be provided for a number of particular presses and proofing systems, and this data may be stored in the database. These data may be constructed from some or all of the specifications discussed in TABLES III and VI in the case of PADF, and from averages of several proofs in the case of SADF and then transferred to CPDR site 102 for storage in data repository 104.

When a subscriber Print Output Site 130 desires to perform a production print job, site 130 may request data from CPDR site 102 that relates to the particular UPS and press to be used in the production print job. For example, Print Output Site 130 may request 1D Transformation Data and CIEE Transformation Setup from CPDR site 102. CPDR site 102 performs all necessary calculations from the 1-Dimensional Data Profile and SADP and transfers the data to Print Output Site 130. For example, Print Output Site 130 receives transformation data and provides the data to CTP Device 136 so that plates may be created after functions are performed by functionality of one or more color imaging editing engines in accordance with the transformation. As technology permits, this data may be shipped directly to Press Output Device 138 at Print Output site 130 to perform the print job.

FIGURE 2 is an example of a flow diagram for a color management method in accordance with the teachings of the present invention. The method provides generally for isolating variables associated with color management and calculating separate adjustments and/or providing specifications such as those discussed in TABLES III, IV, V, VI for compensating for each of the variables.

The method begins at step 202 where a proof of a PADF and a proof of a SADF are created. The proof of a PADF is used to create a 1 Dimensional Profile for the proofing system. The proof of the SADF is used to create a System Admixture Data Profile (SADP) for the proofing system. This process is performed at the Counseling/Management site and may be performed for any of the contract or UPSs available now or in the future. The profile data is stored at the centralized processing and data repository CPDR site 102.

From step 202, the method proceeds to step 204, where a Press Output Device is used to print a PADF and a SADF. The printed PADF is used to create a 1 Dimensional Profile for the press output device. The printed SADF is used to create an SADP for the press output device. The forms are printed at the Printing Output site and may be sent to Counseling/Management site 110, where the forms are read and the profiles are created. The profile data is stored at the CPDR site 102.

From step 204, the method proceeds to step 206, where a System Admixture Characteristics Transformation Data Report is created. This report is created from the SADP for the press output device and the SADP for the proofing system. This report provides PDCCFs and CGDAFs and Secondary PDCCFs where applicable. Creating this report is initiated at Counseling/Management site 110. Depending on the implementation, PDCCFs, CGDAFs, and desired secondary PDCCFs may also be provided in many other alternative formats that may be used to prepare transformed graphic image data to be printed as desired, as discussed below.

From step 206, the method proceeds to step 208, where a CIEE Transformation Setup is created. The CIEE Transformation Setup is created at the Counseling/Management site and the data is stored at CPDR site 102. From step 208, the method proceeds to step 210, where a proof of a production print job is created. The proof is output on a compliant proofing RM/CRS, UPS at Concept - Prepress site 120. Over time several proofs of a job may be created. One of the proofs is 'approved' as the proof that the production print job output will be compared to. Proof quality control (PQC) may also be performed as a portion of this step.

An example for performing proof quality control (PQC) may be illustrative. For example, Counseling/Management Site 110 may provide a graphics file of a control strip with appropriate color samples for PQC on a computer available to Concept-Prepress Preparation Site 120 through, for example, as a web site. Concept-Prepress Preparation Site 120 may then download the graphics image data file of the control strip and, for example, save the file for future use. The graphics image data file may then be incorporated into one or more files of the production images in an area without live image data. A production UPS proof may then be produced and designated a proof of interest. Logic 123 may then be invoked to perform PQC functions. For example, a user may enter information such as a job number, project title, item title, print and/or publication business information, such as regions or publications in which an advertisement is to be printed, a UPS identifier, device identifier, operator identifier, substrate, and quantity of control strips to be measured.

Logic 123 may notify logic 109 of the new service order created for performing PQC. Logic 109 may then verify and retrieve for future access corresponding to information, Concept-Prepress subscriber identification information determined from log in data, and confirm the validity of the UPS identity. The operator at Concept-Prepress Preparation Site 120 may then begin reading PQC control strips using density measuring device 124. After all of the control strips have been measured, Logic 123 transfers the PQC basic information and density data readings to CPDR site 102.

CPDR site 102 may then store the PQC basic information and density data in data repository 104 as a PQC record. Logic 109 may then perform a comparison of the received density data to a stored Proofing Device Profile and a System Admixture Data Profile corresponding with the UPS. These profiles and methods for providing them are described in conjunction with FIGURES 5 - 25 below. Logic 109 then calculates density deviations between the densities of a proof of interest and those of a profile, and makes a "pass or fail" determination. This determination may depend on whether the first densities deviate within predetermined density tolerances, such as +/-.03 tonal major density deviation in tone reproduction for the 50% control set point on any one of the C, M, Y, and K primary colorants. Logic 109 may then add this data to the PQC record and format a PQC report. This report may be structured into one of many formats, including an HTML document, and is then sent to Concept-Prepress Site 120.

The PQC record may then be accessed and updated by, for example, the Concept-Prepress subscriber that initially created the record, using, as another example, a "certification customer approval number" that is issued when a "passed proof" is designated as "customer approved" at Concept-Prepress Site 120.

A user may then print out the PQC report and/or display it on computer 122 and choose whether all, or a portion, of the information in the PQC report is to be forwarded or made accessible to Procurement site 140. Upon receipt of the PQC report, Procurement site 140 may then transmit the graphics image data file associated with it and a contract to purchase printed products and/or publication advertisement space, to Print Output Site 130. In addition, a "certification customer approval number" may also be included in a variety of procurement documents that may accompany, precede, or follow the image data file. Depending on the application, the print and/or publication business information may be initiated, updated, and/or confirmed by entry into a corresponding PQC at CPDR site 102.

Upon receipt of the graphics image data file from Procurement site 140, Print Output Site 130 may then use the image data in conjunction with the PQC record stored in data repository 104, for a variety of purposes. For example, Print Output Site 130 may create a remote-UPS-Proof for approval purposes. Print Output Site 130 may also create a "duplicate-remote-UPS-Proof" to match a customer-approved UPS proof. In this procedure, in addition to creating a UPS proof that is compliant with the values of specifications such as those discussed in TABLES III, V and VI, it is also desirable to consider actual density data of a customer approved proof provided by the PQC record and to not deviate from those actual densities by more than predetermined density tolerances. These density tolerances may have exemplary values such as .02 at the 50% control set point.

These data may also be used to add precision to the PPQC process by creating Proof Density Deviation Adjustment (PDDA) and applying it in calculating the 1D Transformation. Creation of a PDDA may compensate for density deviations between the densities of a "passed" and "customer approved" UPS proof and a stored Proofing Device Profile and a System Admixture Data Profile corresponding with a UPS.

Aspects of the present invention may allow higher precision in matching press printing results to a customer-approved proof appearance over traditional methods. For example, methods of the present invention may accommodate inaccuracies that may be caused by proof density deviations that are within reasonable manufacturing tolerances for proofing systems. Traditional practices of the printing and publication industry's image data exchange may not provide for such accommodation. Moreover, newer (e.g., digital) technology may prove to have even more proof-to-proof instability than those traditional interim film proofing systems. For example, manufacturing tolerances may provide for + or -.03 tonal major density deviation in tone reproduction for a 50% control set point on any of the C, M, Y, and K primary colorants, and proofs with such deviations may be acceptable within reasonable proof process control procedures. However and for example, a proof with +.03 deviation shows a significantly different color appearance than one with a -.03 deviation. The difference in appearance is approximately a CIELAB color difference of 4.0 $\Delta E$, a difference that may be noticeable and unacceptable to sophisticated print buyers.

Aspects of the present invention may also allow for a central data repository that is accessible by a number of sites. For example, calculations and data records may be stored and/or executed in CPDR site 102, and thus provide one set of data per customer-approved proof that is accessible to all sites. Therefore, communication between sites, accuracy, and efficiency may be improved. For example, any site may request characteristics of the proof that was approved and may proceed to, for example, make another proof for customer approval, make another proof to match the customer-approved proof or proceed to plate making, and/or adjust the data accordingly. Furthermore, any site may also quickly and easily access data when it is needed, a time usually months or even years after customer approval has occurred. Such an advantage may minimize the chance of mistakenly using the wrong data, and/or minimizing variations in such data that may occur due to variations in equipment characteristics.

From step 210, the method proceeds to step 212, where a production print job is run. One method for performing a production print job is explained in further detail in conjunction with FIGURE 3.

FIGURE 3 is an example of a method for performing a production press run in accordance with teachings of the present invention. Generally, the method includes identifying a particular RM/CRS or Press Identifier to be used at Print Output 130. CPDR site 102 selects a CIEE Transformation Setup corresponding to the particular RM/CRS, and which contains Production Run Solid Major Density Aimpoints. CPDR site 102 also calculates 1D - Transformation corresponding to the particular RM/CRS to be used at Print Output Site 130 and downloads selected CIEE Transformation Setup and 1D Transformation Data. Print Output Site 130 then applies a system admixture transformation and 1-Dimensional transformation to the production print job.

The method begins at step 302 where 1D Transformation Data is created. One example for creating 1D Transformation Data is described in further detail in conjunction with FIGURES 20 - 22. 1D Transformation Data may be calculated using new production printing Solid Major Density Aimpoints in response to the CGDAFs created in step 206. In a particular embodiment, the 1D Transformation may be calculated after reading all of the 29 sample control strips from some or all sample PADFs as discussed in conjunction with FIGURES 11 - 25. The 1D Transformation may be calculated for automatically selected strip sections from a PADF as determined by the new Solid Major Density Aimpoints that are closest in value to density values from the strip sections.

In step 304, System Admixture Transformation Data and 1D Transformation Data may be applied during creation of production job plates or cylinders. Data for this step may be obtained from CPDR site 102 and input into CIEE functionality, whether automatically or manually. One advantage of the present invention is that the invention provides for separately compensating for variations in tone reproduction characteristics and system admixture characteristics. This process may provide an accurate and efficient method for compensating for and controlling variations in 3 of the 5 variables, and may provide the advantage of utilizing colorants having higher densities that are preferred by print buyers.

Moreover, the present invention may provide the technical advantage of reducing spoilage and waste that would otherwise be present using traditional methods.

Then, in step 306, press make-ready of the production job may be performed, after which press check observations of the production job may be made. Press make-ready may be performed using new Production Printing Solid Major Density Aimpoints in response to the CGDAFs created in step 206. In a particular embodiment, improved press make-ready procedures may be performed using methods similar to those discussed in conjunction with FIGURES 11 - 25. In step 308, the method queries whether there is acceptable color fidelity (within general industry practice) between the press sheet and the proof upon visual observation of the press sheet and the proof. If so, in step 310 the production press run is performed. If not, in step 312 print production quality control (PPQC) may be performed. Two methods for performing PPQC are discussed in conjunction with FIGURES 23 and 24.

An example may be illustrative. For example, a press sheet may be selected on which to perform print production quality control at Print Output Site 130. Logic 133 may be used to invoke PPQC functionality that may, among other things, request information from a user, such as a Press Profile Identifier and segments that are to be read. Print Output Site 130 may then request validation of the Press Profile Identifier. Logic 109 queries data repository 104 to determine whether the Press Profile Identifier is valid, and notifies Print Output Site 130 as to whether or not the Press Profile Identifier is valid. If the Press Profile Identifier is valid, Logic 133 allows the user to begin reading the Press Color Bars' Linear Segments. Otherwise, an error message may be generated at Print Output Site 130.

The user may then read these segments with density measuring device 134, and then these readings may then be transferred, along with additional PPQC information, to CPDR site 102, where it may then be stored in data repository 104. Logic 109 may then perform the calculations described in conjunction with FIGURE 24, and may then format a PPQC report. This report may be structured into a variety of formats, including an HTML document, which then may be transferred to Print Output Site 130, where it may then be printed out and/or displayed on computer 132 and used in accordance with the present invention.

In step 314, the method queries whether density variance data supports a visual observation critique that is typically performed by a press operator or buyer. For example, if the measured data for Cyan reveals a -0.05 density variance at a 50% control set point, the visual observation should yield a press sheet that is "weak" in Cyan in comparison to the proof. If not, in step 316, extraneous problems such as, but not limited to, proofing, plate making, and/or ink selection are searched for.

If density variance data does support the visual observation critique in step 314, in step 318 density variance data may be used to determine IPPA values. These values may be used to create an IPPA in step 320, and then the method returns from step 320 to step 302. One method for providing IPPA values is discussed in conjunction with FIGURE 26A.

FIGURE 4 graphically illustrates an example of a relationship between a density range of solid major density values on the color gamuts, or color intensity ranges, of two sets of printing inks. As an example, FIGURE 4 illustrates the concept of the extent of a color gamut of a set of printing inks by delineating the gamut as a volume represented by a cube. Although other factors may affect the size of the color gamut, the illustration does not address such factors.

FIGURE 4 illustrates a three-dimensional coordinate system 400 whose axis 401 is represented as Cyan, axis 402 is represented as Yellow, and axis 403 as Magenta. The origin 404 of coordinate system 400 may be represented as the color white. FIGURE 4 includes two volumes represented by cubes 410 and 420. The values for cube 410 are density values representing the exemplary Solid Density Type-2 Specifications as illustrated in TABLE III: Cyan 1.85, Magenta 1.85, and Yellow 1.25. The values for cube 420 are density values representing exemplary Targeted Solid Major Density Aimpoints to which the printing industry most popularly adheres, which are provided as SWOP® printing production guidelines. Each of these values is provided for comparison as "-P" values: Cyan 1.25, Magenta 1.35, Yellow 0.95.

The vertices for each of cube 410 and 420 may be represented by colors that are represented on a color cube known in the art, and include White vertex or origin 404, Cyan vertices 411 and 421, Yellow vertices 412 and 422, Magenta vertices 413 and 423, Green vertices 414 and 424, Black vertices 415 and 425, Red vertices 416 and 426, and Blue vertices 417 and 427. The gamut size for each of cubes 410 and 420 may be represented by the volume for each cube.

For example, the gamut size for cube 420 is:

$$1.25 \times 1.35 \times .95 = 1.603$$

For example, the gamut size for cube 410 is:

$$1.85 \times 1.85 \times 1.25 = 4.278$$

Thus, based on the volume of each of the two cubes 410 and 420 the gamut size, based on density range as provided as exemplary Solid Density Type-2 Specifications as illustrated in TABLE III, is approximately 4.276 / 1.603, or 2.67 times as large as that provided using the exemplary Targeted Solid Major Density Aimpoints.

The present invention envisions quantifying system admixture characteristics by characterizing additivity failure of a reflective multi-color reproduction system (RM/CRS) that is using a colorant set. The invention contemplates the use of RM/CRSs such as Reflective Four-Color CRS (R4/CRS), Three-Color CRS (R3/CRS), and/or other multi-color systems as applicable, now known or as developed in the future. Moreover, methods and systems of the present invention envision facilitating aspects of the color management process where RM/CRSs are used by characterizing, and separately compensating for, several variables such as tone reproduction, proportionality failure rates, system admixture characteristics, and color gamut mismatches that imaging scientists use in characterizing color reproduction.

Color gamut mismatches may be caused by either a) mismatch of subtractive primary colorants' solid densities and hues, and thus mismatches of overprint color combinations between sets of colorants, or b) effects from additivity failure on prints. This gamut mismatch caused by additivity failure occurs even where standalone solid subtractive primary colorants of a first RM/CRS are printed to match a second reflective reproductive system's solid density and hues, contrary to most standard industry assumptions. For example, where a first system's subtractive primary (C, M, and Y) colorants are printed to match those of a second system, resulting overprints of magenta and yellow, cyan and yellow and cyan and magenta typically do not match the respective red, green and blue colors between the two systems. These overprints may also have major differences in chroma (color intensity), thereby indicating that there are color gamut mismatches affecting all deep intense colors.

Additivity failure may be defined as an under or over efficiency attributed to effects produced in applying a layer of colorant on top of a previously applied layer of colorant compared to the affects produced by an ideal state "of applying a colorant directly on the substrate such as paper." One definition for the term additivity failure as used in this description and accepted by the printing and photography industries may be found in "Color and Its Reproduction," Gary G. Field, 2nd Edition 1999, GATF Press, pages 192-194.

Color density measurements may be used to facilitate matching the appearance of the outputs of one RM/CRS to another using a System Admixture Data Form ("SADF"). The invention contemplates the use of a variety of RM/CRSs as shown in FIGURE 10, such as offset lithography, letter press, gravure, flexography, and screen printing systems and that may be used with various lithographic processes in development such as waterless lithography, printing with single fluid water-based inks, and plateless digital offset, and in some aspects, with electrophotographic, thermal, and inkjet printing processes. For example, RM/CRSs may include proofing devices as illustrated in FIGURE 10 such as, but not limited to, a variety of imaging devices such as ink-jet or thermal printers, and half-tone printing devices such as Waterproof® by DuPoint, Matchprint™ by Imation, ColorArt by Fuji, or Approval by Kodak. These devices may use a variety of methods to produce a proof on a substrate, including interim film and direct digital output. Various aspects of the invention may be used with some or all of these press output devices.

Color densities of any measurement sample are usually provided using four measurement channels: C, M, Y, and V. Many types of density measurements may be used such as, but not limited to, ISO Status - T, A, M, E and I spectral types of density.

C, M, Y, and V represent the following:

C = description of the capacity of a RM/CRS to absorb the red wavelength region of the color spectrum which is complemented by the Cyan ink color;

M = description of the capacity of a RM/CRS to absorb the green wavelength region of the color spectrum which is complemented by the Magenta ink color;

Y = description of the capacity of a RM/CRS to absorb the blue wavelength region of the color spectrum which is complemented by the Yellow ink color;

V = description of the CMY color density values translated to an achromatic (i.e., gray) value which is primarily used to describe the Black ink color.

Solid density refers to a set of CMYV density measurements taken from a solid, or non-screened, area of an image, using a spectrophotometer, densitometer, scanner, or other color density measurement device. Among C, M, and Y, major density refers to the density measurement of a color sample that is the highest value from among C, M, and Y, and include primary colors C, M, and Y. For the K file, Black ink channel, the major density refers to the density measurement taken solely from the V channel. Some of the densities that are discussed on this description may be expressed as "-Paper", or "-P", which represents a subtracted optical density value of a paper/base substrate from a density value of a color sample.

The abbreviations C, M, Y, and K may be used to identify the four traditional process colors used in printing for things such as inks, plates, films, and file channels. These four colors are Cyan, Magenta, Yellow, and BlacK, respectively and measurements for C, M, Y and K are taken from the C, M, Y and V measurements as discussed above. C, M, Y, and K may be combined to create overprint color combinations. For example, Green is formed by an overprint of Yellow and Cyan, Red is formed by an overprint of Yellow and Magenta, and Blue is an overprint of Magenta and Cyan. While the term "ink" is used in this description, the invention contemplates using other methods for delivering and managing colorants in the process of printing such as, but not limited to, toners, dyes, pigments, vehicles and modifying components.

Referring now to FIGURE 5, there is shown an example of a flow diagram for a system admixture compensation method in accordance with the teachings of the present invention. The method provides generally for isolating variables associated with aspects of color management and utilizing first colorant data to adjust values for second colorant data to be used in a print production job. These calculations include calculating percent dot values from densities for the first colorant data that may be subsequently compared to those of second colorant data. This comparison facilitates precise calculation of transformation data that may be used for each of the four colors C, M, Y, and K to provide adjustments to more closely align selected characteristics of the second colorant data to the first colorant data. More specifically, the method provides for more closely aligning two sets of system admixture characteristics by characterizing additivity failure of a first RM/CRS that is using a first colorant set with additivity failure of a second RM/CRS that is using a second colorant set. System admixture characteristics may be defined as characteristics, such as additivity failure or efficiency measurements, of a RM/CRS that is using a colorant set. In this way, aspects of the invention facilitate the color management process of RM/CRSs.

These adjustments may be expressed in percent dot value color correction factors (PDCCFs) and may be made by, for example, using a color image editing engine to alter the percent dot values on a digital representation of the image. The method also provides for various adjustments expressed as density adjustment factors (such as color gamut density adjustment factors, "CGDAFs") to be made that may reduce color gamut mismatch between the colorant data. These may first be applied to a colorant set's Solid Major Density Aimpoints at make-ready phase of production and sustained throughout a production run. Both of these adjustments provide objective data that may allow higher quality control over the appearance and fidelity with which a traditional production print job is produced.

Unfortunately, color gamut mismatches often are problematic with the use of traditional methods, especially in deep intense colors, usually due to major differences in chroma, or color intensity. These differences typically result from the differences in additivity failure between two RM/CRSs. For example, traditional printing methods and systems utilize a process of printing solid or 100 percent subtractive primary CMY colorants of a first RM/CRS to match those of a second RM/CRS in terms of solid density and hue error. Any resulting overprints such as magenta and yellow, cyan and yellow, and cyan and magenta do not typically match red, green, and blue, respectively.

Aspects of the present invention contemplate separately compensating for variations in system admixture characteristics, and color gamut mismatches in contrast to traditional and color management methods. For example, ICC color management methods do not attempt to separate these variables, but perform processing through a single multi-dimensional transformation process by replacing colors with colorant gamut mismatches in a graphic data file by gamut mapping using look-up tables in an integrative process. As another example, SWOP has traditionally characterized these variables and attempted to compensate for these variations by utilizing solid ink density, ink color (hue)/sequence, and dot gain and print contrast. Unfortunately, these methods may not adequately accommodate variations in both system admixture characteristics and color gamut mismatches of RM/CRSs.

It may be illustrative to describe solid density aimpoints that are referred to while discussing particular embodiments of the present invention. These aimpoints may be adjusted to accommodate changes, modifications or enhancements in technology. For example, the commercial offset lithography industry utilizes general practice Targeted Solid Major Density Aimpoints as reprinted with the permission of Graphic Communications Association, GRACoL 4.0 2000, Copyright ©2000, as per TABLE VII.

TABLE VII

Targeted Solid Major Density Aimpoints* *Reprinted with the permission of Graphics Communications Association, GRACoL® Is a Registered Trademark of Printing Industries of America, All Rights Reserved*

| Paper/Substrate | C | M | Y | K |
|---|---|---|---|---|
| Grades 1 and 2 premium gloss/ dull coated | 1.40 | 1.50 | 1.05 | 1.70 |
| Grades 1 and 2 premium matte coated | 1.30 | 1.40 | 1.00 | 1.60 |
| Premium text and cover (smooth) | 1.15 | 1.15 | .90 | 1.30 |
| Grades 3 and 5 coated** | 1.30 | 1.40 | 1.00 | 1.60 |
| Supercal SCA | 1.25 | 1.35 | 1.00 | 1.50 |
| Supercal SCB/SCC | 1.10 | 1.15 | .95 | 1.40 |
| Uncoated | 1.00 | 1.12 | .95 | 1.25 |
| Newsprint | .90 | .90 | .85 | 1.05 |
| Newsprint (heatset) | 1.08 | 1.15 | .95 | 1.20 |

*Values are Status-T density, absolute (paper included) **Same as SWOP® printing production guidelines

For the purposes of examples stated herein, Solid Major Density-P Aimpoints refer to a solid major density of generally accepted proofing systems currently available or hereinafter developed. To illustrate teachings of the present invention, one example set of Solid Major Density Aimpoints that may be used as the CP's Solid Major Density-P Aimpoints in a production run after CGDAFs have been calculated and subsequently applied to the RP's Solid Major Density-P Aimpoints are C=1.60, M=1.60, Y=1.10 and K=1.75. Selected values are utilized to provide adjustments to second colorant data in response to first colorant data.

In general, the method quantifies values measured from system admixture data profiles (SADP) prepared using SADFs denoted as a Reference Profile (RP) and a Current Profile (CP) and representative of the CP to more accurately match the appearance of the printed results of the colorants used in the RP. The method adjusts for effects of additivity failure by creating a number of calculated variables such as Theoretical Percent Dot Values (TPDVs), Percent Dot Color Correction Factors (PDCCFs), secondary PDCCFs and/or Color Gamut Density Adjustment Factors (CGDAFs) to address management of system admixture characteristics and color gamut mismatches. As one example, any over and/or under efficiency effects of additivity failure may be related to an Initial Percent Dot Value (IPDV) of a color sample of interest (SOI). One method for performing this step may include translating resulting densities of these effects into TPDVs, to include establishing percent dot value as a common definition to calculate PDCCFs, secondary PDCCFs and/or color gamut expansion factors to provide system admixture compensation. A TPDV is a percent dot value that would theoretically achieve the measured density for a given SOI absent additivity failure. For example, the Tone Reproduction Color Sample (TRCS) IPDV and the resulting TRCS density data may be used as the basis scale to arrive at the TPDV. PDCCFs may then be calculated in response to the TPDVs. One method for calculating PDCCFs is discussed in conjunction with FIGURE 8.

In addition, creation of TPDVs and subsequent PDCCFs may also be advantageous in providing CGDAFs, PDCCFs, and secondary PDCCFs that are substantially independent of tone reproduction characteristics. TPDVs, PDCCFs and CGDAFs may be provided for any number of colorants and colorant sets. CGDAFs are density values that may be calculated to expand a color gamut in terms of chroma or color intensity of one colorant set to concur with a larger color gamut of a second colorant set. Such an advantage may reduce color gamut mismatches, especially in deep intense colors, usually due to major differences in chroma, or color intensity, which may provide more desirable results than those obtained by traditional color management systems, whose gamut mapping techniques alter color values in a graphic data file to obtain a "best fit" of one color gamut within another. Such an advantage may thus be more successful than these traditional 'gamut fit' methods when attempting to adjust data used to create printed press sheets whose appearances match those of press photomechanical proofs.

For example, in some cases, a colorant set used to create the RP will have a larger RGB color gamut in terms of chroma or color intensity than that used to create the CP to which the RP is being compared. In these cases, the desired percent dot value, an Adjusted File Percent Dot Value (AFPDV), derived for the SOIs of the colorants used in the CP from applying the method of the present invention may be greater than 100 percent, and the colorant set used in the CP must be printed in print production using higher Solid Major Density Aimpoints than those used for the colorant set of the RP. The present invention envisions correcting any mismatch of the color gamuts by calculating CGDAFs to apply to the Solid Density Aimpoints of the colorant set used to create the CP during a subsequent production print session. Because the PDCCFs are substantially independent of the tone reproduction characteristics of the RM/CRS that utilizes the colorants, any CGDAF calculated in response to PDCCFs also becomes substantially independent of variations in tone reproduction characteristics.

The method begins at step 502, where a SADF may be created from which SADPs may be created in step 504. SADPs may be created by taking measurements of some or all of the color samples in a SADF image from a spectrophotometer, or other density-measuring device such as a densitometer. One example for a SADF is discussed in further detail in conjunction with FIGURE 6. Two SADPs are created, a RP and a CP. Colorant sets utilized in the creation of these SADFs are composed of four colorants and may be selected from a multitude of available colorants such as inks. These colorants may vary, but the four colorants C, M, Y, and K used for each of the SADPs should be spectrally similar so that they appear to an observer as substantially the same color. In addition, when like colors are compared between each of the SADPs, solid, one-dimensional color samples should have a density-P value that is substantially equal. However, any overprinting for each of the SADPs may be applied to the substrate in sequentially any order. As one example, in a first SADP, black inks may be applied first, Cyan inks second, Magenta third, and Yellow fourth while in a second SADP, the inks may be applied in a reverse, or any other, order. Colorant sets used to create the SADF Sample Sheets should also be produced on substrates that have substantially similar characteristics such as coating and surface texture and by using substantially the same halftone pattern. In addition, when like colors are compared between each of the SADP's, tonal one-dimensional colorant samples should have proportionality failure characteristics that are substantially similar, such as, for example, within a tolerance of +/- 20% of one another. Proportionality failure characteristics and halftone patterns are both well known and halftone patterns vary with characteristics such as screen ruling and dot shape.

In one embodiment, a RP may be a SADP created by first preparing a SADF for proofing. This step may include, for example, creation of CMYK film negatives or positives from a SADF graphics computer file. Such a SADF for an RP may be output by a proofing device at predetermined calibrations, which in a preferred embodiment include the proofing system manufacturer's specifications. This proof may be created from the negatives or positives or created directly from digital proof data, and usually includes a relatively constant ink or colorant film thickness. As one example, a proofing system such as Imation Matchprint may be used. A second SADF may then be prepared for a CP. As an example, a lithographic offset press using inks in accordance with SWOP printing production guidelines. In one embodiment, computer-to-plate ("CTP") plates for the SADF are created and then a printing press run of the SADF is performed using CTP plates. For example, in a particular embodiment, creation of the CTP plates of the SADF includes exposure of the CTP plates images by laser radiant energy modulated by the contents of the computer file containing data representing the SADF.

From step 504, the method proceeds to step 506, where a System Admixture Characteristics (SAC) Transformation Data Report is prepared in response to a comparison of color density deviations or differences between the CP and the RP. This Report provides PDCCFs and CGDAFs, and secondary PDCCFs that may be used in particular cases to resolve inconsistencies introduced by CGDAFs, where applicable. Examples of methods for calculating PDCCFs and CGDAFs are discussed in conjunction with FIGURES 7 and 8. Depending on the implementation, PDCCFs, CGDAFs, and desired secondary PDCCFs may also be provided in many other alternative formats that may be used to prepare transformed graphic image data to be printed in step 512, as discussed below.

PDCCFs represent percent dot adjustments that are calculated from selected color samples measured from the CP and the RP to compensate for any variable effects that additivity failure has on different system admixture characteristics. PDCCFs include attributes of the colorant sets, and the corresponding RM/CRS that uses the colorant sets, such as "colorant trapping" and "transparency/opacity". Colorant trapping may be described as characteristics exhibited when applying one colorant on top of another colorant that has previously been applied to a substrate, in contrast to applying the one colorant directly on the substrate without another layer of colorant in between. PDCCFs may be transposed into multidimensional transformations that accommodate for interaction between color channels. As discussed below, PDCCFs may then be used with numerous software, methods or other color image editing engines (CIEEs) that are now known or that may be developed in the future.

Calculation of PDCCF's and all subsequent multi-dimensional transformations may provide substantial independence of the substrate on which an image is printed and of tone reproduction characteristics of the RM/CRSs that utilize the RP and CP colorants. Such an advantage also allows one-dimensional tone reproduction transformations to be applied in addition to and/or separate from the multidimensional C, M, Y, K transformations. This advantage may allow variables that typically drift frequently and that are usually tone reproductive in nature to be corrected independently from system admixture-related variables that typically are substantially stable after an initial characterization. The term one-dimensional as applied to samples and transformations refers to single colorants and calculations related thereto, while the term multi-dimensional refers to overprints of single colorants such as red (an overprint of yellow and magenta) and calculations related thereto. Examples of one-dimensional samples include TRCSs, and examples of multi-dimensional samples include Color Correction Color Samples (CCCSs), System Noise Indicator Samples (SNISs), and/or Correction Overlap Detection Samples (CODS), all of which are discussed in further detail in conjunction with FIGURE 6.

CGDAFs may be used to expand the gamut of a colorant set used to create a CP so that it may accommodate a larger color gamut colorant set. For example, the gamut of a colorant set may be expanded by adjusting ink film thickness and/or by creating another colorant set with different pigment concentration. Color gamut expansion is graphically illustrated and discussed in further detail in conjunction with FIGURE 9. This method may advantageously accommodate the ability to automatically expand color gamuts, a method currently not available with the use of traditional methods. CGDAFs may be density adjustments to be applied to the Solid Major Density-P Aimpoints of a colorant set used to create a CP. Where a colorant set used to create a CP includes offset lithography inks, the Solid Major Density-P Aimpoints for each ink may be increased by the CGDAF data, and are utilized in the process of profiling or characterizing the tone reproduction characteristics of the printing press. Thus, in actual production printing, the Solid Major Density-P Aimpoints of a colorant set used to create a CP represent adjustments to those Aimpoints of the colorant set used to create the RP (in many cases, these adjustments are typically increases). Any variations in these tone reproduction characteristics may then be separately compensated for by utilizing any one of a variety of methods for providing one-dimensional printing adjustments.

In step 508, CIEE transformation setup may be created by utilizing PDCCFs in a CIEE as desired. The transformation setup provides confirmation of AFPDVs so that an operator may view changes to dot values of colors within an image to be printed in response to the PDCCFs that would take place when applied to a production job. Although future developments may reduce or eliminate the need for CIEE functionality in steps 508 and/or 510, the state of technology today usually requires translation of PDCCFs into a value system for a CIEE, where empirical adjustments may be performed to compensate for measurement error or other system limitations such as, for example, measurements affected by the application of laminate membranes. PDCCFs may be used to adjust a graphic image file's values so that the appearance of the image to be produced with a colorant set used to produce a CP would substantially correspond with the appearance of the image reproduced with a colorant set used to produce a RP. PDCCFs are data that may be suitable for use in many CIEEs. For example, in one particular embodiment, multiple passes may be performed by using the Color Range Selection, Curve Adjustment, and/or Selective Color functions in ADOBE PHOTOSHOP 5.0, which allow an operator to correct imbalances and adjust color. These correction techniques are used by high-end image editing scanners and separation programs to increase and/or decrease the amount of the process colors in each of nine predetermined color family groups in an image. For example, if calculated PDCCF values indicate that, for a selected color family and/or selected color sample, IPDVs for respective cyan, magenta, yellow and/or black control components should be increased or decreased, an operator may perform the increase or decrease. For example, control set point 1103 as illustrated in FIGURE 6 may include CMYK IPDVs of 50, 50, 50, 0 respectively, which will be transposed into AFPDVs by the PDCCFs. As discussed herein, these AFPDVs are then used as a guide to print the desired control set points and other interpolated values of the CP so that they have the same appearance as those in the RP. In a particular embodiment, these values may be used to create a print production image. These may, depending on the CIEE, be performed in terms of relative or absolute increases or decreases. In one embodiment, translation into this value system may be aided by viewing an image of the SADF on a computer monitor and monitoring the color value alterations imposed by control settings of the CIEE program. These values may be saved for future use when the same combination of proofing colorants and printing colorants are used on a print job using the same RM/CRSs that created the RP and CP.

In PHOTOSHOP, selective color correction is based on a table that shows the amount of each process color being used to create any given color. An operator may increase and/or decrease the amount of processing in relation to the other processes being asked to modify selectively the amount of any one process color in any given family of colors -- without affecting any other given family of colors. For example, selective color correction may be used to dramatically increase cyan in a green component of an image while leaving the cyan in the blue component unaltered.

The invention contemplates the use of any CIEE, or equivalent functionality that may alleviate the need for the use of a CIEE, that may be in place today or may be developed in the future, for steps 508 and/or 510. For example, the present invention contemplates utilizing the reduction of system noise, the measurement of and/or calculations of appropriate variables, and the development of more sophisticated color image editing functionality to allow this step to be automated. For example, aspects of the present invention contemplate automatic calculations being performed by functionality from a CIEE or equivalent functionality that may alleviate the need for the use of a CIEE in response to PDCCFs provided as input to such functionality. One example of an alternative to a traditional CIEE, whose principal objective is to allow an operator using the CIEE to change the appearance of an image, is software, firmware, hardware, or a combination thereof that may be used in conjunction with teachings of the present invention to provide color transformations using PDCCFs and any necessary secondary PDCCFs so that graphic image data may be properly printed in a production print job.

An additional, optional step may include the use of selected samples to provide error correction. For example, CODSs as discussed in conjunction with FIGURE 6 may provide additional PDCCF data that may be used to identify errors in corrections applied with the use of a CIEE. Such an advantage may provide guidance in detecting overlapping correction anomalies between the neutral color family and other color families that may be larger than an acceptable or desired tolerance or threshold. Such threshold may be predetermined or dynamically set. For example, the CIEE is used to provide the increase or decrease as described above using an applicable PDCCF for the neutral family and a color family such as the red family. Any change in the applicable CODSs created by this increase or decrease is compared to a PDCCF calculated for the applicable CODSs. If the deviation from this calculated PDCCF is larger than the desired threshold, adjustments may be made to the applicable PDCCF for the neutral family, the color family of interest, or both, and step 108 may be repeated. If the deviation may not be made within some tolerance, an adjustment may be made that provides an acceptable deviation. One example for such a threshold is +/-3% of an IPDV designated as the Control.

In step 510, a CIEE transformation based on the CIEE transformation set-up, provided in step 508 may be applied by using any suitable CIEE functionality. The altered image data from this process may be saved in a separate file, or dynamically applied to a computer graphic image file's value at CTP plate making prior to a print production run. For example, in lithographic offset printing, this transformation may be applied at the CTP platemaking phase of print production to provide CMYK printing plates, as discussed below. All value levels of each C, M, Y, or K channel in the file, (e.g., 90%, 75%, 50%, 25%, 10%, 5%, and any other percentage dot value between 100% and 0.0%) may be adjusted by this transformation by means of interpolation to a desired pixel value. As technology permits, performance of this step may be altered to accommodate equivalent functionality that may alleviate the need for the use of a CIEE. In other words, this step or steps may be performed by functionality that transforms graphic image data using PDCCFs and secondary PDCCFs so that the transformed graphic image data may then be printed in a production print job. Depending on the implementation, step 512 may be performed on-the-fly directly after step 506, after a single step 508, or after one or more alternative steps 508 and/or 510 that may use PDCCFs to adjust a graphic image file's values so that the appearance of the image to be produced with a colorant set used to produce a CP would substantially correspond with the appearance of the image reproduced with a colorant set used to produce a RP.

In step 512, the transformed graphic image data created in step 510 may then be printed in a production print job to create a production run image on the printing press whose appearance will more closely approximate that of a proof of the image than if the transformation had not been performed. As one example, each of the screened or tonal percent dot values (e.g., 90%, 75%, 50%, 25%, 10%, 5%, and any other percentage dot value between 100% and 0.0%) for each of CMYK may represent transformed graphic image data. This data represents adjusted percent dot values for press output data whose targeted density values provide an appearance that approximately corresponds to the appearance of density values of a proof of a production image representative of the RP. In other words, a production image printed with these adjusted percent dot values will have density values that more closely approximate the originally-intended density values of a proof of the production image. This process provides more accurate printing than conventional systems, is substantially substrate-influence-independent, and may use several different proofing devices.

These adjustments may be made by, for example, providing the adjustment or the adjusted value to one of a number of well-known computer-driven devices that may be used to create CTP plates or film negatives or positives. For example, although traditional systems utilize computers that are currently standalone from a printing device and CTP platemaking devices that are standalone from a printing device, the invention also contemplates the use of networked systems that incorporate modem data processing and transfer capabilities, and where these adjusted values may automatically be electronically provided to any CTP platemaking device now known or developed in the future. As one example, direct imaging methods may be used to rewrite cylinders while on the press output device. Thus, CIEE functionality may reside in one or more elements that are electronically connected to a printing device, standalone from the printing device, and/or remotely located from the printing device. These adjustments may be applied to data to be used to print on the printing press adjusted dot values that approximately correspond to intended density values. For example, these adjustments may be saved into an adjustments file, applied to an existing data file, applied on-the-fly as the production print job is performed, or a combination of the above.

This image data may be stored and/or used to create data in a computer file that is used to create CTP plates. Although this description refers to CTP plates or CTP technology for convenience, the invention also contemplates the use of methods other than CTP plates that may be used to print a production job such as direct imaging (e.g., direct computer-to-cylinder master imaging), the use of interim films, and others. The printing plates may then be mounted on the press' cylinders and used to print the transformed graphic images on the printing press. At this phase of production, applicable CGDAFs may also be applied as required to expand the color gamut of the production print run's colorant set.

FIGURE 6 illustrates an example of a SADF 600 that may be used in accordance with teachings of the present invention. SADF 600 may be used to provide a profile of information that may be used to more accurately define a second colorant set to be used with a second RM/CRS when compared to a first colorant set to be used with a first RM/CRS. In one embodiment, these profiles may be used to more accurately define the output of a printing press and/or a proofing device. For example, color density measurement data of a SADF 600 that is printed by a printing press may be compared to color density measurements taken from a SADF 600 that is output by a proofing device. Adjustments may then be made in response to the comparison so that use of a colorant set used to create a CP (or a subsequently derived colorant set) will provide an appearance of an image using the colorant set used that more closely match the appearance of an image with a colorant set used to produce the RP. In one embodiment, adjustments may be made to facilitate use of colorants in a printing press' output more closely matching those used in a proofing device.

n general, SADF 600 may be used to quantify printing characteristics of selected values in aspects of the color management process. The SADF may be provided in one of many electronic data formats and may be printed using a proofing device and/or a printing press. One such format may be a digital EPS computer graphics file format that may be used to create four CTP CMYK plates representing the SADF. SADF 600 includes a plurality of color control regions or color samples CS1000-CS5257, each of which includes a region of solid color density (i.e., 100 percent dot or solid region) and one or more screened, or tonal, regions (e.g., 5, 10, 25, 50, 75, 90 percent dot). Examples for these percent dot values are illustrated in Tables II-IV. Of course, other percent dot values may be established as needed, whether predetermined or dynamically, and fewer or more regions may be used. In a particular embodiment, each of the printed regions may measure at least 3 mm across so that density values may be accurately measured. These shapes and sizes of these regions may vary according to the application, and their size may be reduced as technology improves. As one example, they may be regularly-shaped, such as a square or circle, or irregularly shaped.

n a particular embodiment, a SADF 600 includes a plurality of Tone Reproduction Color Samples (TRCSs), and a plurality of Color Correction Color samples (CCCSs), System Noise Indicator Samples (SNISs), and/or Correction Overlap Detection Samples (CODS), each arranged by color families. Some or all of these samples may be arranged so that they may be printed on a substrate such as paper in columns 620, 622, 624, 626, 628, 630, 632, ... 650 between a first side 601 and a second side 603 as illustrated in FIGURE 6. These columns each may be generally aligned with a first axis 602 and may be separated by a lateral spacing 606. First axis 602 is, as illustrated in FIGURE 6, generally parallel to a press output path, while second axis 604 is generally perpendicular to the press output path.

t may be advantageous for CCCSs and/or SNISs to be reproduced under conditions that are similar to those under which the applicable TRCSs are produced, including ink-film thickness and tone reproduction characteristics. By proximately locating CCCSs and/or SNISs of one color family in a column laterally near those TRCSs with a predetermined lateral spacing, similar printing conditions may be observed for these samples. This positioning may be advantageous because, among other things, it may reduce the variation of the ink film thickness that may increase the similarity of conditions between the types of samples. Such precision and control allows more accuracy in creating SADPs and therefore more accurate comparison of a CP and an RP, and thus more accurate matching of the appearance of a press output to that of a proof. This provides the advantage of reducing errors in calculations of TPDVs and PDCCFs that may be as high as 3% with the use of traditional methods and data or test forms. Errors may also be reduced by organizing such samples on an axis generally parallel to the output of a printing press and providing repetitive sample sets from which a statistical representation such as averaging may be performed for TRCSs may also improve results. In a particular embodiment, the centers of the color samples may advantageously span a distance less than or equal to 25 mm. Similarly, the predetermined lateral spacing varies with the size of the color samples in SADF 600, and in some embodiments may be, for example, 25 mm. Lateral spacing 606 may also be dynamically determined. As one example, TRCSs control set points CS1000-CS1057 and CS1200-CS1257 are illustrated as laterally proximate to CCCSs control set points CS 1100-CS1123.

n this embodiment, the seven traditional color families, neutral, red, yellow, green, cyan, blue and magenta are used. Percent dot values for corner samples for each of these families are illustrated in TABLE VIII. Corner samples are defined as six of the eight vertices red, yellow, green, cyan, blue and magenta (the other vertices are black and white) of a standard color model defined as a cube having its dimensions defined for three axes, one for each of C, M and Y. The neutral family includes an oval-shaped area within the cube centered about an axis between the black and white vertices, and has two corner samples which are achieved with equal contribution from the C, M and Y channels as illustrated in TABLE VIII. The cube is defined from percent dot values for each of C, M and Y between 0-100%.

TABLE VIII

| Examples for Corner Samples Percent Dot Values | | | |
|---|---|---|---|
| | **C** | **M** | **Y** |
| Neutral | 100 | 100 | 100 |
| Neutral | 0 | 0 | 0 |
| Red | 0 | 100 | 100 |
| Yellow | 0 | 0 | 100 |
| Green | 100 | 0 | 100 |
| Cyan | 100 | 0 | 0 |
| Blue | 100 | 100 | 0 |
| Magenta | 0 | 100 | 0 |

RCSs include control set points CS1000-CS1028, which includes a 0% dot control set point (i.e., no ink applied to the substrate) CS1000, and control set points CS1001, CS1008, CS1015, and CS1022 that represent solid (i.e., 100% dot) C, M, Y, and K. In addition, TRCSs also includes 5, 10, 25, 50, 75, and 90 percent dot control set points for each of CMYK.

TABLE IX

| Examples for TRCSs Percent Dot Values | | | | | | | | | | | |
|---|---|---|---|---|---|---|---|---|---|---|---|
| CS1000 | | 0% | | | | | | | | | |
| CS1001 | C | 100% | CS1008 | M | 100% | CS1015 | Y | 100% | CS1022 | K | 100% |
| CS1002 | C | 90% | CS1009 | M | 90% | CS1016 | Y | 90% | CS1023 | K | 90% |
| CS1003 | C | 75% | CS1010 | M | 75% | CS1017 | Y | 75% | CS1024 | K | 75% |
| CS1004 | C | 50% | CS1011 | M | 50% | CS1018 | Y | 50% | CS1025 | K | 50% |
| CS1005 | C | 25% | CS1012 | M | 25% | CS1019 | Y | 25% | CS1026 | K | 25% |
| CS1006 | C | 10% | CS1013 | M | 10% | CS1020 | Y | 10% | CS1027 | K | 10% |
| CS1007 | C | 5% | CS1014 | M | 5% | CS1021 | Y | 5% | CS1028 | K | 5% |

In this embodiment, SADF 600 includes a plurality of TRCSs, with control set points CS1000-CS1057. In this embodiment, values as discussed for control set points CS1000-CS1028 are repeated for control set points CS1029-CS1057. Values for control set points CS1000-CS1057 are then repeated for control set points CS1200-CS1257, CS1400-CS1457, CS1600-CS1657, CS1800-CS1857, CS2000-CS2057,...,CS5200-CS5257. It may in some cases be advantageous for TRCSs to be positioned proximally near a plurality of CCCSs and CODs. These TRCSs may then be used to accommodate for any variation in ink-film thickness in a CP such as one printed on a printed press. In a particular embodiment, samples CS1022-CS1028 may or may not be included or used, depending on the application

CCCSs includes solid and screened areas of multi-dimensional color samples. In a particular embodiment, a SADF 600 includes a plurality of all CCCSs arranged by color family. In this embodiment, CCCSs includes color samples CS 1100-CS1123 in the neutral family, CS 1300-CS 1319 for the red family, CS1507-CS1524 for the yellow family, CS1700-CS1719 for the green family, CS1907-CS1924 for the cyan family, CS2100-CS2119 for the blue family, and CS2307-CS2324 for the magenta family. CCCSs may include additional control set points for one or more of these families repeated across SADF 600. For example, the SADF may also include control set points CS2500-CS2523 and CS3900-CS3923 in the neutral family, in addition to other samples (not explicitly shown) that are repeated for each of the color families and to include control set points CS5107-CS5124 for the magenta family.

CCCSs include overprints of two or more colorants C, M, Y, and K. These values may vary as desired, and more or fewer values may be used, depending on the application. As one example, for the neutral family, CCCSs control set point CS 1100 may include CMYK initial percent dot values (IPDVs) of 5,5,5,0 respectively, control set point CS1101 may include CMYK IPDVs of 10, 10, 10, 0 respectively, control set point CS 1102 may include CMYK IPDVs of 25, 25, 25, 0 respectively, and control set point CS 1103 may include CMYK IPDVs of 50, 50, 50, 0 respectively. For the red family, CCCSs control set point CS1300 may include CMYK IPDVs of 0, 100, 100, 0 respectively, control set point CS1301 may include CMYK IPDVs of 0, 90, 90, 0 respectively, control set point CS1307 may include CMYK IPDVs of 90, 100,100,0 respectively, and control set point CS1313 may include CMYK IPDVs of 0, 100,100,100 respectively. The remaining color families include various combinations of C, M, Y, and/or K as desired. One exemplary set of CCCSs that may be used in accordance to teachings of the present invention is illustrated in Table X. Many of the samples shown in Table X may or may not be used, depending on the application. These samples delineate CMY, & K values as "X."

TABLE X

| Examples for Percent Dot Values that may be used in a SADF | | | | | | | | | | | | | |
|---|---|---|---|---|---|---|---|---|---|---|---|---|---|
| Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals |
| CS 1100 | 5 5 5 0 | CS 1300 | 0 100 100 0 | CS 1500 | 00 100 0 | CS 1700 | 100 0 100 0 | CS 1900 | 100 0 0 0 | CS 2100 | 100 100 0 0 | CS 2300 | 0 100 0 0 |
| CS 1101 | 10 10 10 0 | CS 1301 | 090900 | CS 1501 | 00900 | CS 1701 | 90 0 90 0 | CS 1901 | 90000 | CS 2101 | 909000 | CS 2301 | 09000 |
| CS 1102 | 25 25 25 0 | CS 1302 | 0 75 75 0 | CS 1502 | 0 0 75 0 | CS 1702 | 75 0 75 0 | CS 1902 | 75 0 0 0 | CS 2102 | 75 75 0 0 | CS 2302 | 0 75 0 0 |
| CS 1103 | 50 50 50 0 | CS 1303 | 0 50 50 0 | CS 1503 | 0 0 50 0 | CS 1703 | 50 0 50 0 | CS 1903 | 50 0 0 0 | CS 2103 | 50 50 0 0 | CS 2303 | 0 50 0 0 |
| CS 1104 | 75 75 75 0 | CS 1304 | 0 25 25 0 | CS 1504 | 0 0 25 0 | CS 1704 | 25 0 25 0 | CS 1904 | 25 0 0 0 | CS 2104 | 25 25 0 0 | CS 2304 | 0 25 0 0 |
| CS 1105 | 9090900 | CS 1305 | 0 10 10 0 | CS 1505 | 0 0 10 0 | CS 1705 | 10 0 10 0 | CS 1905 | 10 0 0 0 | CS 2105 | 10 10 0 0 | CS 2305 | 0 10 0 0 |
| CS 1106 | 100 100 100 0 | CS 1306 | 0 5 5 0 | CS 1506 | 0 0 5 0 | CS 1706 | 5 0 5 0 | CS 1906 | 5 0 0 0 | CS 2106 | 5 5 0 0 | CS 2306 | 0 5 0 0 |
| CS 1107 | 5 5 5 0 | CS 1307 | 90 100 100 0 | CS 1507 | 90 0 100 0 | CS 1707 | 100 90 100 0 | CS 1907 | 100 90 0 0 | CS 2107 | 100 100 90 0 | CS 2307 | 90 100 0 0 |
| CS 1108 | 10 10 10 0 | CS 1308 | 75 100 100 0 | CS 1508 | 75 0 100 0 | CS 1708 | 100 75 100 0 | CS 1908 | 100 75 0 0 | CS 2108 | 100 100 75 0 | CS 2308 | 75 100 0 0 |
| CS 1109 | 25 25 25 0 | CS 1309 | 50 100 100 0 | CS 1509 | 50 0 100 0 | CS 1709 | 100 50 100 0 | CS 1 909 | 100 50 0 | CS 2109 | 100 100 50 0 | CS 2309 | 50 100 0 0 |
| CS 1110 | 50 50 50 0 | CS 1310 | 25 100 100 0 | CS 1510 | 25 0 100 0 | CS 1710 | 100 25 100 0 | CS 1910 | 100 25 0 0 | CS 2110 | 100 100 25 0 | CS 2310 | 25 100 0 0 |
| CS 1111 | 75 75 75 0 | CS 1311 | 10 100 100 0 | CS 1511 | 100 100 0 | CS 1711 | 100 10 100 0 | CS 1911 | 100 10 0 0 | CS 2111 | 100 100 10 0 | CS 2311 | 10 100 0 0 |
| CS 1112 | 90 90 90 0 | CS 1312 | 5 100 100 0 | CS 1512 | 5 0 100 0 | CS 1712 | 100 5 100 0 | CS 1912 | 100 5 0 0 | CS 2112 | 100 100 5 0 | CS 2312 | 5 100 0 0 |

(continued)

| Examples for Percent Dot Values that may be used in a SADF | | | | | | | | | | | | | |
|---|---|---|---|---|---|---|---|---|---|---|---|---|---|
| Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals |
| CS 1113 | 100 100 100 0 | CS 1313 | 0 100 100 100 | CS 1513 | 0 90 100 0 | CS 1713 | 100 0 100 100 | CS 1913 | 100 0 90 0 | CS 2113 | 100 100 0 100 | CS 2313 | 0 100 90 0 |
| CS 1114 | 5 5 5 0 | CS 1314 | 0 100 100 90 | CS 1514 | 0 75 100 0 | CS 1714 | 100 0 100 90 | CS 1914 | 100 0 75 0 | CS 2114 | 100 100 0 90 | CS 2314 | 0 100 75 0 |
| CS 1115 | 10 10 10 0 | CS 1315 | 0 100 100 75 | CS 1515 | 0 50 100 0 | CS 1715 | 100 0 100 75 | CS 1915 | 100 0 50 0 | CS 2115 | 100 100 0 75 | cs 2315 | 0 100 50 0 |
| CS 1116 | 25 25 25 0 | CS 1316 | 0 100 100 50 | CS 1516 | 0 25 100 0 | CS 1716 | 100 0 100 50 | CS 1916 | 100 0 25 0 | CS 2116 | 100 100 0 50 | CS 2316 | 0 100 25 0 |
| CS 1117 | 50 50 50 0 | CS 1317 | 0 100 100 25 | CS 1517 | 0 10 100 0 | CS 1717 | 100 0 100 25 | CS 1917 | 100 0 10 0 | CS 2117 | 100 100 0 25 | CS 2317 | 0 100 10 0 |
| CS 1118 | 75 75 75 0 | CS 1318 | 0 100 100 10 | CS 1518 | 0 5 100 0 | CS 1718 | 100 0 100 10 | CS 1918 | 100 0 50 0 | CS 2118 | 100 100 0 10 | CS 2318 | 0 100 5 0 |
| CS 1119 | 90 90 90 0 | CS 1319 | 0 100 100 5 | CS 1519 | 00 100 90 | CS 1719 | 100 0 100 5 | CS 1919 | 100 0 0 90 | CS 2119 | 100 100 0 5 | CS 2319 | 0 100 0 90 |
| CS 1120 | 100 100 100 0 | CS 1320 | 67 100 100 0 | CS 1520 | 00 100 75 | CS 1720 | 100 67 100 0 | CS 1920 | 100 0 0 75 | CS 2120 | 100 100 67 0 | CS 2320 | 0 100 0 75 |
| CS 1121 | 25 25 25 25 | CS 1321 | 50 75 75 0 | CS 1521 | 00 100 50 | CS 1721 | 75 50 75 0 | CS 1921 | 1000050 | CS 2121 | 75 75 50 0 | CS 2321 | 0 100 0 50 |
| CS 1122 | 50 50 50 50 | CS 1322 | 33 50 50 0 | CS 1522 | 0 0 100 25 | CS 1722 | 50 33 50 0 | CS 1922 | 100 0 0 25 | CS 2122 | 50 50 33 0 | CS 2322 | 0 100 0 25 |
| CS 1123 | 75 75 75 75 | CS 1323 | 17 25 25 0 | CS 1523 | 0 0 100 10 | CS 1723 | 25 17 25 0 | CS 1923 | 100 0 0 10 | CS 2123 | 25 25 17 0 | CS 2323 | 0 100 0 10 |
| CS 1124 | X | CS 1324 | X | CS 1524 | 00 100 5 | CS 1724 | X | CS 1924 | 100 0 0 5 | CS 2124 | X | CS 2324 | 0 100 0 5 |
| CS 1125 | X | CS 1325 | X | CS 1525 | X | CS 1725 | X | CS 1925 | X | CS 2125 | X | CS 2325 | X |

(continued)

| Examples for Percent Dot Values that may be used in a SADF | | | | | | | | | | | | | |
|---|---|---|---|---|---|---|---|---|---|---|---|---|---|
| Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals | Color Smpls | C/M/Y/K % Dot Vals |
| CS 1126 | X | CS 1326 | X | CS 1526 | X | CS 1726 | X | CS 1926 | X | CS 2126 | X | CS 2326 | X |
| CS 1127 | X | CS 1327 | X | CS 1527 | X | CS 1727 | X | CS 1927 | X | CS 2127 | X | CS 2327 | X |
| CS 1128 | X | CS 1328 | X | CS 1528 | X | CS 1728 | X | CS 1928 | X | CS 2128 | X | CS 2328 | X |

CCCSs includes a subset of color samples that have been selected from the 4,096 sample combinations possible using 8 control set points for each of C, M, Y, and K. In a particular embodiment, this subset may be tailored to be used with select CIEEs that may be used to perform subsequent adjustments and/or calculations. The invention contemplates the use of CIEEs that may be used to control and/or monitor control set points as desired, such as for percent dot values other than 5, 10, 25, 50, 75, 90 and 100.

Also in a particular embodiment, CODs include solid and screened areas of multi-dimensional color samples. In a particular embodiment, a SADF 600 includes a plurality of all CODs arranged by RGB color families. In this embodiment, CODs include control set points CS 1320-CS 1323 for the red family, CS1720-CS1723 for the green family, CS2120-CS2123 for the blue family. CODs may include additional control set points for one or more of these families repeated across SADF 600. For example, the SADF may also include control set points CS2720-CS2723 and CS4120-CS4123 in the red family, which are not explicitly shown.

CODs may be described as samples having overprint values of two or more colorants C, M, Y, and K whose location on the color cube defined above are approximately midpoint between a color family's corner sample and the neutral family, and data collected from CODs may be used, among other things, to determined whether characteristics of the color image editing engine being used is creating any anomalies. For example, overlapping correction anomalies may be detected as adjustments are made during the methods described herein, and corrected as desired.

SNISs may in a particular embodiment include solid and screened areas of one-dimensional color samples in the C, M, and Y families. SNISs may be used in a particular embodiment to determine whether system noise, such as variations in ink film thickness and/or tone reproduction characteristics, is present in the process of calculating PDCCFs. As illustrated in Table X, samples CS1500-CS1506, CS 1900-CS 1906, and CS2300-CS2306 may in a particular embodiment be SNISs. Alternatively or in addition, these SNISs may include the same component CMYK values for relative neighboring TRCSs. Relative neighboring values refers to samples in neighboring columns. That is and for example, SNISs CS 1500-CS 1506 in column 630 may include the same CMYK component values as TRCSs CS 1415-CS1421 and CS1615-CS1621, which are in columns 628 and 632, respectively. Ideally, the values for IPDVs should be the same for SNISs and their relative neighboring TRCSs. In other words, PDCCFs for the SNISs should approximately equal 0.0, where no system noise is present.

In a particular embodiment, the SADF includes 1,276 TRCSs arranged in 22 columns of 58 control set points. Similarly, in a particular embodiment, the SADF may include 36 CODSs that are arranged in 4 color samples for each of the red, green and blue families, and 414 CCCSs that include 24 for the neutral family, 20 each of red, green, and blue families and 18 for each of the C, M, and Y families. Alternatively or in addition, the SADF may include 63 SNISs that may be arranged in 7 color samples for each of the C, M, and Y families. Each of these samples in the SADF may be repeated where the columns for the neutral, C, M, and Y and/or red, green and blue families are repeated, as previously discussed.

Such repetition of samples within SADF 600 may advantageously provide a number of measurements that may be taken for the same color family. A statistical representation such as an average may then be made for selected values within a color family, such as TPDVs, as desired. Use of the statistical representation may advantageously reduce system noise and/or inaccuracies in measurements, calculations, and/or other effects from causes such as variations in ink-film thickness and/or tone reproduction characteristics.

Although control set points CS1000-CS1028 are set at 0, 5, 10, 25, 50, 75, 90, and 100 percent dot in a preferred embodiment, alternative control set point percent dot values may be established as needed. Current 8-bit pixel depth digital imaging provides for a total of 256 percent dot gradations from 100% dot (i.e., solid area) to 0% dot (i.e., substrate); therefore, using 8-bit pixel depth digital imaging permits 0.4% between successive percent dot gradations even when less than the 256 potential gradations are used as control set points. In a particular embodiment, interpolation may be used to calculate an adjustment to be applied to each of the 256 percent dot gradations. These samples may be referenced visually and by instrument measurement, which facilitates employment of quality control, statistical process control, and ISO 9000 certification required procedures.

The density values measured from the SADF may be saved in a variety of formats, preferably into a digital or other representation on a computer-readable storage medium, into one or more SADPs. Numerous formats for groupings for the RP and the CP may be selected as control and/or non-control components as discussed below in conjunction with FIGURE 8. Each RP and CP SADP may also include values calculated and/or derived from these density values, including TPDVs, PDCCFs, any desired secondary PDCCFs and/or CGDAFs. Alternatively or in addition, a single SADP file may be created that includes both reference and current data sets if combining both data sets into a single unit is desired.

FIGURE 7 illustrates an example for calculating PDCCFs and CGDAFs. Generally, the method includes the steps of calculating average density values from each TRCSs value in both the RP and CP, calculating TPDVs for the CCCSs, CODS and SNISs in both the RP and the CP, and calculating applicable PDCCFs. PDCCFs are adjustment values that may be used in adjusting image data produced with a colorant set used to produce the CP so that the appearance of the production print image would substantially correspond with the appearance of the image reproduced with a colorant set used to produce the RP. The method also may include calculating an applicable CGDAF, which may be used to calculate densities that correspond to a larger than 100 % dot value to expand the color gamut of the CP to fit the color gamut of the RP.

In step 702, density values for selected TRCSs may be utilized for both the CP and the RP. In a particular embodiment, this step may include selecting a color family of the SADF as a color family of interest (CFOI), and then selecting a CCCSs, CODS, or SNIS of the designated CFOI as a sample of interest (SOI). In a particular embodiment, it may be advantageous to use TRCSs data adjacent to the designated CFOI. Such an advantage may provide more accurate calculations of TPDVs, PDCCFs, desired secondary PDCCFs, and/or CGDAFs, by reducing effects from variations in density measurements due to factors such as uneven ink-film thickness and/or tone reproduction characteristics. Steps 704-708 may be performed for all CCCSs, CODs, and SNISs for all color families by performing the steps for each selected SOI and CFOI.

In step 704, a first SADP may be designated as a Reference Profile (RP), and a second SADP may be designated as a Current Profile (CP). Generally, density measurements may be obtained from the RP and CP to calculate TPDVs for each SOI in the RP and CP. Interpolated density values may then be obtained from the CP and the RP by using standard linear and other interpolation techniques. PDCCFs for each control component are then calculated in response to these TPDVs in step 706. One example for calculating PDCCFs is discussed in further detail in conjunction with FIGURE 8, and includes designating C, M, Y, and/or K control components for a file channel. Generally, where a control component is designated, other components become non-control components.

In step 708, a CGDAF is calculated for selected CCCSs. For example, if the sum of a PDCCF and its corresponding IPDV exceeds 100 percent, then the AFPDV may be set to 100 percent, and a CGDAF is calculated to allow for calculating a density that corresponds to a larger than 100 % dot value. A CGDAF may be applied (added, in one embodiment of the invention) to the RP's Solid Major Density-P Aimpoints to be used as the CP's Solid Major Density-P Aimpoints in a production run, so that the press may be run using such higher densities. Such higher densities may be achieved using colorants containing higher concentrations of pigments or dyes, by applying colorants at higher ink-film thicknesses, or a combination thereof. The neutral family is generally not affected by the use of CGDAFs as a result of the printing industry practice of "under-color removal" to control "total area coverage." Generally, calculation of CGDAFs may provide the advantage of reducing or removing the compromises that are typically found with ICC color management systems, which attempt to gamut map using either photometric or colorimetric corrections. Moreover, the present invention contemplates that this method may calculate densities to be used with a printing device, which usually has a smaller color gamut, to those to be used with a proofing device, which usually has a larger color gamut, a solution that may provide fewer restrictions on providing output image data using a printing device. One example for calculating a CGDAF is as follows.

$$CGDAF = \textit{Targeted Control Solid Major Density Aimpoint} * PDCCF * (\textit{Reference Control TPDV / Current Control TPDV})$$

In step 710, any desired secondary PDCCFs are calculated to properly reduce or remove any overcompensation effects. For example, secondary PDCCFs may be advantageously used, when proper compensation for a particular color channel's applicable color family with the most underefficiency overcompensates, by application of the CP's Targeted Solid Major Density-P Aimpoints for the channel, in the other two applicable families having the least underefficiency. Applicable color families for the Magenta channel are magenta, red, and blue; for the Yellow channel, red, yellow, and green; and for the Cyan channel, cyan, green and blue. Secondary PDCCFs are negative values that may be used to reduce respective 100% IPDVs, usually at selected corner samples, to balance the effect of the application of CGDAFs on the applicable color families. As one example, a CGDAF may be selected as the highest of the three CGDAFs calculated for the Magenta channel at the corner sample point for the red, blue and magenta families. Where the blue family is the least efficient of the applicable families and would require application of the highest CGDAF, such CGDAF calculated for the Magenta channel would overcompensate for the red family, which is not as underefficient as the blue family. A secondary PDCCF may then be derived for the Magenta channel to produce AFPDVs for the 100% IPDVs for each of the red and magenta families with lower CGDAFs. Other values, such as those for the 91-99 percent dot values, may be derived using numerous methods, including interpolation. Secondary PDCCFs may be represented as:

$$SecondaryPDCCF = \left( \left( \frac{\begin{array}{l}\text{(Targeted Solid Major Density Aimpoint for Cyan ("Tcyan") +}\\ \text{CGDAF for Cyan in the Green Family ("CGDAFgreen") -}\\ \text{Cyan Density at a 90\% control set point of TRCS ("90\% Value"))}\end{array}}{(T_{cyan} + \text{CGDAF for Cyan in the Blue Family - 90\% Value})} \right) * 10 \right) - 10$$

The term "90% Value" may be derived using a number of different methods including averaging any desired number of TRCS 90% control set points, or using a single value, e.g. TRCS control set point CS1002. To illustrate another example using the blue and green families as measured in the Cyan channel, a CGDAF is derived in response to a PDCCF derived at the corner sample point of the blue family and selected as the highest of values recorded. Where, in such a scenario, the derived CGDAFs are 0.075 and 0.110 respectively for the green and blue families, the green corner sample in the Cyan channel may preferably be reduced by a calculated secondary PDCCF value. Thus, using examples for values discussed above, a secondary PDCCF may be represented as:

$$Secondary\ PDCCF = \left( \left( \frac{(1.60 + 0.075) - 90\%\ Value)}{(1.60 + 0.110) - 90\%\ Value)} \right) * 10 \right) - 10$$

FIGURE 8 illustrates an example of a method for calculating PDCCFs. Generally, the method includes calculating TPDVs for each color sample for both a RP and a CP, and then calculating density adjustments and adjusted density values to the TPDVs in response to these density adjustments. The method then calculates in response to the adjusted density values adjusted percent dot values from which PDCCFs are calculated. Such calculations provide the advantage of compensating for differences between RM/CRSs with different additivity failure characteristics using multiple colorant sets, for a variety of printing, proofing and/or press output devices.

The method begins in step 802, where a SOI is selected. In step 804, TPDVs are calculated for High, Middle and Low Components for the SOI. TPDVs may be described as the dot values that are derived from the actual measured densities from the SOI. In a particular embodiment, the method uses iteration and techniques such as linear or other interpolative techniques to arrive at dot values that correspond to measured C, M, Y densities.

TPDVs may then be calculated for the CCCSs, CODSs, and SNIS of both the RP and the CP by using applicable TRCSs data. For example, density measurements may be obtained from the RP and CP to calculate TPDVs for each of these CCCSs, CODSs, and SNISs in the profile. In a particular embodiment, a statistical representation, such as an average, of a plurality of samples may be calculated. For example, an average or other statistical representation of three TPDVs or PDCCFs may be performed around a specific color family. As one example, for the neutral family of CCCSs control points CS 1100-CS 1123, TPDVs may be calculated from averaged density values for TRCSs control set points CS 1000-CS1057 and CS1200-CS1257. To illustrate, an average density for TRCSs solid cyan control set point major density values applicable to the neutral family of CCCSs control points CS1100-CS1123 may be calculated from density values measured for TRCSs control set points CS1001, CS1201, CS1030 and CS1230. This process may also be expanded to include TPDV and PDCCF values calculated for the neutral family of CCCSs control points CS2500-CS2523 and CS3900-CS3923. The present invention contemplates the use of such statistical representations in a number of configurations as desired, and may be used to reduce the effects from system noise as measurements and calculations are taken from the SADF.

For example, a statistical representation such as an average density of the substrate for each C, M, and Y component of the SOI may be subtracted from the density measured for each component of the sample to arrive at a '-P' density value for each of C, M, and Y. The component with the highest density is selected as a High Component. For example, for sample CS1310, the highest density is magenta, the next-highest density is yellow, and the lowest density is cyan. A Start Percent Dot Value (SPDV) for the High Component may be interpolated by comparing the density of the High Component to the tone reproduction densities for that colorant. The component with the next-highest density is selected as a Middle Component, for which a density value may be interpolated from the tone reproduction densities for the colorant of the High Component. A SPDV for the Middle Component may then be interpolated using the difference of the density calculated for the Middle Component and the original density of the Middle Component. A SPDV for the Low Component may be interpolated by calculating densities from the High and Middle Component percent dot values and subtracting those from the original density of the Low Component. This process results in SPDVs for each of the High, Middle and Low Components.

TPDV's may then be calculated using a variety of methods, including iteration to within a desired tolerance. For example, in one embodiment, for all three calculated percent dot values, densities may be calculated for all three components. These densities may then be summed to create a total density for each of the three components. For each component an Adjustment Factor may then be calculated. This Adjustment Factor may be represented as:

$$Adjustment\ Factor = Actual - P\ density / total\ density$$

In a particular embodiment, a first calculation may be represented as TPDV = SPDV * Adjustment Factor. Subsequent new values for TPDV are iteratively calculated until the adjustment factors are within a desired tolerance. For example, the method may end where all three of the adjustment factors, when rounded, equal 1.0.

In steps 806-812, these TPDVs are then used to calculate PDCCFs, and the RP's TRCSs are used to interpolate percent dot values and densities for both the RP and the CP. In step 806, a control component is selected for which steps 808 and 810 are performed. The control component is used in this aspect of the algorithm to determine for which dot value a normalization may be calculated (e.g., C, M, or Y). In a particular embodiment, for CCCSs in the neutral family, only C, M, and Y are used as the control component in the method, whereas it is not necessary to perform any calculations using K as the control. On the other hand, C, M, Y, and K are all used as the control component in the method for CCCSs values in other families, where the K channel includes different dot values.

In step 808, a density adjustment is performed using selected density values that correspond to the non-control component dot values for the RP and the CP. The density of the control component is then adjusted by the density adjustment, and an adjusted dot value for the control component is calculated for the adjusted density of the control component.

First, the method may normalize the TPDV for the non-control components of the CP SOI using the TPDV of the non-control components of the RP SOI as a reference. Normalization may provide the advantage of compensating for the interdependency of the file channels from the adjustment process. Generally, for example, any adjustments to the C channel affect the M, Y, and/or K channel. Normalization compensates for these effects and isolates the selected file component (e.g., C, M, Y, and/or K) in the adjustment process.

The CP TPDV of the control component may then be adjusted in response to the normalization to create a CP Adjusted Control Theoretical Percent Dot Value (ACTPDV). An example may be illustrative. The following example uses Cyan as the Control component, and thus magenta and yellow are non-control components:

$$\begin{aligned} Density\ Adjustment = {} & (Cyan\ Density\ of\ the\ Reference\ Magenta\ Dot\ Value - \\ & Cyan\ Density\ of\ the\ Current\ Magenta\ Dot\ Value) + \\ & (Cyan\ Density\ of\ the\ Reference\ Yellow\ Dot\ Value - \\ & Cyan\ Density\ of\ the\ Current\ Yellow\ Dot\ Value) \end{aligned}$$

$$\begin{aligned} AdjustedCyanDensity = {} & CyanDensityof\ theCurrentCyanDotValue + \\ & DensityAdjustment \end{aligned}$$

$$Adjusted\ Cyan\ Dot\ Value = Cyan\ Dot\ Value\ of\ the\ Adjusted\ Cyan\ Density$$

In step 810, a PDCCF is calculated in response to the CP ACTPDV and the RP TPDV of the control component.

$$\begin{aligned} PDCCF = {} & Reference\ Cyan\ Dot\ Value - \\ & Adjusted\ Cyan\ Dot\ Value \end{aligned}$$

Step 812 returns the method to step 802 to perform steps 804 and 810 for the other control components if the method has not been performed for all of the control components of all of the SOIs. Where TPDVs or other values have already been calculated, there is no need to recalculate these or any values.

It may be advantageous in some cases to modify the prior approach in calculating PDCCFs from TPDVs. For example, where the control component is Black, for the color families Yellow, Cyan and Magenta, the PDCCF may be obtained in response to calculations for multiple colors. In addition, where K is designated the control component for a file channel, the control component becomes a combination of one or more of C, M, Y, depending on the selection of CFOI. Using this aspect of the algorithm, the color family, rather than the control component, is used to determine for which dot value the adjustment is being calculated (e.g., C, M, or Y). Again, an example using K as the Control component in the Cyan family may be illustrative:

$$\begin{aligned}\textit{Density Adjustment} = {} & (\textit{Magenta Density of the Reference Cyan Dot Value} - \\ & \textit{Magenta Density of the Current Cyan Dot Value})\end{aligned}$$

$$\begin{aligned}\textit{Adjusted Magenta Density} = {} & \textit{Magenta Density of the Current Magenta Dot Value} + \\ & \textit{Density Adjustment}\end{aligned}$$

$$\textit{Adjusted Magenta Dot Value} = \textit{Magenta Dot Value of the Adjusted Magenta Density}$$

$$\begin{aligned}\textit{Density Adjustment} = {} & (\textit{Yellow Density of the Reference Cyan Dot Value} - \\ & \textit{Yellow Density of the Current Cyan Dot Value})\end{aligned}$$

$$\begin{aligned}\textit{Adjusted Yellow Density} = {} & \textit{Yellow Density of the Current Yellow Dot Value} + \\ & \textit{Density Adjustment}\end{aligned}$$

$$\textit{Adjusted Yellow Dot Value} = \textit{Yellow Dot Value of the Normalized Yellow Density}$$

$$\begin{aligned}\textit{PDCCF} = {} & (\textit{Reference Magenta Dot Value} + \textit{Reference Yellow Dot Value})/2 \\ & (\textit{Adjusted Magenta Dot Value} + \textit{Adjusted Yellow Dot Value})/2\end{aligned}$$

Two examples may be illustrative. For example, Table XI illustrates values that are calculated for a neutral family where the first column includes values calculated for the RP, and the second column includes values calculated for the CP. The last entry in row F shows a comparison of the two system admixture characteristics. CCCS CS1103 as used in Table XI includes CMYK IPDVs of 50, 50, 50, 0 respectively, which are used to derive densities that may be compared to actual measured densities to determine, among other things, additivity failure evident in the systems used to create the CP and the RP. In this example, measured densities for CCCS CS1103 are smaller than those densities for one-dimensional CMYK density values for corresponding dot values of 50, 50, 50, respectively. As illustrated in Table XI, neighboring TRCS samples CS1000-CS1021 and CS1200-CS1221 are also used to provide one-dimensional values in row A. Calculations may be performed for the C, M, & Y channels without calculating any values for the K channel. In these cases, any adjustments to the K channel may be made in response to calculations performed for the C, M, & Y channels.

Referring to Table XI, theoretical perfect efficiency densities shown in row B are sum totals of the addition of the densities shown in row A. In this example, because the actual densities as shown in row C are less than the efficiency densities shown in row B, the RP illustrates underefficiency. TPDV's calculated in row D represent what dot values, in theory, should have been required to produce the densities in row C given perfect system efficiency. Row E illustrates the difference between the dot values shown in Rows A and D. Row F illustrates the difference between those percent dot values shown in Row D for the two profiles. In this example, these values are unrefined PDCCFs, prior to normalization. These values represent an absolute correction that is required on the CCCSs for the neutral family of colors for each of the C, M, and Y channels of an image data graphics file so that the appearance of the image to be produced in a production print job with a colorant set used to produce a CP would substantially correspond with the appearance of the image reproduced with a colorant set used to produce a RP.

TABLE XI

Example for Neutral Family

| | System Admixture Data Profile Designated as Reference | | | | | System Admixture Data Profile Designated as Current | | | | |
|---|---|---|---|---|---|---|---|---|---|---|
| | Colorant | CCCSs Initial Percent Dot Values (Neutral Family) | TRCSs Density Measurements | | | Colorant | CCCSs Initial Percent Dot Values (Neutral Family) | TRCSs Density Measurements | | |
| | | | C | M | Y | | | C | M | Y |
| A | Cyan | 50 | .528 | .254 | .092 | Cyan | 50 | .519 | .229 | .082 |
| | Magenta | 50 | .114 | .563 | .372 | Magenta | 50 | .088 | .474 | .308 |
| | Yellow | 50 | .011 | .047 | .378 | Yellow | 50 | -.033 | .043 | .400 |
| | Black | 0 | .000 | .000 | .000 | Black | 0 | .000 | .000 | .000 |
| | C | M | Y | | | C | M | Y | | |
| B | .653 | .864 | .842 | | | .604 | .746 | .790 | | |
| C | .631 | .804 | .769 | | | .614 | .734 | .717 | | |
| D | 48.91% | 45.95% | 45.06% | | | 50.63% | 49.15% | 42.82% | | |
| E | -1.09% | -4.05% | -4.94% | | | +.63% | -.85% | -7.18% | | |
| F | -1.72% | -3.20% | +2.24% | | | | | | | |

Theoretical perfect efficiency densities shown in row B are sum totals of the addition of the densities shown in row A. In this example, because the actual densities as shown in row C, for the C and M channels, are greater than those efficiency densities shown in row B, the RP illustrates overefficiency. TPDV's calculated in row D represent what dot values, in theory, should have been required to produce the densities in row C given perfect system efficiency, that is, with no additivity failure. Row E illustrates the difference between the dot values shown in Rows A and D. Row F illustrates the difference between those percent dot values shown in Row D for the two profiles. In this example, these values are PDCCFs prior to the normalization process as discussed above. These values represent an absolute correction that is required on the CCCSs for the red family of colors for each of the C, M, and Y channels of an image data graphics file so that the appearance of the image to be produced in a production print job with a colorant set used to produce a CP would substantially correspond with the appearance of the image reproduced with a colorant set used to produce a RP. Row G illustrates CGDAFs that are calculated and that may be subsequently applied to the RP's Solid Major Density-P Aimpoints to be used as the CP's Solid Major Density-P Aimpoints in a production run.

TABLE XII

Example for Red Family

| | System Admixture Data Profile Designated as Reference | | | | | System Admixture Data Profile Designated as Current | | | | |
|---|---|---|---|---|---|---|---|---|---|---|
| | Colorant | CCCSs Initial Percent Dot Values (Red Family) | TRCSs Density Measurements | | | Colorant | CCCSs Initial Percent Dot Values Red Family) | TRCSs Density Measurements | | |
| | | | C | M | Y | | | C | M | Y |
| A | Cyan | 0 | .000 | .000 | .000 | Cyan | 0 | .000 | .000 | .000 |
| | Magenta | 100 | .179 | 1.574 | .737 | Magenta | 100 | .176 | 1.713 | .815 |
| | Yellow | 100 | .020 | .084 | 1.075 | Yellow | 100 | -.003 | .084 | 1.295 |
| | Black | 0 | .000 | .000 | .000 | Black | 0 | .000 | .000 | .000 |

| | C | M | Y | C | M | Y |
|---|---|---|---|---|---|---|
| B | .199 | 1.658 | 1.812 | .173 | 1.797 | 2.11 |
| C | .205 | 1.715 | 1.738 | .174 | 1.396 | 1.627 |
| D | .42% | 103.56% | 95.29% | 1.52% | 89.92% | 81.84% |
| E | +.42% | +3.56% | -4.71% | +1.52% | -10.08% | -18.16% |
| F | -1.10% | +13.64% | +13.45% | | | |
| G | 0.00 | +.252 | +.224 | | | |

TABLE XII illustrates examples of values that may be calculated for a red family where the first column includes values calculated for the RP, and the second column includes values calculated for the CP. The last entries in rows F and G show two comparisons of the two system admixture characteristics. CCCS 1300 as used in Table VI includes CMYK IPDVs of 0, 100, 100, and 0 respectively, which are used to derive densities that may be compared to actual measured densities to determine, among other things, additivity failure evident in the systems used to create the CP and the RP. As illustrated in Table XII, neighboring TRCS samples CS1200-CS1221 and CS1400-CS1421 are also used to provide one-dimensional values in row A.

Using TABLE XII for illustrative purposes, row F shows an unnormalized PDCCF value for the magenta channel as +13.64 percent, or 0.1364. Assuming magenta is the control component, this PDCCF value may be multiplied by an exemplary Targeted Magenta Solid Major Density Aimpoint of 1.60 for the magenta channel. Reference Magenta TPDVs are what dot values, in theory, should have been required to produce the densities in row C given perfect system efficiency, that is, with no additivity failure. Although a CGDAF, as shown in row G, may be represented using a variety of formulas, one method for representing a CGDAF may be:

$$CGDAF = (Targeted\ Magenta\ Solid\ Major\ Density\ Aimpoint * PDCCF) * (Reference\ Magenta\ TPDV / Current\ Magenta\ TPDV)$$

$$CGDAF = 1.60 * 0.1364 * (103.56 / 89.92) = +0.252$$

FIGURE 9 graphically illustrates an example of a relationship between additivity failure and a color gamut using exemplary perimeter points for three color channels and three overprints. The use of CGDAFs may provide a significant contribution to facilitate the matching of an appearance of an image created with a larger gamut by using an image created with an expanded smaller gamut. It may be illustrative to discuss the conceptual relationship between two systems with different additivity failure rates. Differences in overprint mismatches represent an additivity failure rate between two systems even where color gamuts are matched at the Cyan, Magenta, and Yellow values. Referring now to FIGURE 9, an exemplary two-dimensional representation 900 of a comparison between two systems with different additivity failure rates is shown. Representation 900 illustrates the concept using by example, and not by limitation, hypothetical values similar to those created by SWOP printing standards for use on photomechanical proofing and printing press RM/CRSs.

A shaded outlying area 916 defines parts of the color space that are beyond the visible color space denoted by a white or non-shaded area 915. Perimeter 918A illustrates density values of a system with a larger gamut of a colorant set-RM/CRS pair with high-efficiency system admixture characteristics as may be determined in response to a characterization of system additivity failure. Thus, the system corresponding to perimeter 918A has a larger gamut than that corresponding to perimeter 918. As one example, in many cases, the relative shapes of perimeters 918 and 918A may be represented by outputs from a press output device and a proofing device, respectively.

More specifically, perimeter 918A includes a blue solid density color perimeter point 902A, a red solid density color perimeter point 904A, and a green solid density color perimeter point 906A. Similarly, perimeter 918 includes a blue solid density color perimeter point 902, a red solid density color perimeter point 904, and a green solid density color perimeter point 906. Blue color perimeter points 902A and 902 are overprints of Cyan and Magenta, red color perimeter points 904A and 904 are overprints of Magenta and Yellow, and green color perimeter points 906A and 906 are overprints of Cyan and Yellow. Perimeter points 908, 910, and 912 illustrate common values for Cyan, Magenta and Yellow color samples for both colorant set-RM/CRS pairs. The half-tone or tonal densities of all combinations of cyan, yellow and magenta for each of the two respective systems fall within the respective perimeters 918 and 918A.

ICC color management systems attempt to map points outside perimeter 918 to a nearest point within perimeter 918 by either photometric or colorimetric corrections. Unfortunately, this type of gamut mapping has typically resulted in compromises that may be unacceptable in the printing industry. Moreover, these systems usually attempt to map colors to be used with a proofing device, which usually has a larger color gamut, to those to be used with a printing device, which usually has a smaller color gamut. It is generally possible to mix colorants for a system with a larger gamut to reproduce any color producible by the system with the smaller gamut. Aspects of the present invention provide CGDAFs that may reduce or eliminate these compromises, by allowing calculation of density values that must be run on a press that result in the same chroma, or color intensity, which simulates the gamut of the proof.

FIGURE 10 is a block diagram of a system admixture compensation system 1000. System 1000 includes a computer 1020 that may be coupled to a number of elements, including a communication link 1015. For example, computer 1020 may be coupled through communication link 1015 to a computer network, a telephone line, an antenna, gateway, or any other type of communication link. Computer 1020 may also be coupled to an input device 1010, a proofing device 1040, and/or a press output device 1050. Press output device 1050 may be any printing device such as an offset lithographic production printing press that is capable of providing printed products using presses such as offset lithography, letter press, flexography, gravure and screen printing. In such an embodiment, data may be transferred to and/or received from proofing device 1040 and/or press output device 1050 to provide automated data transfer for running a print production job.

For example, although traditional systems utilize computers that are currently standalone from a printing device and CTP platemaking devices that are standalone from the printing device, the invention also contemplates the use of networked systems that incorporate modem data processing and transfer capabilities, and where these adjusted values may automatically be electronically provided to any CTP platemaking device now known or developed in the future. As one example, direct imaging methods may be used to rewrite cylinders while on the press output device. In addition, input device 1010 such as a densitometer may also have an interface to the system.

Computer 1020 may be a general or a specific purpose computer and may include a processor 1022, a memory 1024, which may include random access memory (RAM) and read only memory (ROM). Computer 1020 may be used to execute one or more system admixture compensation applications 1026 that may be stored in memory 1024 and/or an input/output device 1012. Results may be displayed using a display 1016 and/or stored in input/output device 1012, which may be any suitable storage medium. Data processing may be performed, alternatively or in addition, using special purpose digital circuitry contained either in computer 1020 or in a separate device. Such dedicated digital circuitry may include, for example, application-specific integrated circuitry (ASIC), state machines, fuzzy logic, as well as other conventional circuitry. Computer 1020 may be adapted to execute any of the well-known MS-DOS, PC-DOS, OS2, UNIX, MAC-OS, and Windows operating systems or other operating systems including unconventional operating systems.

Input device 1010 may be a color density measurement device such as a spectrophotometer, densitometer, scanner, or any other device operable to provide density values. Alternatively, color density measurements can be performed manually by providing values with, for example, a scanner, spectrophotometer, or densitometer and then by inputting the resulting measurements using a keyboard 1014 or other means.

Additional input/output devices can be included for reading and storing files and for communication. No particular type hardware or software platform is required for carrying out the present invention, so long as it is capable of executing the processes herein described. Alternatively, in place of computer 1020, the present invention can be programmed for execution on or in conjunction with a network of computers, including a system accessible via the Internet, such as on a computer or server computer which executes the programs and/or stores data files. For example, adjustments may be provided to computer 1020 in electronic form using a floppy disk, communication link 1015, or a combination of both.

A production print job may then be run using press output device 1050.

The methods of FIGURES 5 and 7-8 may be performed on the computer. These methods may be performed using a variety of logical or functional configurations, and may be performed in multiple or single steps. These methods may also omit various steps, depending on the embodiment. In addition, each of the methods may include additional error checking and/or processing steps. These methods may utilize any language, including object-oriented, FORTRAN, C, JAVA, and other languages, and in a particular embodiment may be written in a high-level language such as Clipper. These methods may be stored in machine-readable form on CD-ROM, magnetic disk, or other media, are accessible via the Internet, or are downloadable for input into a computer such as that illustrated in FIGURE 10.

Color density measurements may be used to permit adjustment of a printing press to a proof of a Printing Adjustment Data Form ("PADF"). The invention contemplates the use of a variety of printing or press output devices as shown in FIGURE 25 that are capable of providing printed products using presses in such processes as offset lithography, letter press, gravure, flexography, and screen printing, and with various lithographic processes in development such as waterless lithography, printing with single fluid water-based inks, and plateless digital offset, and in some aspects, with electrophotographic, thermal, and inkjet printing processes. Various aspects of the invention may be used with some or all of these press output devices.

Color densities of any measurement sample are usually provided using four measurement channels: C, M, Y, and V.

C, M, Y, and V represent the following:

C = description of the capacity of a RM/CRS to absorb the red wavelength region of the color spectrum which is complemented by the Cyan ink color;

M = description of the capacity of a RM/CRS to absorb the green wavelength region of the color spectrum which is complemented by the Magenta ink color;

Y = description of the capacity of a RM/CRS to absorb the blue wavelength region of the color spectrum which is complemented by the Yellow ink color;

V = description of the CMY color density values translated to an achromatic (i.e., gray) value which is primarily used to describe the Black ink color.

Solid density refers to a set of CMYV density measurements taken from a solid, or non-screened, area of an image, using a spectrophotometer, densitometer, scanner, or other color density measurement device. Among C, M, and Y, major density refers to the density measurement of a color sample that is the highest value from among C, M, and Y, and include 'pure' colors C, M, and Y. For the V channel, the major density refers to the density measurement taken solely from the V channel.

The abbreviations C, M, Y, and K may be used to identify the four traditional process colors used in printing for things such as inks, plates, films, and file channels. These four colors are Cyan, Magenta, Yellow, and BlacK, respectively and measurements for C, M, Y and K are taken from the C, M, Y and V measurements as discussed above. While the term "ink" is used in this description, the invention contemplates using other methods for delivering colorants in the process of printing such as, but not limited to, toners and dyes.

Referring now to FIGURE 11, there is shown an example of a flow diagram for a printing adjustment method in accordance with the teachings of the present invention. The method provides generally for bringing solid densities measured from press profile data into concurrence with solid densities measured from proofing device profile data, and then performing calculations to provide adjustment values to be used in a print production job. These calculations include calculating tonal, or screened, densities for the press profile data that may be subsequently compared to tonal densities produced by a proofing device. This comparison facilitates precise calculation of one-dimensional transformation data that may be used for each of the four colors C, M, Y, and K to provide tonal adjustments in response to the adjustments in solid densities. These adjustments in solid densities may be made by, for example, adjusting ink-film thickness. The method also provides for various adjustments to be made during press make-ready procedures, press check procedures, and from time to time as desired during a production run. These adjustments provide objective data that may allow higher quality control over the appearance and fidelity with which a production print job is produced using originally-intended density values to be maintained.

It may be illustrative to describe nine types of solid densities that are referred to while discussing particular embodiments of the present invention. All of these aimpoints may be adjusted to accommodate changes, modifications or enhancements in technology:

Commercial Offset Lithography industry's general practice Targeted Solid Major Density Aimpoints as published by GRACoL 4.0 2000, Copyright ©2000, Graphic Communications Association, as per TABLE XIII.

TABLE XIII

Targeted Solid Major Density Aimpoints*

| Paper/Substrate | C | M | Y | K |
|---|---|---|---|---|
| Grades 1 and 2 premium gloss/dull coated | 1.40 | 1.50 | 1.05 | 1.70 |
| Grades 1 and 2 premium matte coated | 1.30 | 1.40 | 1.00 | 1.60 |
| Premium text and cover (smooth) | 1.15 | 1.15 | .90 | 1.30 |
| Grades 3 and 5 coated** | 1.30 | 1.40 | 1.00 | 1.60 |
| Supercal SCA | 1.25 | 1.35 | 1.00 | 1.50 |
| Supercal SCB/SCC | 1.10 | 1.15 | .95 | 1.40 |
| Uncoated | 1.00 | 1.12 | .95 | 1.25 |
| Newsprint | .90 | .90 | .85 | 1.05 |
| Newsprint (heatset) | 1.08 | 1.15 | .95 | 1.20 |

*Values are Status-T density, absolute (paper included) **Same as SWOP® printing production guidelines

The following densities are expressed as "-Paper", or "-P", which represents a subtracted optical density value of a paper/base substrate from a density value of a color sample.

1. Proofing Device Profile's Solid Major Densities-P refer to solid major densities of generally accepted proofing systems currently available that fall close in proximity to those "Grades 3 and 5 coated" Aimpoints referred to above, or C=1.30, M=1.40, Y=1.00, and K=1.60. Selected values are measured from data in a proof as "Proof Group #2 data" as defined below and are included in a Proofing Device Profile as defined below.
2. PADF Low-Level Solid Major Density-P Aimpoints refer to a first set of targeted densities, which may be considered "lower-than-ideal" for a production job. In a particular embodiment, the PADF low-level Solid Major Density-P Aimpoints are 1.0, 1.1, 0.65, and 1.35 for C, M, Y, and K, respectively.
3. PADF Mid-Level Solid Major Density-P Aimpoints refer to a second set of targeted densities, which may be considered "ideal" for a production job. In a particular embodiment, the PADF mid-level Solid Major Density-P Aimpoints are 1.25, 1.35, 0.90, and 1.60 for C, M, Y, and K, respectively.
4. PADF High-Level Solid Major Density-P Aimpoints refer to a third set of targeted densities which may be considered "higher-than-ideal" for a production job. In a particular embodiment, the PADF high-level Solid Major Density-P Aimpoints are 1.50, 1.60, 1.15, and 1.85 for C, M, Y, and K, respectively.
5. Press Profile's Solid Major Density-P Aimpoints refer to another set of targeted densities. In a particular embodiment, they reflect an approximate average of the industry's current practices based on the utilization of the following substrates; Grades 1 and 2 premium gloss/dull coated, Grades 1 and 2 premium matte coated, Grades 3 and 5 coated, and Supercal SCA, to provide the following values: C=1.25, M=1.35, Y=.90, and K=1.60. In order to accommodate lower solid density aimpoints corresponding to other substrates, other lower solid density aimpoints may be adopted, which may then be used in accordance with teachings of the invention. However, currently, proofing systems are not generally available to accommodate these lower density aimpoints.
6. Press Profile's Actual Solid Major Densities-P refer to selected density measurements of the solid, or non-screened, areas (i.e., 100% control set points) from a Press Profile. In a particular embodiment, they may be an average or other statistical representation of other measured values, and may be C=1.25 +-.07; M=1.35 +-.07; Y=.90 +-.07; and K=1.60 +-.07. The benefits of providing variable solid densities across a PADF include the ability to record actual densities that closely approximate the targeted densities. These values are measured from data in a print sheet as "Press Group #2 data" as defined below and are included in a Press Profile as defined below.
7. Press Profile's Adjusted Solid Major Densities-P refer to values for *solid* densities that may be used to impose adjustment on the actual *tonal,* or screened, major densities of a Press Profile. In this description, values that may be used are C=1.25 +-.15; M=1.35 +-.15; Y=.90 +-.15; K=1.60 +-.15. These values represent the adjustment of a Press Profile's Actual Solid Major Densities-P to concur with a Proofing Device Profile's Solid Major Densities-P. In a particular embodiment, tonal adjustments may be made by multiplying an extent of solid density adjustment multiplied by a slope of a linear regression equation determined from Press Group #1 that is obtained from a Press Profile.
8. Make-Ready Solid Major Density-P Aimpoints refer to values adopted from solid major densities of generally accepted proofing systems currently available that fall close in proximity to Aimpoints referred to in item 1. Selected values may be measured from data in an improved press make-ready procedure as defined below and may provide guidance as to whether, and to what extent, ink fountain zone controls may be adjusted. These aimpoints may also be used to monitor values during production or press runs. For example, during make-ready procedures these aimpoints may be used to adjust solid major densities to a Proofing Device Profile. Then, during press check and at various times throughout a production run, measurements may be taken and compared with these aimpoints, to check for fluctuations and provide objective values to aid in decision-making.

In reference to screened areas, traditional industry guidelines unfortunately refer solely to apparent dot size or dot gain, which are values that are relative to a solid density measurement, rather than referring to any tonal densities. The invention provides the advantage of measuring and utilizing, in addition to the foregoing solid density values, a Press Profile's Actual Tonal Major Densities-P, which may be used to provide a Press Profile's Adjusted Tonal Major Densities-P. These values may promote more precise matching of all of the densities for a print sheet to a proof.

The method begins at step 1102, where a Proofing Device Profile may be created that represents originally-intended color density values. At step 2104, a Press Profile may be created for the printing press, using intentional variations in density. Examples of methods for creating a Proofing Device Profile and a Press Profile are discussed in further detail in conjunction with FIGURES 13 and 14, respectively. From step 2104, the method proceeds to step 2106, where a press run layout is prepared. In step 2106, a Press Color Bar may be added to the press run layout. The Press Color Bar includes a plurality of color samples, some of which may be used to provide measurements and adjustments, and others which may be used indirectly as visual aids. The Press Color Bar also may contain additional identifying and position marking text, some of which may be used in a Press Make-Ready phase of production. One example of a Press Color Bar that may be used in accordance with the invention is discussed in further detail in conjunction with FIGURES 16A and 16B.

Then, at step 1108, one-dimensional ("1D") Transformation data is created in response to a comparison of color density deviations or differences between the Proofing Device Profile and the Press Profile. The 1D Transformation Data may then be applied to data to perform the production print job, thus providing densities within press output data that more closely correspond to those within a proof, or that provide an appearance that more accurately corresponds to that of the proof. 1D Transformation Data may be stored and/or used to adjust data in a computer file that is used to create CTP plates. Although this description refers to CTP plates or CTP technology for convenience, the invention also contemplates the use of methods other than CTP plates that may be used to print a production job such as direct imaging (e.g., direct computer-to-cylinder master imaging), the use of interim films, and others as they become available.

Once the 1D Transformation Data has been determined, it may then be applied to a production run image of the printing press that will more closely approximate a proof of the production run image than if the 1D Transformation Data had not been applied. For example, each of the screened or tonal percent dot values (e.g., 90%, 75%, 50%, 25%, 10%, 5%, and any other percentage dot value between 100% and 0.0%) for each of CMYK may be adjusted using the 1D Transformation Data. This adjustment provides adjusted percent dot values so that color density values within the press output data provide an appearance that approximately corresponds to the appearance of color density values of the proof. In other words, a production image printed with these adjusted percent dot values will have color density values that more closely approximate the originally-intended color densities of a proof of the production image. This process provides more accurate printing than conventional systems, is substantially substrate-influence-independent, and may use several proofing devices. Proofing devices as illustrated in FIGURE 25 include, but are not limited to a variety of imaging devices such as ink-jet or thermal printers, and half-tone printing devices such as Waterproof® by DuPoint, Matchprint™ by Imation, ColorArt by Fuji, or Approval by Kodak. These devices may use a variety of methods to produce a proof on a substrate, including interim film and direct digital output. One example of 1D Transformation Data that may be applied to a production print job is illustrated below:

TABLE XIV

| One-Dimensional Transformation Data Examples | | | | |
|---|---|---|---|---|
| | Percent Dot Adjustments | | | |
| Control Set Point | Cyan | Magenta | Yellow | Black |
| 90% | -6.59 | -5.41 | +3.24 | -.43 |
| 75% | -6.73 | -3.16 | +3.70 | -.47 |
| 50% | -3.54 | +1.32 | +1.83 | -.03 |
| 25% | +.15 | +1.50 | +1.15 | +1.37 |
| 10% | -.33 | -.56 | +1.50 | +.73 |
| 5% | -.25 | -.45 | +1.16 | +.15 |

For example, a Cyan 90% control set point may be adjusted downward -6.59 percent to obtain an adjusted value of 83.41%, resulting in a lower (adjusted) color density of the Cyan 90% control set point. These adjustments may be made by, for example, providing the adjustment or the adjusted value to one of a number of well-known computer programs used to create CTP plates or film negatives or positives. These adjustments may be applied to data to be used to print on the printing press adjusted density values that approximately correspond to intended density values. For example, these adjustments may be saved into an adjustments file, applied to an existing data file, applied on-the-fly as the production print job is performed, or a combination of the above. FIGURES 19-24 illustrate methods that may be used in the process of providing ID Transformation Data.

FIGURE 12 illustrates an example of a PADF that may be used in accordance with teachings of the present invention. The PADF may be used to provide a profile of information that may be used to more accurately define the output of a printing press and/or a proofing device. For example, color density measurement data of a PADF that is printed by a printing press (the "Press Profile") may be compared to color density measurements taken from a PADF that is output by a proofing device (the "Proofing Device Profile"). Adjustments may then be made in response to the comparison so that the printing press' output will more closely match the output of the proofing device.

The PADF includes a plurality of color control areas, each of which includes a region of solid color density (i.e., 100 percent dot or solid region) and one or more screened, or tonal, regions (e.g., 5, 10, 25, 50, 75, 90 percent dot) for each of CMYK. In a particular embodiment, a PADF includes a plurality of color control areas that are each in the form of a control strip 1201-1221. Each of control strips 1201-1221 includes 29 control set points 1230-1258, which includes a 0% dot control set point (i.e., no ink applied to the substrate) 1230, and control set points 1231, 1238, 1245, and 1252 that represent solid (i.e., 100% dot) C, M, Y, and K. In addition, each control strip 1201-1221 also includes 5, 10, 25, 50, 75, and 90 percent dot control set points for each of CMYK. Of course, other predetermined percent dot values may be established as needed. In a particular embodiment, each of the printed control set points 1230-1258 may than measure at least 3 mm across so that density values may be accurately measured. These shapes and sizes of these control set points may vary according to the application, and their size may be reduced as technology improves. As one example, they may be regularly-shaped, such as a square or circle, or irregularly shaped.

Each of 29-sample control strips 1201-1221 includes control set points 1230-1258, which represent the following predetermined percent dot values for CMYK:

TABLE XV

| Percent Dot Values | | | | | | | | | | | |
|---|---|---|---|---|---|---|---|---|---|---|---|
| 1230 | | 0% | | | | | | | | | |
| 1231 | C | 100% | 1238 | M | 100% | 1245 | Y | 100% | 1252 | K | 100% |
| 1232 | C | 90% | 1239 | M | 90% | 1246 | Y | 90% | 1253 | K | 90% |
| 1233 | C | 75% | 1240 | M | 75% | 1247 | Y | 75% | 1254 | K | 75% |
| 1234 | C | 50% | 1241 | M | 50% | 1248 | Y | 50% | 1255 | K | 50% |
| 1235 | C | 25% | 1242 | M | 25% | 1249 | Y | 25% | 1256 | K | 25% |
| 1236 | C | 10% | 1243 | M | 10% | 1250 | Y | 10% | 1257 | K | 10% |
| 1237 | C | 5% | 1244 | M | 5% | 1251 | Y | 5% | 1258 | K | 5% |

In general, the PADF may be used to quantify the printing characteristics of a printing press and peripheral printing conditions' printing characteristics, and may be used in offset printing processes on coated papers with a whiteness/brightness level to match the most likely anticipated production paper to be utilized. The PADF is run on the printing press with ink film thickness set to vary from a lower value on a first side 1260 of the PADF and gradually increasing to a larger value to a second side 1261 of the PADF; thus, when the PADF is printed, the color density measurements of the 29-sample control strips toward first side 1260 of the form will tend to be less than those on second side 1261. In other words, color density measurements are intentionally increased to a predetermined amount from first side 1260 to second side 1261. In a particular embodiment, these measurements may vary as a function of increasing ink film thickness and/or tonal reproduction characteristics of the printing device (including printing press and peripheral printing conditions' printing characteristics). In a particular embodiment, the color density measurements increase from first side 1260 to second side 1261 by using substantially linear transitions. For example, a PADF with a distance between first side 1260 to second side 1261 of 22 inches may include a total density variation across all four colors C, M, Y and K of 0.50. These density values include the PADF Low-Level, Mid-Level, and High-Level Solid Major Denisty Aimpoints 1278, 1280, and 1282.

The PADF may also include a control perimeter, which in a particular embodiment includes a four-color CMYK color strip 1274, and/or text that represents PADF Low-Level, Mid-Level, and High-Level Solid Major Density Aimpoints 1278, 1280, and 1282, respectively. Four-color CMYK color strip 1274 may be used to determine if the printing press is meeting the PADF Low-Level Solid Major Density Aimpoints 1278, PADF Mid-Level Solid Major Density Aimpoints 1280, and PADF High-Level Solid Major Density Aimpoints 1282, as described in more detail in FIGURE 15. The PADF may be provided in one of many electronic data formats and may be printed using a proofing device and/or a printing press. One such format may be a digital EPS computer graphics file format that may be used to create four CTP CMYK plates representing the PADF.

Although control set points 1230-1258 are set at 0, 5, 10, 25, 50, 75, 90, and 100 percent dot in a preferred embodiment, alternative control set point percent dot values may be established as needed. Current 8-bit pixel depth digital imaging provides for a total of 256 percent dot gradations from 100% dot (i.e., solid area) to 0% dot (i.e., substrate); therefore, using 8-bit pixel depth digital imaging permits 0.4% between successive percent dot gradations even when less than the 256 potential gradations are used as control set points. In a particular embodiment, interpolation may be used to calculate an adjustment to be applied to each of the 256 percent dot gradations. These samples may be referenced visually and by instrument measurement, which facilitates employment of quality control, statistical process control, and ISO 9000 certification required procedures. Also in a particular embodiment, the PADF may include a 29-sample color strip 1274 rather than or in addition to 29-sample control strips 1201-1221. Such an embodiment also provides varying density measurements between first side 1260 and second side 1261 for all solid and tonal control set points that are described above.

FIGURE 13 is an example of a method for creating a Proofing Device Profile. A Proofing Device Profile may be created by first preparing a PADF for proofing in step 1302. This step may include, for example, creation of CMYK film negatives or positives from a PADF graphics computer file. In step 1304, the PADF proof may be output by a proofing device at predetermined calibrations, which in a preferred embodiment include the proofing system manufacturer's specifications. This proof may be created from the negatives or positives or created directly as digital proof data, and is not printed using variable ink or colorant film thickness. In step 1306, the color density of each control set point 1230 - 1258 for some or all of control strips 1201-1221 of the PADF output by the proofing device is measured as Proof Group No. 2 Data. For example, in a particular embodiment, the color densities of each control set point 1230-1258 for a selected number (e.g., eight) of control strips 1201-1222 may be measured. Proof Group No. 2 Data may then be provided as a statistical representation, such as an average, of these selected measurements. This measurement data provides the Proofing Device Profile.

FIGURE 14 is an example of a method for creating a Press Profile. Method 400 begins when a PADF is prepared for printing at step 1402. The overall dimensions of the PADF may be modified and the positions of one or more of control strips 1201-1221 may be reset as necessary to correspond with the maximum print area and the locations of and spacing between the ink fountain zone controls of the printing press to be adjusted. For example, one or more of control strips 1201-1221 in the PADF may be laterally repositioned so that the positions of the one or more of the strips may be matched with the center point position of a press' ink fountain zone control. Such repositioning may be advantageous because, among other things, it may permit enhanced precision in the control of the ink film thickness that subsequently controls the solid ink density for each control strip. Such precision and control allows more accurate comparison of a Proofing Device Profile and a Press Profile, and thus more accurate matching of the appearance of a press output to that of a proof.

After preparation of the PADF at step 1402, the method proceeds to step 1404, where computer-to-plate ("CTP") plates for the PADF are created. For example, in a particular embodiment, creation of the CTP plates of the PADF includes exposure of the CTP plates images by laser radiant energy modulated by the contents of the computer file containing data representing the PADF. In step 1406, a printing press run of the PADF is performed using the CTP plates created at step 1404. One example of a method of performing a printing press run is discussed in further detail in conjunction with FIGURE 15.

In step 1408, PADF sheets printed by the printing press are selected for use in gathering data in later steps of press profile creation. One method for selecting PADF sheets includes selecting a plurality of sequential PADF sheet samples from approximately the center of a stack of sheets printed as discussed in conjunction with step 1514. This plurality of selected sequential sheets may vary according to the application and may be, for example, twenty-five (25). Then, a subset (for example, nine (9)) of these sequential selected sheets may be culled as designated sheet samples. The remaining sheets (in this case, sixteen (16)) may then be saved in case one of the culled sheets is damaged, and the designated sheet samples may then be identified. For example, these sheet samples may be labeled as "PADF sheet sample 1 of 9" - "PADF sheet sample 9 of 9" and may be later used in composition of the Press Profile.

In step 1410, Press Group No. 1 and Press Group No. 2 data may be gathered from the ten PADF sheets printed on the printing press. Press Group No. 1 data and Press Group No. 2 data may be gathered in the same step or different steps. One example of a method for gathering of Press Group No. 1 data includes measuring and recording actual color densities of control set points 1230-1258 (0, 5, 10, 25, 50, 75, 90, 100 percent dot values) for all control strips 1201-1221 of the PADF sheet designated "PADF sheet sample 1 of 9" to create Press Group No. 1 data. Then, the color densities of selected control set points 1230-1258 for the remaining designated PADF sheet samples may be measured and recorded to obtain Press Group No. 2 data. One example of a method for gathering Press Group No. 2 data is discussed in further detail in conjunction with FIGURE 18.

Press Group No. 1 data and Press Group No. 2 data may also be gathered using a variety of other methods. For example, all of the color densities of control set points 1230-1258 for all of control strips 1201-1221 for any number of selected sequential sheets may be measured. Press Group No. 1 Data may then be provided by averaging the color densities measured for each control strip 1201-1221 from all of the sequential sheets, resulting in 21 sets of control set points 1230-1258. Similarly, the color densities of selected control set points 1230-1258 from all of these sequential sheets may be measured and recorded as Group No. 2 Data as discussed in further detail in conjunction with FIGURE 18.

FIGURE 15 is an example of a method for performing a printing press run of a PADF that represents in more detail step 1406 of FIGURE 14. In step 1504, a press check may be performed. For example, enough sheets may be printed to ensure, among other things, irregularities are minimized and proper ink and water balances are maintained. In step 1506, PADF sheet samples from the press may be measured at random to determine whether selected original color density values, which in a particular embodiment include PADF Low-Level Solid Major Density-P Aimpoints 1278, PADF Mid-Level Solid Major Density-P Aimpoints 1280, and PADF High-Level Solid Major Density-P Aimpoints 1282, are being met for each of CMYK. These measurements may be, for example, measurements of color density performed using a densitometer, spectrophotometer, scanner, or other device for measuring color density.

A determination then may be made in step 1508 as to whether the PADF Low-Level Solid Major Density Aimpoints, PADF Mid-Level Solid Major Density Aimpoints, and PADF High-Level Solid Major Density Aimpoints are being met (i.e., the printing press is printing the PADF at these Aimpoints) for Cyan, Magenta, Yellow, and Black. If it is determined that any of these Aimpoints is not being met by the press, the press' ink fountain zone controls may be adjusted as appropriate at step 1510. From step 1510, the method returns to step 1504.

If the PADF Low-Level, Mid-Level, and High-Level Solid Major Density Aimpoints for each of Cyan, Magenta, Yellow, and Black are all being met, the method proceeds to step 1512. In step 1512, a determination is made whether the transitions between the PADF low-level and mid-level PADF Solid Major Density Aimpoints and the transition between the mid-level and the high-level PADF Solid Major Density Aimpoints for each of CMYK are essentially linear. The determination may be made, for example, manually by a user who reviews the solid major density measurements; however, this determination could also be made by a computer.

If, at step 1512, not all of the transitions are essentially linear, the method proceeds to step 1510, in which the press' ink fountain control keys may be adjusted as appropriate. From step 1510, the method returns to step 1504. On the other hand, if these transitions are all essentially linear, the method proceeds to step 1514, where a number of sheets of the PADF are run on the printing press. The number of sheets may vary according to the application and may be approximately 200 sheets.

Other methods of performing a printing press run of the PADF and collecting data therefrom may also be used. For example, the PADF run may be separated into two or more sessions. For example, in a first session, the printing press could be set to apply a maximum ink film thickness across the PADF, and then the press' ink supply could be shut off completely and the press allowed to continue to operate, successively starving the PADF of ink as the press' ink train is depleted. When the ink film thickness approaches a designated low-level color density aimpoint, the printing run of the PADF would be complete. Thereafter, PADF sheet samples could be measured to find those samples containing different ink film thicknesses in incremental progression between high and low-level PADF Aimpoints. Those samples meeting predetermined criteria for color density could be culled, and color density measurements of the culled sheets' control set points taken. In a second session, the PADF could be printed at an approximately mid-level ink film thickness approximately evenly across the PADF and a predetermined number of PADFs culled in sequential order from this printing press session. Color density measurements could then be taken of predetermined control set points of the culled sheets.

FIGURE 16A is an example of a Press Color Bar that may be used in accordance with teachings of the present invention. Press Color Bar 1600 may be included on every press run layout for every print production press run. Such an implementation includes the advantage of allowing improved press make-ready procedures and improved press check procedures, each of which are efficient, fast, and accurate, by providing tools for press operators that would otherwise not be available with the use of conventional systems.

Press Color Bar 1600 includes a plurality of color samples that may be divided into three distinct groups. In this embodiment, the three distinct groups of samples may be spaced incrementally across the color bar in two rows across the width of a press, which is typically approximately 40 inches. FIGURE 16A illustrates a continuation of these two rows by a series of arrows 1615. For example, in an embodiment adapted for use with a 40-inch press, these groups include four Linear Segments 1601-1604, four Transformed Segments 1600A-1600D, and forty-one Make-Ready Segments 1610. In this example, a centerpoint 1650 denotes the centerpoint of Press Color Bar 1600, which corresponds to Make-Ready Segment Identifier or center 50. Press Color Bar 1600 may be provided in one of many electronic data formats such as a digital EPS computer graphics file format. As one example, this file format may include two or more linked computer files, where each is composed of four, CMYK channels. Although not illustrated in FIGURE 16, Press Color Bar 1600 may also include additional segments. For example, an additional row could be added where desired to provide one to four additional colors such as a 5th, 6th, 7th, and/or 8th for use in five- to eight-color printing. These additional colors may be used in applications where it may be advantageous to print large flat areas such as backgrounds by using a single ink, rather than using a color combination of C, M, Y, and/or K.

Linear Segments 1601-1604 may be contained in the first file, and may be positioned as a first row that contains 17 one-dimensional (1D) color samples, or 'pure' C, M, Y, and K colorants which do not overlap one another, with solid and screened areas that may be used in accordance with the present invention. For example, referring to FIGURE 16B, each of Linear Segments 1601-1604 includes control set points 01-16, which correspond to solid and screened color sample values (e.g., 100, 75, 50 and 25 percent dot values) for each of C, M, Y, and K, and a sample 00 which has no ink. Transformed Segments 1600A-1600D may be contained in the second file, and may be positioned as a portion of the first row that contains 17 additional 1D color samples with solid and screened areas that may be used in accordance with the present invention. Each of Transformed Segments 1600A-1600D includes control set points T01-T16, which correspond to solid and screened color sample values (e.g., 100, 75, 50 and 25 percent dot values for each of C, M, Y, and K) and a sample T00 which has no ink.

Make-Ready Segments 1610 may be identified and marked for position with identifiers (e.g., MR70 through MR30) sequentially from a first side 1698 to a second side 1699, and may be positioned as a second of the two rows. Make-Ready Segments 1610 include four 1D color samples with solid areas of C, M, Y, and K that may be used in accordance with the invention. One example of a method that may use one or more Make-Ready Segments 1610 is discussed in further detail in conjunction with FIGURE 16B. Linear Segments 1601-1604 and Make-Ready Segments 1610 may not receive any transformation at the plate making phase of production; thus, the initial file values may be retained as the plates are made. On the other hand, Transformed Segments 1600A-1600D may receive the same 1D Transformations that are performed on the job during the press production run. Alternatively, where transformation is applied to values measured in Transformed Segments 1600A-1600D, these transformations may be stored in a separate file and used as the plates are made.

During the press check phase of production, Press Color Bar 1600 may also be used to provide objective data that may be used to determine what adjustments should be made when the appearances of sheets produced by the press (press sheets) are unacceptable. A combination of subjective data and objective data provides an advantage over the subjective data alone that must be interpreted by a pressman into adjustment combinations required for CMYK tonal reproduction. Subjective data is usually expressed in non-technical terms where, for example, a print buyer describes a print relative to a proof appearance using terms such as, "The browns are too muddy", or "The greens have turned olive".

For example, density values of color samples within Transformed Segments 1600A-1600D may be measured to provide collected transformed data, which may then be compared to a Proofing Device Profile corresponding to the print job to create compared transformed data. Compared transformed data describes density variations between the press sheets and tonal reproduction densities in data output by a proofing device (a proof) and may be used to make decisions as to whether, and to what extent, adjustments are required on any or all combinations of CMYK tonal reproductions. One method for making these decisions is discussed in conjunction with FIGURE 23.

In addition, density values of color samples within Linear Segments 1601-1604 may be measured to create collected linear data, which may then be compared to Group No. 2 Data in a Press Profile corresponding to the press used for this particular production run to create compared linear data. Compared linear data describes density variations between the press sheets and tonal reproduction densities in the Press Profile, and may be used to make decisions on what adjustments are required on any or all combinations of CMYK tonal reproductions, and the degree of such adjustments. One method for making these decisions is discussed in conjunction with FIGURE 24.

Such information regarding these density variations may then be interpreted by a skilled pressman to bring the press sheet into appearance acceptability. Such an advantage may reduce the number of experimental iterations that would otherwise be required to perform adjustments in the production run to support the print buyers' opinions as to whether the press sheet appearance is acceptable. Moreover, where visual or subjective assessment does not concur with density variations, such a method may indicate that extraneous problems may be present.

Compared transformed data and compared linear data may then, in a particular embodiment, be used to prepare an Interim Press Profile Adjustment (IPPA). An IPPA may then be used to carry out some or all of the adjustments described above. In a particular embodiment, an IPPA may be a table of density adjustment values that may be used and/or assigned to a specific Press Profile in order to adjust that Press Profile, as described in FIGURES 19 and 20. For example, these adjustments may be used to account for, and reduce, the impact of drift in the printing characteristics of the press that may have occurred since the Press Profile was created, and/or for other day-to-day fluctuations in printing characteristics. These fluctuations include, but are not limited to, variations due to paper/base substrates, inks, plates, fountain solutions, image transferring cylinder blankets, press mechanical settings and ambient moisture/temperature conditions, which may change batch-to-batch or day-to-day. Such an advantage reduces variations due to these fluctuations, which are typically not practical to correct before running each production job.

One example of an IPPA that may be used is illustrated below in TABLE XVI.

TABLE XVI

| Control Set Point | Cyan | Magenta | Yellow | Black |
|---|---|---|---|---|
| 90% | .016 | -.04 | .012 | .02 |
| 75% | .040 | -.10 | .030 | .05 |
| 50% | .030 | -.05 | .030 | .04 |
| 25% | .010 | -.03 | .020 | .01 |
| 10% | .004 | -.012 | .008 | .004 |
| 5% | .002 | -.006 | .004 | .002 |

For example, a Cyan density value of 1.15 of a Press Profile at a 90% control set point may be adjusted upward .

016 to obtain an adjusted value of 1.166 density, resulting in, among other things, a higher adjusted density value for the Cyan 90% control set point. These adjustments may be made by, for example, providing the adjustment or the adjusted value to be applied to data from the Press Profile. These adjustments or adjusted values may then be used to create 1D Transformation Data that reflects the IPPA values.

FIGURE 16B graphically illustrates a Press Color Bar that may be used in accordance with teachings of the present invention. The use of Make-Ready Segments 1610 may provide advantages over traditional systems. Make-Ready Segments 1610 are spaced or sized at regular intervals, and may also be used to provide a make-ready procedure that is substantially independent of the press on which the procedure is run. FIGURE 16B illustrates the width of Make-Ready Segment 1605. As one example, in a particular embodiment, these Make-Ready Segments may be spaced at 25mm intervals, or have widths of 25 mm. Make-Ready Segments also include offset positive or negative fractions of the width of a segment that represent relative portions of Make-Ready Segments. As one example, these offsets represent a distance from each of Make-Ready Segments' MR30-MR70 identifier or center to the center of the color samples C, M, Y and K. These offsets may be used to identify a coordinate at which a density measurement was made from the center of an ink fountain zone control, and which may be used to later provide adjustments to the ink fountain zone control. For example, Make-Ready Segment MR42 (identified in FIGURE 16B as the center or identifier of end segment 1605) includes color samples C, M, Y, and K respectively at offsets 1605D, 1605C, 1605B, and 1605A respectively. Offsets for C, M, Y, and K may have the same fractional value for each of the Make-Ready Segments, and may be represented as a fractional value of the width of the segment. In a particular embodiment, offset 1605A may have a fractional value of -.39, offset 1605B may have a fractional value of -.17, offset 1605C may have a fractional value of +.17, and offset 1605D may have a fractional value of +.39.

During a press make-ready phase of production, some or all of Make-Ready Segments 1610 may be correlated with some or all of the press' ink fountain zone controls. Four examples of press' ink fountain zone controls 1635, 1636, 1645, and 1646, are illustrated in FIGURE 16B near examples of virtual ink fountain zone control numbers (vfcs) 1625 and 1626. Also as illustrated in FIGURE 16B, ink fountain zone control 1636 is in zone 1656, ink fountain zone control 1646 is in zone 1657, and ink fountain zone controls 1635 and 1645 are in zones 1663 and 1664, respectively. Most printing presses utilize a generally linear array of ink fountain zones whose approximate center is either a center of an ink fountain zone, or a border between two zones. Each fountain zone control usually has an identification or position number at approximately the center of each zone that indicates its position across the printing cylinder. The invention may also be used where fountain zone controls are not centered within a zone. An ink fountain zone control may be a spigot, a key, a switch, or other mechanism that may be used to distribute or mete out a desired amount of ink or colorant on a region during printing.

Usually a first sheet off the printing press may be aligned on the press' console by placing one or more centerpoints 1650 as illustrated in FIGURE 16B at the center of the array of ink fountain zone controls (not explicitly shown), which is usually clearly marked on the console's ink fountain control scale. In this embodiment, FIGURE 16B illustrates two Make-Ready segments MR52 and MR42 that are selected as respective end segments 1605 and 1606, and that encompass live copy matter where color directing and adjusting is involved, or the "encompassed segments". The encompassed segments may vary from application to application, and usually include an area with a distribution of colors that are printed on the press, and may be a subset or the entire width of a paper/base substrate. For each of these end segments 1605 and 1606, a corresponding virtual ink fountain zone control 1625 and 1626, respectively, may be assigned. Virtual ink fountain zone controls (vfcs) 1625 and 1626 may be assigned using a relative estimate of distances between actual ink fountain zone controls 1635 and 1645, and ink fountain zone controls 1636 and 1646, respectively. In some applications, these end segments may exactly correspond to a position of an ink fountain zone control on the printing press.

For example, a straight-forward method for interpolating such vfcs may be used. This method may include, for example, a press operator's best estimate of a position of the center of an ink fountain zone of the press as compared to the position of end segments MR42 and MR52. The press operator may then note which two of the ink fountain zone controls correspond to these end segments. In this example, a location of vfc 10.5 is 50% of the distance between ink fountain zone control 10 and ink fountain zone control 11 of the press. Thus, in this example, the press operator may correlate Make-Ready Segment MR42 to a vfc 1625 whose number is 10.5 and similarly, Make-Ready Segment MR52 may be correlated to a vfc 1626 whose number is 18.5. After these two corresponding vfc's are noted for Make-Ready Segments MR42 and MR52, density variations for each of C, M, Y, and K may be noted. Virtual ink fountain zone controls (vfcs) may be calculated for all of the color samples within the encompassed Make-Ready Segments MR42-MR52 using a variety of methods, one of which is discussed in conjunction with FIGURE 17.

Measurements of density values of color samples within Make-Ready Segments 1610 such as Cyan sample 1680 of Segment MR43, may be taken across all or a portion of the width of the encompassed segments in a press run layout. The solid density of each solid C, M, Y, K sample measured on the color bar may then be measured and compared to the Make-Ready Solid Major Density Aimpoints to provide color density variation data. This data may also describe variations across the press run layout that correspond to the press' ink fountain control keys. This data may provide the press operator valuable information about which keys require adjustment and to what degree the adjustment must be made, as discussed in FIGURE 17.

Correlating Make-Ready Segment identifiers to ink fountain zone controls provides a method that may provide an advantage over both traditional as well as recently developed methods by removing the need for taking tedious distance measurements that would be required for these systems. For example, centerpoints 1650 may always be positioned in the center of a press run layout on all production jobs at the prepress phase of production, and then alignment may be done of centerpoint 1650 of the first sheet off the press to the scale on the press' console representative of the array of ink fountain zone controls, designation of end segments may be noted, and correlation of vfcs to end segments may be noted, all in a time that may be less than 30 seconds. This may offer significant time savings and improved accuracy over recently developed methods.

In addition, aspects of the present invention which may offer advantages over other methods include a method for using interpolation using each Make-Ready Segment identifier and offsets 1605A-1605D for each of the colors C, M, Y, and K. Interpolation may be used to determine virtual ink fountain controls and density variations that may be used to adjust ink fountain zone controls according to a desired density such as Make-Ready Solid Major Density Aimpoints. Another aspect includes the designation of live copy matter and use of encompassed segments and end segments, which enables ink fountain zone controls to be adjusted by utilizing measurements taken for the encompassed segments, in this case segments MR42-MR52, by a method such as the one discussed in FIGURE 17.

These aspects of the present invention may reduce or eliminate the need to include distance measurements of the color samples' relation to an exact reference point such as the center of a printing press, and may also significantly reduce the time and resources involved in providing adjustments to ink fountain zone controls that would otherwise be necessary with traditional methods or systems. Such an advantage may increase the speed with which make-ready procedures may be performed, and reduce the chance for operator error. For example, the present invention provides for designating live copy matter, which conserves resources by reducing the requirements that would otherwise be imposed on the press operator to spend time and effort on monitoring and/or adjusting ink fountain zone controls that may not effect the color fidelity of the production print job.

In addition, the present invention also contemplates in some applications as desired the enlargement or reduction of Make-Ready Segments 1610 along the row on an axis between first side 1698 and second side 1699. Because coordinates are not used to designate the position of the color samples on the color bar or the press sheet and because Make-Ready Segments 1610 are regularly sized and the width of each segment does not have to be known, such enlargement or reduction may be performed as desired by, for example, a simple print or other command. This ability to enlarge Make-Ready Segments 1610 as desired may provide the advantage of decreasing the quantity of color measurement samples, which may expedite the make-ready procedure. On the other hand, the ability to reduce the size of Make-Ready Segments 1610 as desired may provide the advantage of increasing the quantity of color measurement samples to create additional data. This additional data may provide finer control in performing adjustments as needed to meet the requirements of the print production job at hand. Changing the sizes of Make-Ready Segments 1610 may be performed dynamically, and although such changes would alter the positions of the samples in Make-Ready Segments 1610 on Press Color Bar 1600, these changes do not alter the methods described. Such flexibility provides for enhanced make-ready procedures that may be dynamically adjusted to provide as much or as little data as necessary, without affecting the methods used. In comparison, a similar change in the position of the samples on, or the size of, the color bars of traditional or recently developed methods would typically require new inputs of distance and/or positional measurements of color samples to provide accurate adjustments to perform make-ready procedures.

Such advantages may also provide an operator valuable information about which keys may require adjustment and if so, the degree of adjustment necessary, and may permit enhanced precision in the control of the ink film thickness, which subsequently controls the solid ink density that may be measured at each control strip. The foregoing advantages may also allow more precise matching of solid, as well as tonal, densities for press output data to a proof, and may allow more precise calculation of adjustment values which may then be used to print a production job whose appearance more accurately matches a proof output. Moreover, these advantages offer simplicity and ease of adjustment of density variations that are independent of and may be used with virtually any printing press, regardless of the distance between the press ink fountain zone controls, the quantity of the zone controls, and the distance from the center of each ink fountain zone control to any reference point, and/or the printing press' dimensions.

FIGURE 17 is an example of a method for performing improved press make-ready procedures as described in FIGURE 19. During this method, ink fountain zone controls may be adjusted to provide an appropriate level of ink on a paper/base substrate.

In step 1702, those Make-Ready Segments that encompass live copy matter, or the encompassed segments, may be selected to be monitored. These Segments include end segments 1605 and 1606 and those Make-Ready Segments encompassed thereby. Each of the encompassed segments may then be correlated to vfc's as discussed above in conjunction with FIGURE 16B. In step 1704, a number of sheets may be printed. Although this number may vary with each application, enough sheets may be printed to ensure, among other things, proper ink and water balance, or that no other irregularities have occurred. In step 1706, one of the sheets printed in step 1704 may be selected, and the selected Press Make-Ready color sample density values may be measured.

In step 1708, make-ready density variation may be calculated for each of these color samples. In a particular embodiment, the make-ready density variation may be represented by the following equation:

$$\begin{aligned}&Make-Ready\ Density\ Variation=\\&Make-Ready\ Solid\ Major\ Density-P\ Aimpoint-\\&(Solid\ Major\ Density-P\ of\ color\ sample)\end{aligned}$$

In step 1710, a vfc number (virtual zone control number) may be calculated to represent a value associated with each color sample. In a particular embodiment, a virtual zone control number may be represented by the equation:

$$\begin{aligned}&Virtual\ Zone\ Control\ Number=Initial\ Virtual\ Zone\ Control\\&+((Current\ Segment-First\ Segment+Color\ Sample\ Offset)\\&*(Number\ of\ Zones/Number\ of\ Segments)),\ where\end{aligned}$$

$$\begin{aligned}&Initial\ Virtual\ Zone\ Control = vfc\ that\\&corresponds\ to\ a\ first\ end\ segment\\&Color\ Sample\ Offset = offset\ positive\ or\ negative\ fraction\ of\ the\ width\ of\ a\ M-R\ segment\\&Number\ of\ Zones = number\ of\ vfc's\ in\ live\ copy\ matter\\&Number\ of\ Segments = number\ of\ encompassed\ segments\ included\\&in\ live\ copy\ matter\end{aligned}$$

An example may be illustrative. Referring to the examples discussed in conjunction with FIGURE 16B, initial virtual zone control equals 10.5; first segment equals 42 and the number of zone controls is 18.5 - 10.5 = 8; and the number of encompassed segments is 52 - 42 = 10. Thus, in this example virtual zone control number equals 10.5 + ((current segment - 42 + color sample offset) * 8/10). The virtual zone control number then may be calculated for each of C, M, Y and K, for each current segment. Thus, here 10 Segments MR42-MR52 correspond to 8 zones (10.5-18.5), a virtual zone control number may be calculated for Cyan sample 1680 as illustrated in Figure 16B as:

$$\begin{aligned}&Each\ segment=\frac{8}{10}\ of\ 1\ zone\\&Cyan\ offset=.39\ of\ 1\ segment\\&Cyan\ sample\ \ 680\ of\ segment\ 43\ is\ 1.39\ segments\\&from\ starting\ point\ or\left(1.39\ x\frac{8}{10}\right)\ 1.112\ zones\\&Starting\ zone\ 10.5+1.112=11.612\end{aligned}$$

Vfc numbers may be similarly calculated for all of the other color samples in encompassed Segments MR42-MR52.

In step 1711, for each ink fountain zone control, a density variation may be calculated using the density values measured for each color sample. For example, an interpolation may be performed between two nearest virtual zone control numbers using the make-ready density variations obtained in step 1708.

$$\begin{aligned}&make-ready\ density\ variation\ for\ an\ ink\ fountain\ zone\ control=\\&(((hvfc-fc)/(hvfc-lvfc))*lvfcdenv)+\\&(((fc-lvfc)/(hvfc-lvfc))*hvfcdenv),\ where\end{aligned}$$

$$\begin{aligned}&fc=ink\ fountain\ zone\ control\ number\\&vfc=virtual\ ink\ fountain\ zone\ control\ number\\&hvfc=virtual\ ink\ fountain\ zone\ control>and\ closest\ to\ fc\\&lvfc=vfc<and\ closest\ to\ fc\\&lvfcdenv=make-ready\ density\ variation\ at\ lvfc\\&hvfcdenv=make-ready\ density\ variation\ at\ hvfc\end{aligned}$$

Using the example above, and assuming a vcf of 11.3 has been assigned for Make-Ready Segment MR43 for illustrative purposes, two nearest virtual zone controls may have values of 10.5 and 11.3. Assuming for illustrative purposes density variations for the color samples corresponding to the two virtual zone controls may be 0.10 and 0.20, respectively, the density variation for ink fountain zone control 21 may be calculated as:

$$\left(\frac{11.3-11}{11.3-10.5}*.10\right)+\left(\frac{11-10.5}{11.3-10.5}*.20\right)=0.0375+0.125=0.1625$$

In step 1712, the method queries whether the make-ready density variations are within desired tolerances. If so, then the method proceeds to step 1906, where Press Check observations are performed. On the other hand, if the make-ready density variations are not within the desired tolerances, in step 1714 an operator may make appropriate adjustments to the fountain key control settings by using the make-ready density variations as a guide to determine the degree of adjustment. For example, the press operator may adjust the press' ink fountain zone control 21 up to increase a resultant ink film density by 0.1625. This adjustment may be performed automatically or manually, and may involve a calculation between the desired increase in density of 0.1625 and a volume increase in ink or colorant to deliver to the press. The method then proceeds to step 1704.

FIGURE 18 is an example of a method for data measuring for a Press Profile which represents in more detail step 1410 of FIGURE 14. In step 1802, Press Group No. 1 data may be used to select sections within control strips 1201-1221 of the PADF whose control set points 1230-1258 most closely approach the Press Profile's Solid Major Density-P Aimpoints for each C, M, Y, and K. These sections may or may not fall within an individual control strip. For example, measurements from the Press Group No. 1 data may indicate that control set point 1231 (C) of a first control strip has a density value of 1.26; control set point 1238 (M) of a second control strip has a density value of 1.33; control set point 1245 (Y) of a third control strip has a density value of 0.92; and control set point 1252 (K) of a fourth control strip has a density value of 1.61. These values most closely approach the Press Profile's Solid Major Density-P Aimpoints for each of C, M, Y, and K as defined in a particular embodiment. The ability to select sections of each of the control strips to more closely approach the Press Profile's Solid Major Density-P Aimpoints facilitates minimizing the mismatch of solid ink densities between a Proofing Device Profile and a Press Profile. In step 1804, these selected sections may then be inspected for imperfections on designated PADF Sheet Samples. In a particular embodiment, these sheet samples may be identified as PADF Sheet Samples 2 of 9 through 9 of 9.

In step 1806, a determination is made whether imperfections were found on any of the selected sections on any of the designated PADF Sheet Samples. If imperfections were found on any of these selected sections, the method proceeds to step 1808, where those sheets in which imperfections were found may be replaced with one of the 15 spare sheets provided in step 1606. From step 1808, the method returns to step 1804. If, at step 806, no imperfections were found on any of these selected sections, the method proceeds to step 1810, where color densities for all control set points 1230-1258 for each of C, M, Y, K on the corresponding respective selected strip sections for C, M, Y, and K on the designated PADF Sheet Samples are measured to provide Press Group No. 2 Data. That is, measurements for control set points 1230-1258 may be taken from the first, second, third, and fourth control strips as noted in the example above.

FIGURE 19 is an example of a method for creating 1D Transformation Data and applying the data to a production press run in accordance with teachings of the present invention. The method begins at step 1902 where 1D Transformation Data is created. One example for creating 1D Transformation Data is described in further detail in conjunction with FIGURES 20-22.

In step 1904, 1D Transformation Data may be applied during creation of production job plates or cylinders, and then in steps 1905 and 1906, press make-ready and press check observations of the production job may be performed. In a particular embodiment, improved press make-ready procedures may be performed in step 1905 in accordance with teachings of the present invention. In step 1908, the method queries whether there are acceptable color fidelity (within general industry practice) between the press sheet and the proof upon visual observation of the press sheet and the proof. If so, in step 1910 the production test run is performed. During the production test run, press make-ready procedures as described in conjunction with FIGURE 17 may also be performed from time to time or where desired to adjust ink fountain controls. If not, in step 1912 print production quality control may be performed using the Proofing Device Profile as a reference to provide density variance data. One method for performing such print production quality control is discussed in conjunction with FIGURE 23.

In step 1914, the method queries whether density variance data supports a visual observation critique that is typically performed by a press operator or buyer. For example, if the measured data for Cyan reveals a -0.05 density variance at a 50% control set point, the visual observation should yield a press sheet that is "weak" in Cyan in comparison to the proof. If not, in step 1916 print production quality control may be performed using the Press Profile as a reference to provide density variance data. One method for performing such print production quality control is discussed in conjunction with FIGURE 24. In step 1918, the method queries whether density variance data supports the visual observation critique. If not, in step 1920, extraneous problems such as, but not limited to, proofing, plate making, and/or ink specifications are searched for. If none are found, the graphic file may require additional prepress color correction, and the method ends.

If density variance data does support the visual observation critique in either of steps 1914 or 1918, in step 1922 density variance data may be used to determine IPPA values. These values may be used to create an IPPA in step 1924, and then the method returns from step 1924 to step 1902. One method for providing IPPA values is discussed in conjunction with FIGURE 16A.

FIGURE 20 is an example of a method for calculating 1D Transformation Data that represents in more detail step 1902. Method 2000 begins at step 2002, in which an average for each control set point in the Press Group No. 2 data gathered in step 1810 is calculated. In a particular embodiment, the greatest and least color density value for each sample may be ignored. In step 2004, the paper's average color density (i.e., an average of measurements for control set points 00) may be subtracted from the averages of all other control set points to provide measurements for Press Profile Actual Solid and Tonal Major Densities-P.

In step 2006, a linear regression analysis may be performed using Press Group No. 1 data to provide a slope that may later be used to adjust Press Profile densities. In a particular embodiment, only those data points within a tolerance such as +/- 0.12 of the Proofing Device Profile's Solid Major Densities-P may be considered. Such data points may provide accurate data where, for example, the density varies a total of 0.50 across the PADF. In other applications, other data points may be considered. Alternatively or in addition, other statistical analyses may be used, including non-linear regression techniques. Where Press No. 1 Data and/or Press No. 2 Data are gathered from all of the press sheets as discussed above in conjunction with FIGURE 14, a regression analysis may consider some or all of this data.

In step 2008, the method queries whether active IPPA values exist for this Press Profile. If so, the method in step 2010 adds adjustment values from the IPPA to the appropriate tonal major densities of the Press Profile, in this case the Press Profile's Actual Tonal Major Densities-P, and then proceeds to 2012. If there is no active IPPA record on file, the method proceeds directly to step 2012 from step 2008. In step 2012, the Press Profile may be adjusted to concur with, or more closely approximate values in, the Proofing Device Profile. For example, the Press Profile's Actual Solid Major Densities-P for each of C, M, Y, and K may be adjusted to more closely approximate the Proofing Device Profile's Solid Major Densities-P for each of C, M, Y and K, respectively. These values are the Press Profile's Adjusted Solid Major Densities-P. Similarly, the Press Profile's Actual Tonal Major Densities-P may be adjusted in response to the Press Profile's Adjusted Solid Major Densities-P. One method for performing these adjustments is discussed in conjunction with FIGURE 21. In step 2014, 1D Transformation values are calculated.

FIGURE 21 is an example of a method for adjusting the Press Profile to more closely approximate values in a Proofing Device Profile that represents in more detail step 2012 of FIGURE 20. This adjustment may be made to tonal major densities of CMYK to correct for differences between the Press Profile Actual Solid Major Densities-P and the Proofing Device Profile's Solid Major Densities-P by adjusting the tonal major densities in proportion to differences between the Press Profile Actual Solid Major Densities-P and the Proofing Device Profile's Solid Major Densities-P.

The method begins in step 2102 where, for each of the Solid or Tonal Major Density-P of each control set point of C, M, Y, and K of Press Group No. 2 data, steps 2106 and 2108 are performed. In step 2104, the Press Profile's Actual Solid Major Density-P is subtracted from the Proofing Device Profile's Solid Major Density-P for that control set point of C, M, Y, and K. This step is performed for all Solid Major Density-P control set points of C, M, Y, and K of Press Group No. 2 Data. In step 2106, the result of the operation at step 2108 is multiplied by the slope of the applicable regression formula derived in step 2006. The method then proceeds to step 2108, in which the result of step 2106 is added to the respective Press Profile's Solid or Tonal Major Density-P value for the control set point to calculate the respective Press Profile Adjusted Major Density-P value for that control set point.

FIGURE 22 is an example of a method for calculating 1D Transformation Data Values that represents in more detail of step 2014. The Transformation Data permit adjustment of the percent dot values of the CTP plate. In this way, the printing press' output (e.g., a second image, which is most often a production run image) is calibrated to the proof so that the color densities of a printed image more closely approximates the color densities of the corresponding proof. The method of FIGURE 22 provides in a preferred embodiment, a process to calculate adjustments to percent dot values, so that the half-tone or tonal color density values of the proof and press more closely match one another.

Method 2200 is performed for each control set point of C, M, Y, and K, and begins at step 2202, where the Press Profile control set point density reading greater than and closest to the Proofing Device Profile's Tonal Major Density-P value for each control set point of each of CMYK is selected.

$$\begin{aligned} a = {} & \textit{Press Profile Adjusted Solid or Tonal} \\ & \textit{or Density} - \textit{P that is} > \textit{and closest to} \\ & \textit{the Proofing Device Profile's Tonal} \\ & \textit{Major Density} - \textit{P value} \end{aligned}$$

In step 2204, the Press Profile control set point density reading less than and closest to the Proofing Device Profile's tonal major density value is selected.

$$\begin{aligned} b = {} & \textit{PressProfileAdjustedSolidorTonalMajorDensity} - \textit{P} \\ & \textit{thatis} < \textit{andclosesttotheProofingDeviceProfile'sTonal} \\ & \textit{MajorDensity} - \textit{Pvalue} \end{aligned}$$

In step 2206, the difference x in color densities between the two values a and b is calculated. In step 2208, the percent dot value associated with the Press Profile control set point selected in step 2202 is subtracted from the percent dot value of the Press Profile control set point selected at step 2204.

$$y = \textit{PercentDotValue}(a) - \textit{PercentDotValue}(b)$$

In step 2210, the result of step 2204 is subtracted from the Proofing Device Profile's Tonal Major Density-P value.

$$z = \textit{ProofingDeviceProfileTonalMajorDensity} - \textit{Pvalue} - b$$

In step 2212, the result of step 2210 is divided by the result of step 2206.

$$w = z / x$$

A screened, or tonal, percent dot adjustment u may be calculated in step 2214 by multiplying w * y:

$$u = w * y$$

In step 2216 a dot size that is required to yield the Proofing Device Profile's Tonal Major Density-P value (the "Required Dot Size") is calculated:

$$Required\,Dot\,Size = Percent\,Dot\,Value(b) + u$$

This data may then be applied to the production print job CTP plate data for each control set point of each CMYK in order to calibrate the printing press, as described in step 1108 of FIGURE 11.

An example may be illustrative. For a Proofing Device Profile's Tonal Major Density-P value of 0.20 having a 25 percent dot value, two Press Profile Adjusted Solid or Tonal Major Density-P values may be selected for the values a and b in steps 2202 and 2204. In this example, a first Press Profile Adjusted Solid or Tonal Major Density-P value of 0.30 that is > and closest to the Proofing Device Profile's Tonal Major Density-P value has a 25 percent dot value provides for a = 1.11. Similarly in this example, a second Press Profile Adjusted Solid or Tonal Major Density-P value of 0.10 that is < and closest to the Proofing Device Profile's Tonal Major Density-P value has a ten percent dot value provides for b = 0.1. Proceeding through steps 2206 - 1216 yields x = 0.2; y = 15 percent; z = 0.1; w = .1/.2 = 0.5; u = 0.5 * 15% = 7.5 percent, and a Required Dot Size of 10 + 7.5 = 17.5 percent.

FIGURE 23 is an example of a method for performing print production quality control using a Proofing Device Profile as a reference, as discussed in step 1912. In step 2302, color samples may be measured (e.g., by providing a density reading) from one or more of the Press Color Bars' Transformed Segments 1600A, B, C, and/or D. This method may be advantageous in providing more control of the solid densities for a Proofing Device Profile than may be possible with conventional systems.

In step 2304, the method calculates a result for each sample, as represented by the value X1 (sample). In a particular embodiment:

$$X1(sample) = average\,Solid\,or\,Tonal\,Major\,Density - P\,(sample)\,of\,multiple\,segments$$

In other words, density values for control set point T-02 may be measured for Transformed Segments 1600A, B, C, and/or D.

In step 2306, a value for each sample, as represented by the value Y1 (sample) may be calculated for the average Major Density -P for the referenced Proofing Device Profile for the control set points corresponding to the tonal and solid color samples (e.g., 100, 75, 50, and 25 percent dot values) of Transformed Segments 1600A, B, C, and/or D. In step 2308, the method calculates density variance data between the Transformed Segments' solid and tonal color samples and the Proofing Device Profile by subtracting Y1 from X1.

FIGURE 24 is an example of a method that may be used to perform print production quality control with a Press Profile as a reference, as described in step 1918 of FIGURE 19. In step 2402, color samples may be measured (e.g., by providing a density reading) from one or more of the Press Color Bars' Linear Segments 1601, 1602, 1603, and/or 1604. In step 2404, the method calculates a resulting average for each sample, as represented by the value X2 (sample). In a particular embodiment,

$$X2(sample) = average\,Solid\,or\,Tonal\,Major\,Density - P(sample)$$

In step 2406, a Press Profile Actual Solid or Tonal Major Density-P value, as represented by the value Y2 (sample), may be calculated using the average Major Density -P for the referenced Press Profile for the Group No. 2 Data control set points corresponding to the tonal and solid color samples (e.g., 100, 75, 50 and 25 percent dot values) of Linear Segments 1601, 1602, 1603, and/or 1604. In step 2408, the Press Profile may be adjusted from Y2 to more closely approximate values in the Proofing Device Profile to yield a value Z2, the Press Profile's Adjusted Solid or Tonal Major Density-P. One method for such adjustment is discussed in conjunction with FIGURE 21. In step 2410, the method calculates density variance data between the Press Profile and the Linear Segments Solid and Tonal color samples by subtracting Z2 from X2.

FIGURE 25 is a block diagram of a printing adjustment system 2500. System 2500 includes a computer 2520 that may be coupled to a number of elements, including a communication link 2515. For example, computer 2520 may be coupled through communication link 2515 to a computer network, a telephone line, an antenna, gateway, or any other type of communication link. Computer 2520 may also be coupled to an input device 2510, a proofing device 2540, and/or a press output device 2550. Press output device 2550 may be any printing device such as an offset lithographic production printing press that is capable of providing printed products using presses such as offset lithography, letter press, flexography, gravure and screen printing. In such an embodiment, data may be transferred to and/or received from proofing device 2540 and/or press output device 2550 to provide automated data transfer for running a print production job.

Computer 2520 may be a general or a specific purpose computer and may include a processor 2522, a memory 2524, which may include random access memory (RAM) and read only memory (ROM). Computer 2520 may be used to execute one or more printing adjustment applications 2526 that may be stored in memory 2524 and/or an input/output device 2512. Results may be displayed using a display 2516 and/or stored in input/output device 2512, which may be any suitable storage medium. Data processing may be performed using special purpose digital circuitry contained either in computer 2520 or in a separate device. Such dedicated digital circuitry may include, for example, application-specific integrated circuitry (ASIC), state machines, fuzzy logic, as well as other conventional circuitry. Computer 2520 may be adapted to execute any of the well-known MS-DOS, PC-DOS, OS2, UNIX, MAC-OS, and Windows operating systems or other operating systems including unconventional operating systems.

Input device 2510 may be a color density measurement device such as a spectrophotometer, densitometer, scanner, or any other device operable to provide density values. Alternatively, color density measurements can be performed manually by providing values with, for example, a scanner, spectrophotometer, or densitometer and then by inputting the resulting measurements using a keyboard 2514 or other means.

Additional input/output devices can be included for reading and storing files and for communication. No particular type hardware or software platform is required for carrying out the present invention, so long as it is capable of executing the processes herein described. Alternatively, in place of computer 2520, the present invention can be programmed for execution on or in conjunction with a network of computers, including a system accessible via the Internet, such as on a computer or server computer which executes the programs and/or stores data files. For example, adjustments may be provided to computer 2520 in electronic form using a floppy disk, communication link 2515, or a combination of both. A production print job may then be run using press output device 2550.

The methods of FIGURES 11, 13-15, and 17-24 may be performed on the computer. These methods may be performed using a variety of logical or functional configurations, and may be performed in multiple or single steps. These methods may also omit various steps, depending on the embodiment. These methods may utilize any language, including object-oriented, FORTRAN, C, JAVA, and other languages, and in a particular embodiment may be written in a high-level language such as Clipper. These methods may be stored in machine-readable form on CD-ROM, magnetic disk, or other media, are accessible via the Internet, or are downloadable for input into a computer such as that illustrated in FIGURE 2500.

While the invention has been particularly shown and described in several embodiments by the foregoing detailed description, a myriad of changes, variations, alterations, transformations and modifications may be suggested to one skilled in the art and it is intended that the present invention encompass such changes, variations, alterations, transformations and modifications as fall within the spirit and scope of the appended claims.

Particularly, the invention may comprise aspects according to the following numbered paragraphs:

1. A color management method, comprising:

    providing a first set of one-dimensional profile density values for a proofing system according to a first set of specifications;
    providing a first set of system admixture density values for the proofing system according to the first set of specifications;
    providing a second set of one-dimensional density values using a press output device according to a second set of specifications;
    providing a second set of system admixture density values using the press output device according to the second set of specifications;
    creating a proof of a production print job using a second proofing system compliant with the first set of specifications; and
    providing the production print job in response to the first and second sets of one-dimensional density values and the first and second sets of system admixture density values.

2. The method of paragraph 1, wherein the second set of specifications includes at least one density value that is greater than at least another density value of the first set of specifications.

3. The method of paragraph 2, wherein the first specifications include solid major density values of at least 1.60 for a cyan channel, at least 1.60 for a magenta channel, at least 1.10 for a yellow channel, and at least 1.85 for a black channel.

4. The method of paragraph 1, wherein the second specifications include solid major density values of at least 1.85 for a cyan channel, at least 1.85 for a magenta channel, at least 1.25 for a yellow channel, and at least 1.85 for a black channel.

5. A color management system, comprising:

a Counseling/Management site communicatively coupled to a processing site and operable to receive density values generated by at least one reflective multi-color reproduction system (RM/CRS), measure the density values, and perform
quality control related to the density values; the processing site operable to

evaluate characteristics from the density values; and
calculate factors in response to the density values and and the evaluation and transmit the factors to a subscriber site; and
wherein the factors are to be used to adjust and generate image data to be printed.

6. The system of paragraph 5, further comprising a printing output site communicatively coupled to the processing site and operable to generate the image data to be printed using a press output device.

7. The system of paragraph 5, further comprising a concept-prepress preparation site communicatively coupled to the processing site and operable to generate the density values from production proofs.

8. The system of paragraph 5, wherein the processing site is further operable to maintain at least one database, the database operable to store data received from the Counseling/Management site.

9. The system of paragraph 8, wherein the database is further operable to store data from at least one of the group consisting of a concept-prepress preparation site coupled to the processing site and operable to generate at least one of the density values and a printing output site coupled to the processing site and operable to generate the image data to be printed using a press output device.

10. A color management method, comprising:

receiving identifiers for one of a plurality of proofing systems and one of a plurality of press output devices over a network at a processing site;
calculating in the processing site one-dimensional data and system admixture data associated with the identified one of the plurality of proofing systems and
the identified one of the plurality of press output devices, the data to be used by at least one of a plurality of subscribers in performing a production print job using the identified one of the plurality of press output devices;
storing the one-dimensional data and system admixture data in a centralized repository; and;
communicating the adjustment data from the processing site to the at least one of the plurality of subscribers over the network.

11. The method of paragraph 10, further comprising:

producing first sample data by the identified one of the plurality of proofing systems according to a first set of specifications;
producing second sample data using the identified one of the plurality of press output devices according to a second set of specifications;
creating a proof of the production print job using a second of the plurality of proofing systems compliant with the first set of specifications; and
providing the production print job in response to the proof of the production print job.

12. The method of paragraph 10, further comprising providing the production print job in response to proof density deviation adjustment data.

13. The method of paragraph 10, further comprising providing business information associated with the production print job from a procurement site.

14. The method of paragraph 10, further comprising providing a PQC record comprising the provided identifier for the one of the plurality of proofing systems.

15. A color management system, comprising:

a central data repository in a processing site operable to store adjustment data to be used in performing a production print job using one of a plurality of press output devices and in response to one of a plurality of proofing systems, the processing site operable to store transformation data associated with the plurality of proofing systems and the plurality of press output devices;
logic in the processing site operable to
communicate over the network with the central data repository and operable to cause identifiers for the one of the plurality of proofing systems and the one of the plurality of press output devices to be received at the processing site over a network, and
cause the adjustment data to be provided from the central data repository over the network to at least one of a plurality of subscribers in response to the provided proofing system and press system identifiers; and
wherein the processing site is operable to communicate with the plurality of subscribers.

16. The system of paragraph 15, wherein the logic is further operable to receive business information from the at least one of the plurality of subscribers and the adjustment data are provided to a second one of the plurality of subscribers to be used in performing the production print job.

17. The system of paragraph 15, wherein the one of the plurality of proofing systems is a universal proofing system.

18. A color management method, comprising:

providing identifiers for one of a plurality of proofing systems and one of a plurality of press output devices;
providing adjustment data in response to the provided proofing system and
press system identifiers that compensate for one at least variation in at least one of five principal variables affecting aspects of color management; and
wherein the adjustment data to be used in performing a production print job using the one of the plurality of press output devices and in response to the one of the plurality of proofing systems.

19. The method of paragraph 18, wherein the at least one of the five principal variables comprises one of the group consisting of tone reproduction, system admixture, color intensity gamut size mismatch type A, color intensity gamut size mismatch type B, and light reflectance proportionality from screened areas.

20. The method of paragraph 18, further comprising providing the adjustment data that compensate for at least one variation in at least three of the five principal variables affecting aspects of color management.

21. The method of paragraph 18, wherein the one of the plurality of proofing systems is compliant with a set of specifications having density values that are less than density values in another set of specifications with which the one of the plurality of press output devices is compliant.

22. A printed image, comprising:

a substrate;
image data produced by a press output device in response to a proof of a production print job using a proofing device compliant with a first set of specifications and in response to one-dimensional density values and system admixture density values, the image data residing on the substrate; and
wherein the one-dimensional density values and the system admixture density values are produced by a second proofing device according to the first set of specifications and by the press output device according to a second set of specifications.

23. The image of paragraph 22, wherein the image data includes data produced by at least one of the group consisting of CTP plates, cylinders, interim film, and direct imaging technology.

24. The image of paragraph 22, wherein the press output device resides at a subscriber site.

25. The image of paragraph 22, further comprising calculating at least a portion of the onedimensional density values and system admixture density values at a processing site.

## Claims

**1.** A color management method, comprising:

establishing, at at least one counseling/management site, a set of color management requirements and specifications;
providing the set of requirements and specifications, via at least one central processing site, to a plurality of participants;
generating performance data for at least one identified reflective multi-color reproduction system;
verifying compliance, at the at least one counseling/management site, of the performance data with the set of requirements and specifications, and determining deviations therefrom;
storing, at the at least one central processing site, the performance data and the compliance deviations for determining density adjustment factors for at least one set of print production data of at least one participant.

**2.** The color management method of claim 1, further comprising dynamically modifying the set of color management requirements and specifications.

**3.** The color management method of claim 1, wherein generating performance data comprises determining density values of color samples produced by at least one identified press output device using an identified multi-color ink set, where the density values are used for determining density adjustment factors for subsequent press production.

**4.** The color management method of claim 3, wherein generating performance data comprises determining density values of color samples produced by at least one identified press output device from an image adjusted in response to the determined density adjustment factors.

**5.** The color management method of claim 1, wherein generating performance data comprises generating image fine-adjustment values for the performance data.

**6.** The color management method of claim 1, wherein generating performance data comprises determining density values of color samples produced by at least one identified press output device using an identified multi-color ink set, where the density values are used for determining deviations in subsequent press production.

**7.** The color management method of claim 1, wherein generating performance data comprises determining density values of color samples produced by at least one identified proofing system using an identified set of multi-color proofing colorants, where the density values are used for determining density adjustment values for subsequent production proofs.

**8.** The color management method of claim 1, wherein generating performance data comprises determining density values of color samples produced by at least one identified proofing system using an identified set of multi-color proofing colorants, where the density values are used for determining deviations in subsequent production proofs.

**9.** The color management method of claim 1, wherein generating performance data comprises determining density values of color samples produced by at least one identified plate-making system,
where the density values are used for determining deviations in subsequent plate-making.

**10.** The color management method of claim 1, wherein generating performance data comprises determining density values of color samples produced by at least one identified multi-color press output device, using an identified set of multi-color printing inks,
where the density values are used in determining certification of the identified set of multi-color printing inks.

**11.** The color management method of claim 1, wherein generating performance data comprises determining density values of color samples produced by at least one identified multi-color proofing system using an identified set of multi-color proofing colorants, where the density values are used in determining certification of the identified set of multi-color proofing colorants.

**12.** The color management method of claim 1, further comprising determining, at the at least one counseling/management site, characteristics of at least one printing substrate, and storing the characteristic measurements at the at least one central processing site.

**13.** The color management method of claim 1, further comprising:

generating performance data for the at least one identified reflective multi-color reproduction system; and
determining, at the at least one counseling/management site, initial percent dot values needed to produce a desired set of density values using the at least one identified reflective multi-color reproduction system in response to the performance data.

**14.** A color management method, comprising:

establishing, at least one counseling/management site, a set for requirements and specifications for at least one reflective multi-color reproduction system;
providing the set of requirements and specifications, via at least one central processing site, to a plurality of participants;
receiving job-specific print production data for at least one identified reflective multi-color reproduction system from at least one participant;
verifying compliance, at the at least one counseling/management site, of the job-specific print production data with the set of requirements and specifications, and determining deviations therefrom;

storing, at the at least one central processing site, the job-specific print production data and the compliance deviations;
calculating, at the at least one counseling/management site, density adjustment factors in response to the compliance deviations; and
providing, via the at least one central processing site, to the at least one participant, verification of compliance with the requirements and specifications and the density adjustment factors of the job-specific print production data for adjusting subsequent printing of images on the at least one identified reflective multi-color reproduction system.

**15.** The color management method of claim 14, further comprising:

determining density values of color samples produced by at least one identified proofing system using an identified set of multi-color proofing colorants;
establishing a baseline in response to the density values and the set of requirements and specifications;
determining density values of color samples of at least one production proof; and
determining the compliance deviations of the at least one production proof density values from the baseline.

**16.** The color management method of claim 14, further comprising:

determining density values of color samples produced by at least one identified plate-making system;
establishing a baseline in response to the density values and the set of requirements and specifications;
determining density values of at least one production plate; and
determining the compliance deviations of the at least one production plate density values from the baseline.

**17.** The color management method of claim 14, further comprising:

determining density values of color samples produced by at least one identified press output device using one identified multi-color ink set;
establishing a baseline in response to the density values and the set of requirements and specifications;
determining density values of at least one press production job; and
determining the compliance deviations of the at least one press production job density values from the baseline.

**18.** The color management method of claim 14, further comprising:

generating performance data for the at least one identified reflective multi-color reproduction system; and determining, at the at least one counseling/management site, initial percent dot values needed to produce a desired set of density values using the at least one identified reflective multi-color reproduction system in response to the performance data.

**19.** The color management method of claim 14, further comprising:

determining, at the at least one counseling/management site, characteristics of at least one printing substrate; determining, at the at least one counseling/management site, a category for a first printing substrate; and determining whether the particular printing substrate is a suitable printing substrate to achieve similar characteristics on a first reflective multi-color reproduction system as a second printing substrate on a second reflective multi-color reproduction system.

**20.** The color management method of claim 14, further comprising:

determining, at the at least one counseling/management site, characteristics of at least one printing substrate; determining, at the at least one counseling/management site, a category for a first printing substrate; and determining whether the particular printing substrate is a suitable printing substrate to achieve similar characteristics on a reflective multi-color reproduction system as a second printing substrate on the same reflective multi-color reproduction system.

**21.** The color management method of claim 14, further comprising:

determining, at the at least one counseling/management site, characteristics of at least one printing substrate; determining, at the at least one counseling/management site, a category for a first printing substrate; and determining whether the particular printing substrate is a suitable printing substrate to achieve desired characteristics on a first reflective multi-color reproduction system as a second printing substrate on a second reflective multi-color reproduction system.

**22.** The color management method of claim 14, wherein receiving job-specific production data comprises receiving a plurality of identifiers for a plurality of production parameters for at least one production job, and storing the plurality of identifiers at the at least one central processing site in association with the at least one production job, for subsequent determination of density adjustment factors for the at least one production job.

**23.** The color management method of claim 14, wherein receiving job-specific production data comprises receiving a plurality of identifiers for a plurality of production parameters for at least one production job, and storing the plurality of identifiers at the at least one central processing site in association with the at least one production job, as a record of compliance verification of the at least one production job.

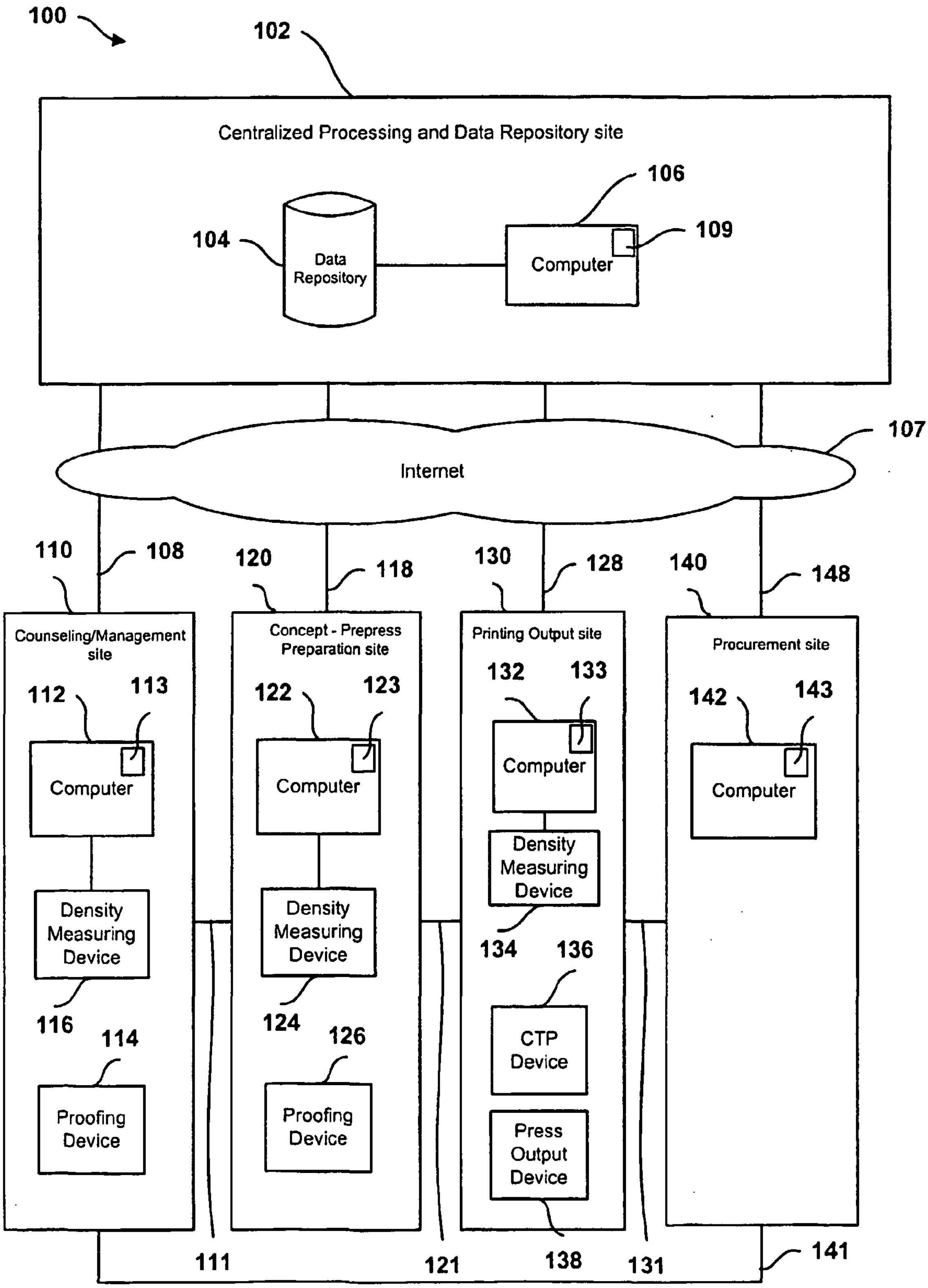
100
102
Centralized Processing and Data Repository site
106
104
Data Repository
Computer
109
Internet
107
110
108
120
118
130
128
140
148
Counseling/Management site
112
113
Computer
Density Measuring Device
116
114
Proofing Device
Concept - Prepress Preparation site
122
123
Computer
Density Measuring Device
124
126
Proofing Device
Printing Output site
132
133
Computer
Density Measuring Device
134
136
CTP Device
Press Output Device
138
Procurement site
142
143
Computer
111
121
131
141

FIG. 1

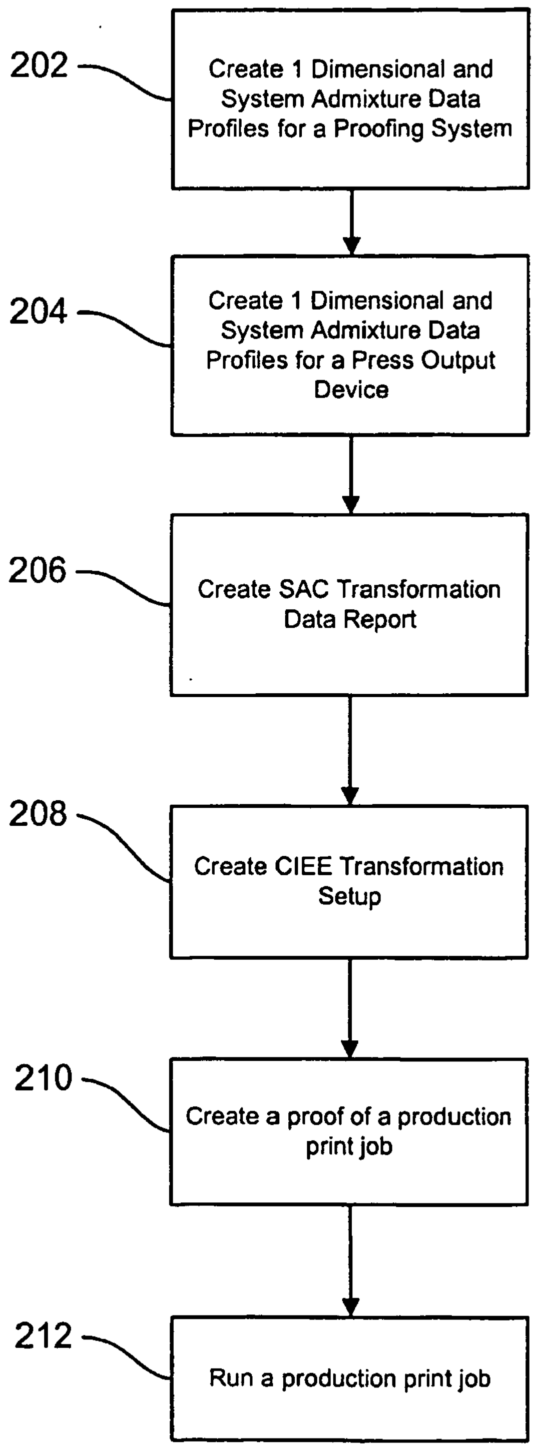
202
Create 1 Dimensional and System Admixture Data Profiles for a Proofing System
204
Create 1 Dimensional and System Admixture Data Profiles for a Press Output Device
206
Create SAC Transformation Data Report
208
Create CIEE Transformation Setup
210
Create a proof of a production print job
212
Run a production print job

FIG. 2

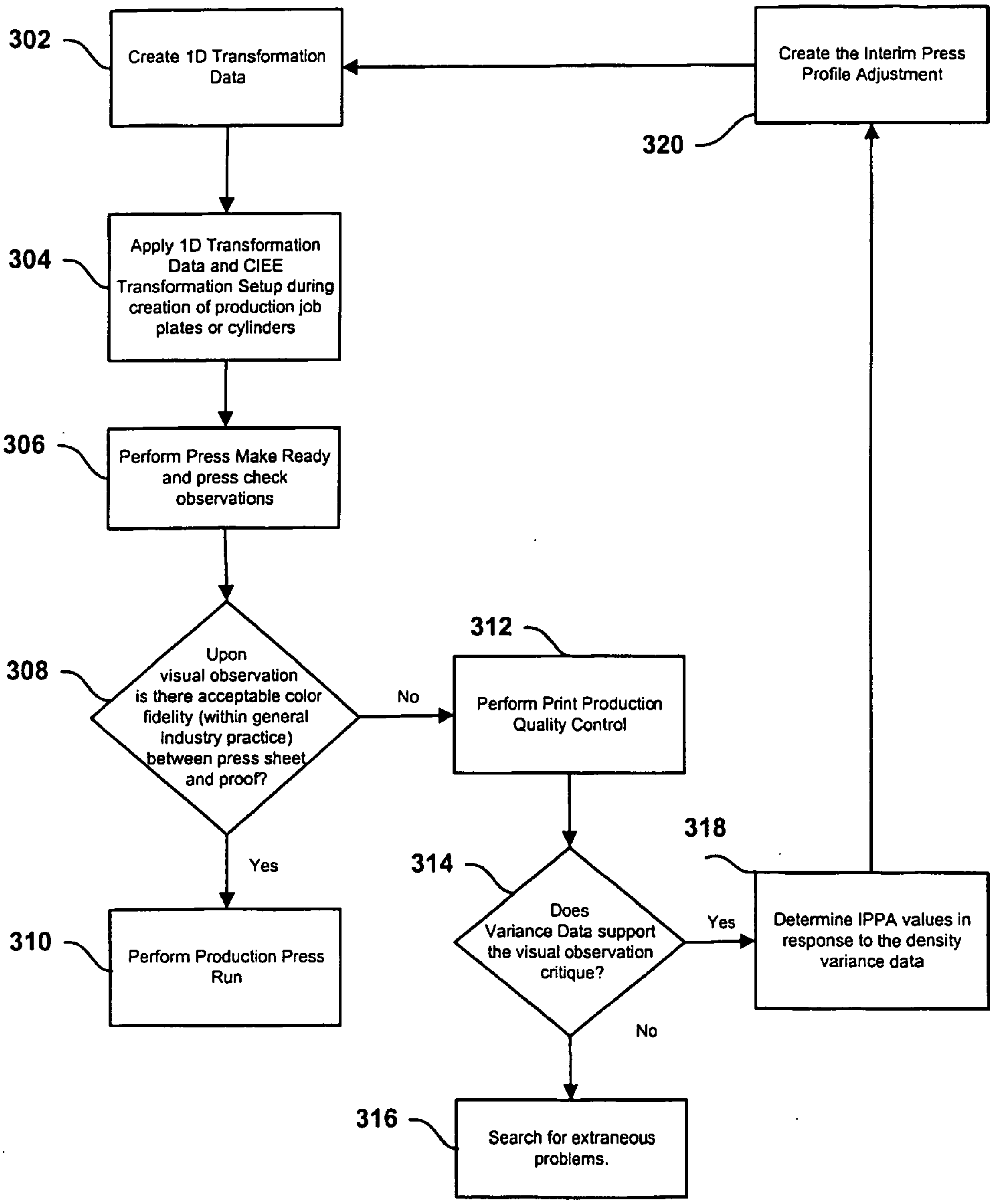
302
Create 1D Transformation Data
304
Apply 1D Transformation Data and CIEE Transformation Setup during creation of production job plates or cylinders
306
Perform Press Make Ready and press check observations
308
Upon visual observation is there acceptable color fidelity (within general industry practice) between press sheet and proof?
No
Yes
310
Perform Production Press Run
312
Perform Print Production Quality Control
314
Does Variance Data support the visual observation critique?
Yes
No
316
Search for extraneous problems.
318
Determine IPPA values in response to the density variance data
320
Create the Interim Press Profile Adjustment

FIG. 3

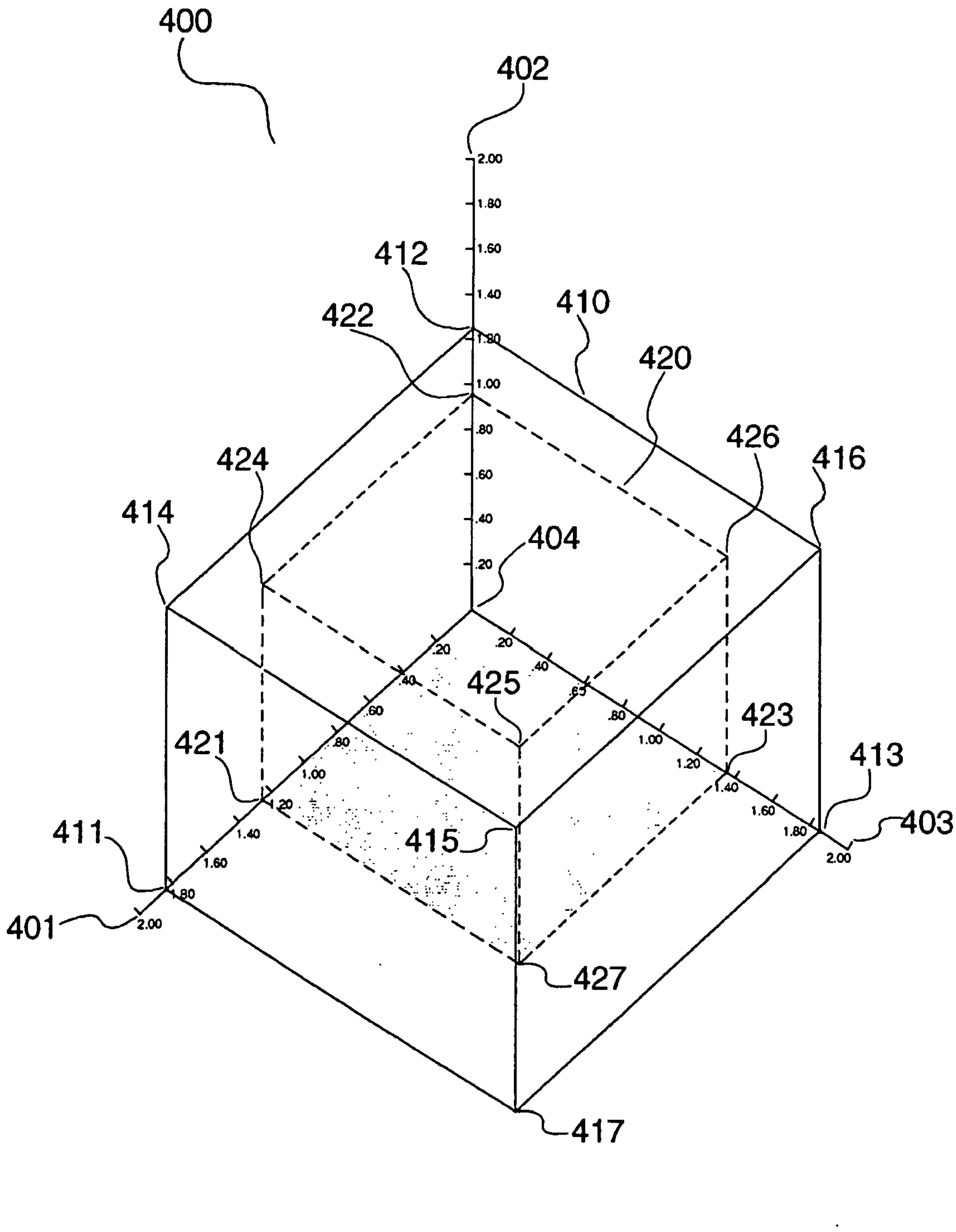
400
402
2.00
1.80
1.60
1.40
412
410
422
420
426
416
424
414
404
425
423
421
413
403
411
415
401
427
417

FIG. 4

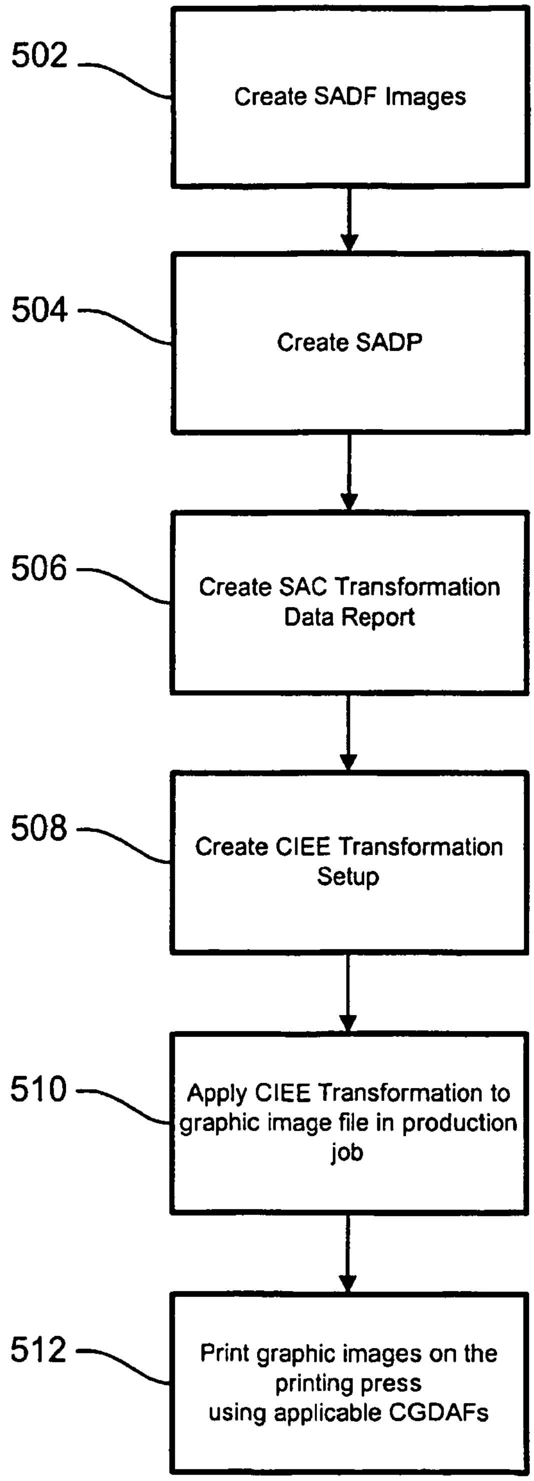
502
Create SADF Images
504
Create SADP
506
Create SAC Transformation Data Report
508
Create CIEE Transformation Setup
510
Apply CIEE Transformation to graphic image file in production job
512
Print graphic images on the printing press using applicable CGDAFs

FIG. 5

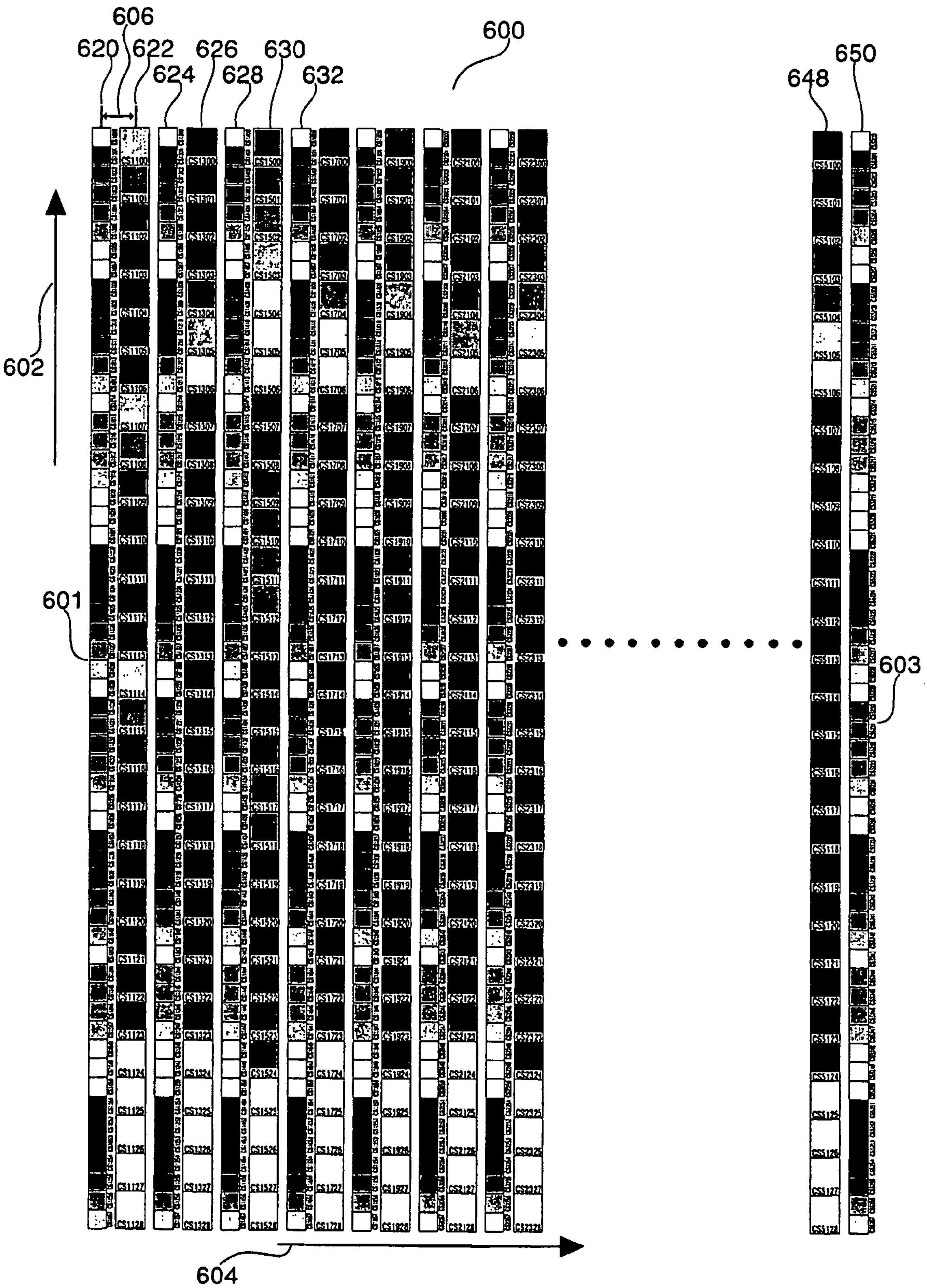


FIG. 6

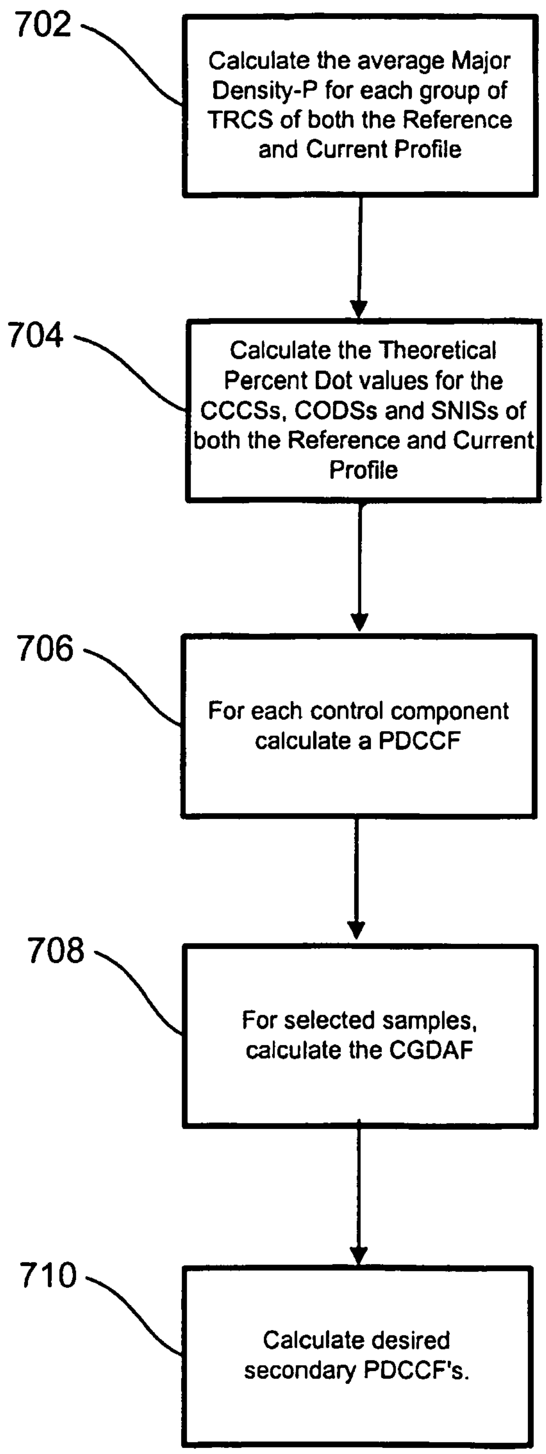
702
Calculate the average Major Density-P for each group of TRCS of both the Reference and Current Profile
704
Calculate the Theoretical Percent Dot values for the CCCSs, CODSs and SNISs of both the Reference and Current Profile
706
For each control component calculate a PDCCF
708
For selected samples, calculate the CGDAF
710
Calculate desired secondary PDCCF's.

FIG. 7

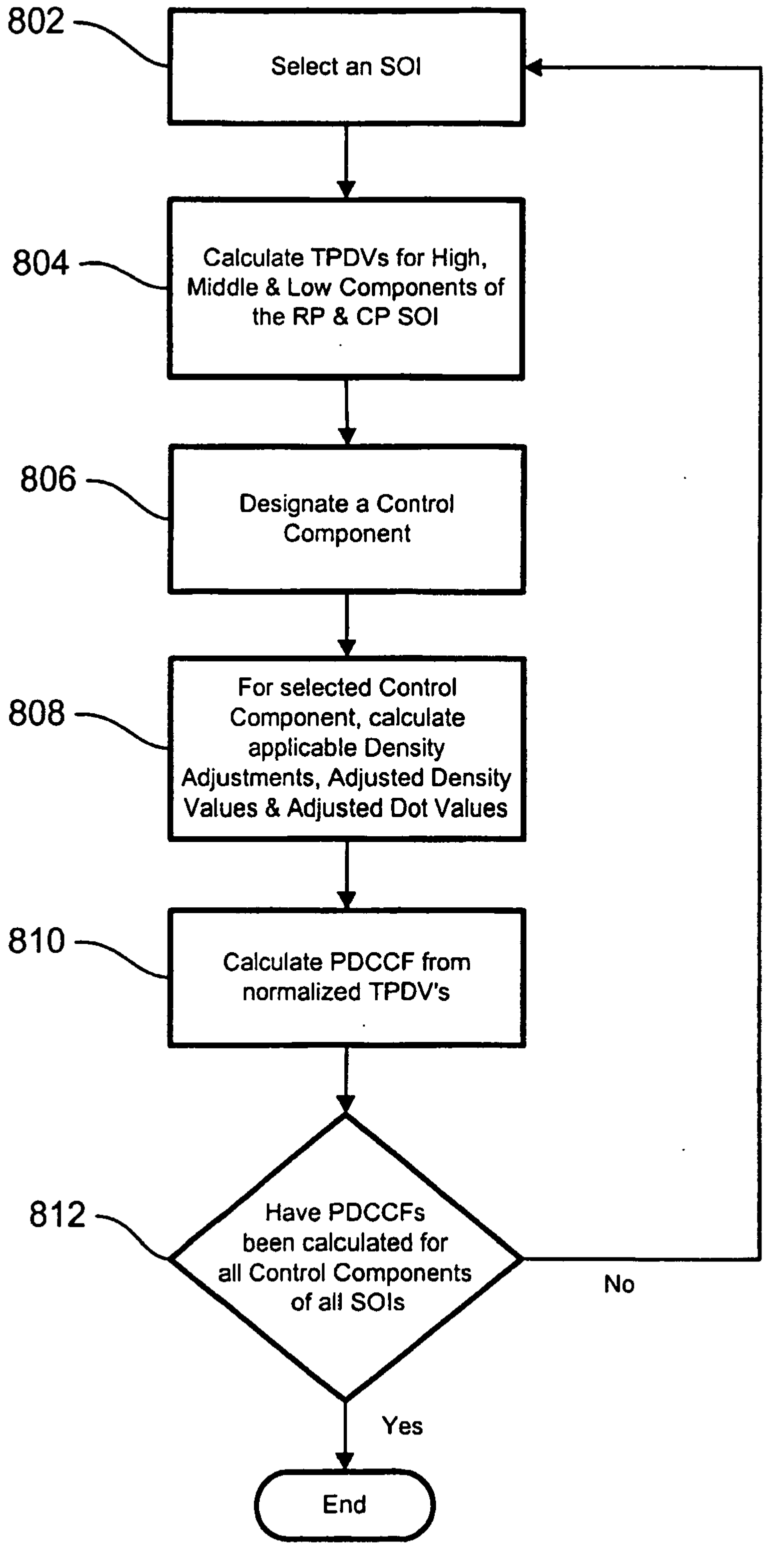
802
Select an SOI
804
Calculate TPDVs for High, Middle & Low Components of the RP & CP SOI
806
Designate a Control Component
808
For selected Control Component, calculate applicable Density Adjustments, Adjusted Density Values & Adjusted Dot Values
810
Calculate PDCCF from normalized TPDV's
812
Have PDCCFs been calculated for all Control Components of all SOIs
No
Yes
End

FIG. 8

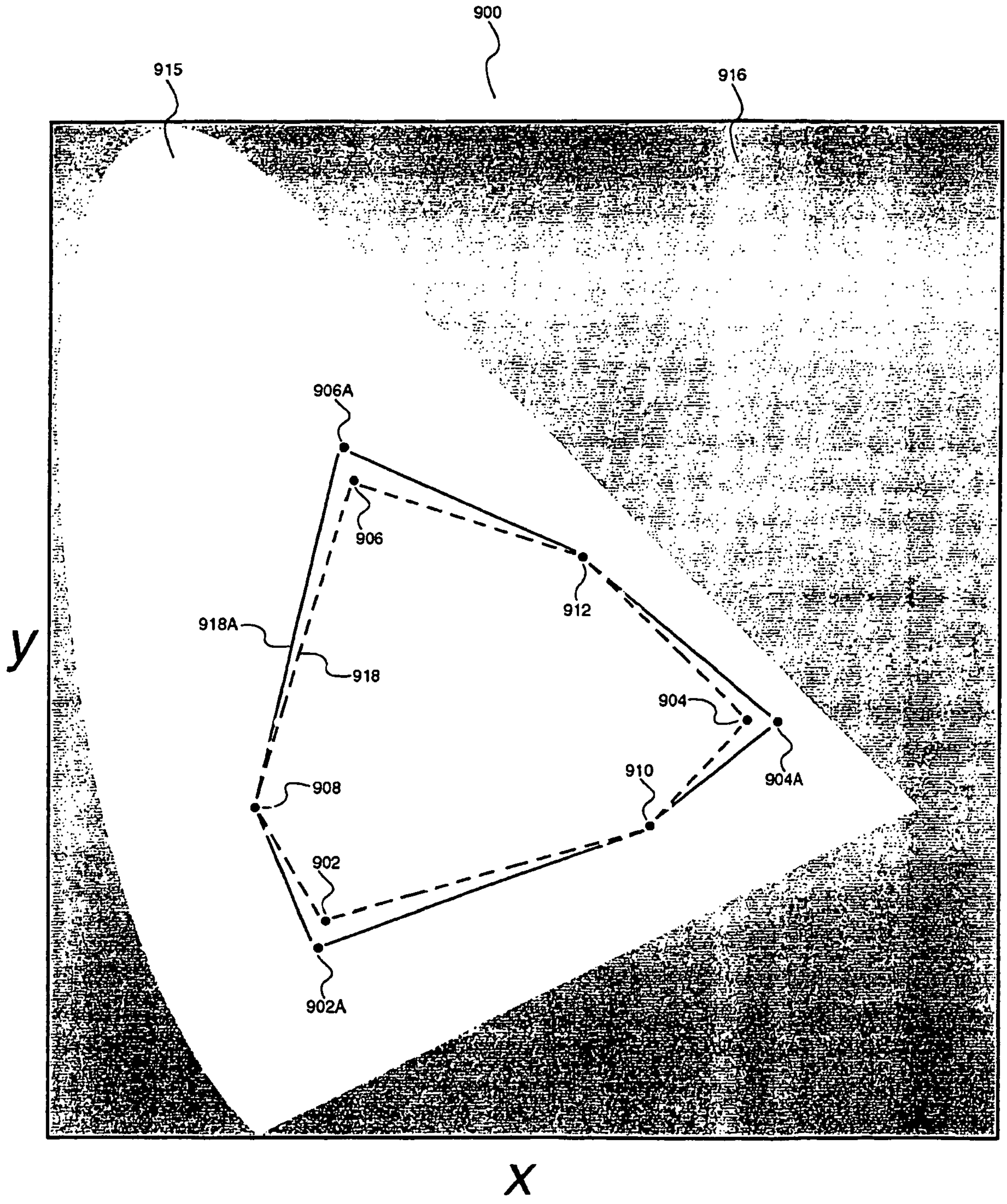


FIG. 9

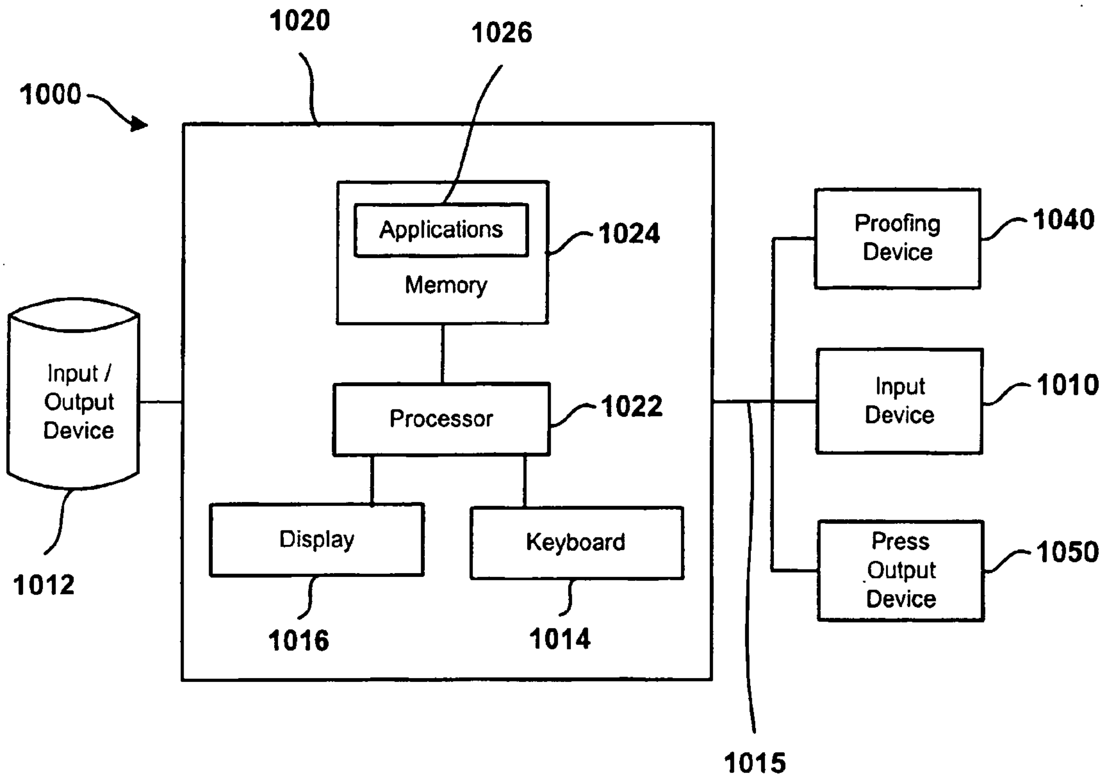
1000
1020
1026
Applications
Memory
1024
Processor
1022
Display
Keyboard
1016
1014
Input / Output Device
1012
Proofing Device
1040
Input Device
1010
Press Output Device
1050
1015

FIG. 10

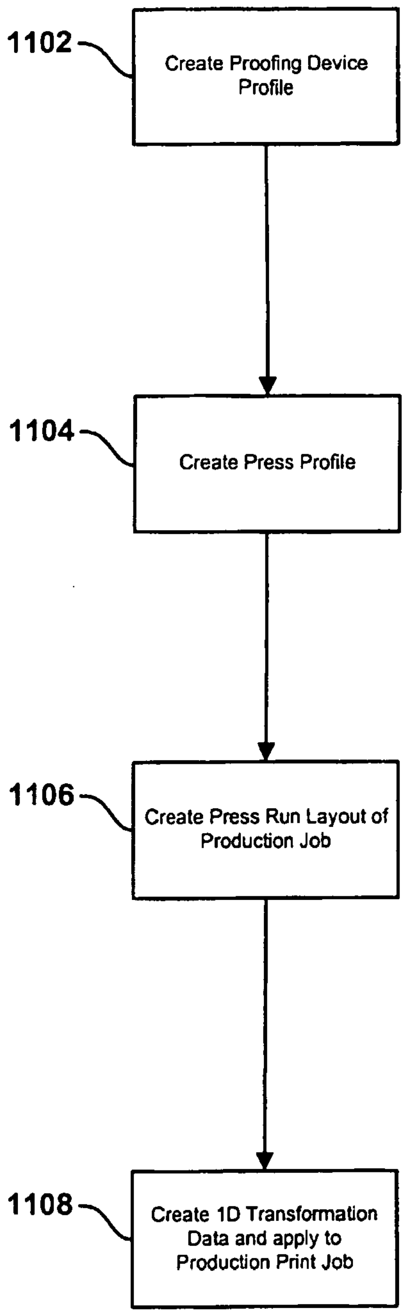
1102
Create Proofing Device Profile
1104
Create Press Profile
1106
Create Press Run Layout of Production Job
1108
Create 1D Transformation Data and apply to Production Print Job

FIG. 11

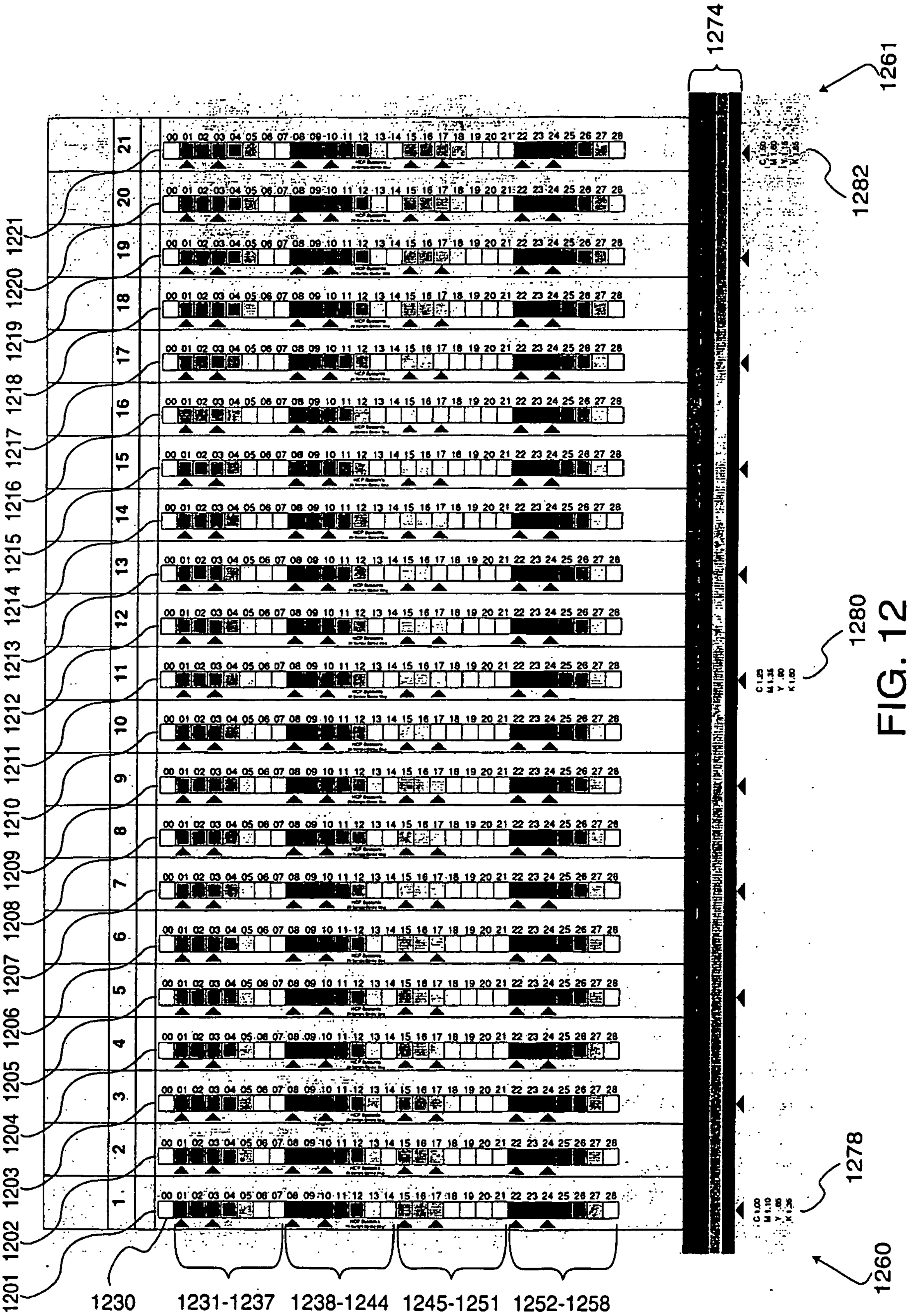
1201
1202
1203
1204
1205
1206
1207
1208
1209
1210
1211
1212
1213
1214
1215
1216
1217
1218
1219
1220
1221
1230
1231-1237
1238-1244
1245-1251
1252-1258
1260
1261
1274
1278
1280
1282

FIG. 12

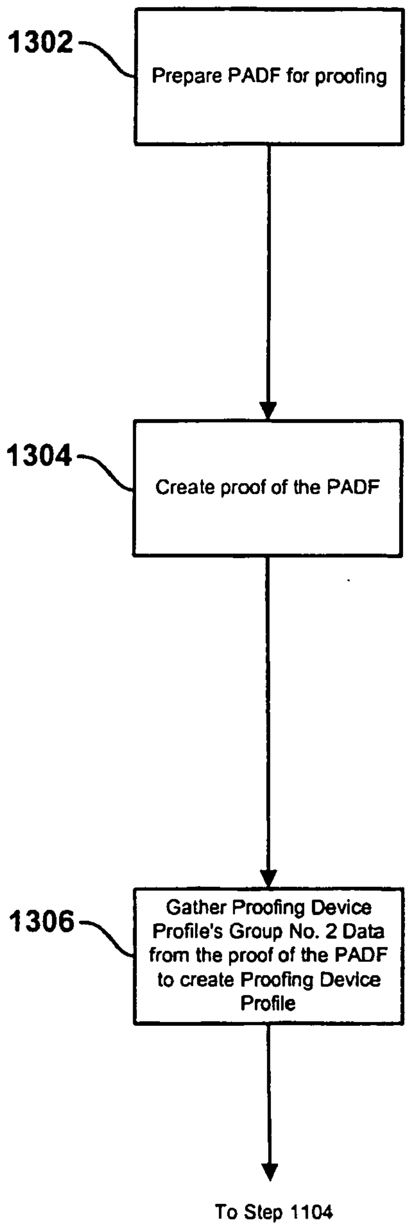
1302
Prepare PADF for proofing
1304
Create proof of the PADF
1306
Gather Proofing Device Profile's Group No. 2 Data from the proof of the PADF to create Proofing Device Profile
To Step 1104

FIG. 13

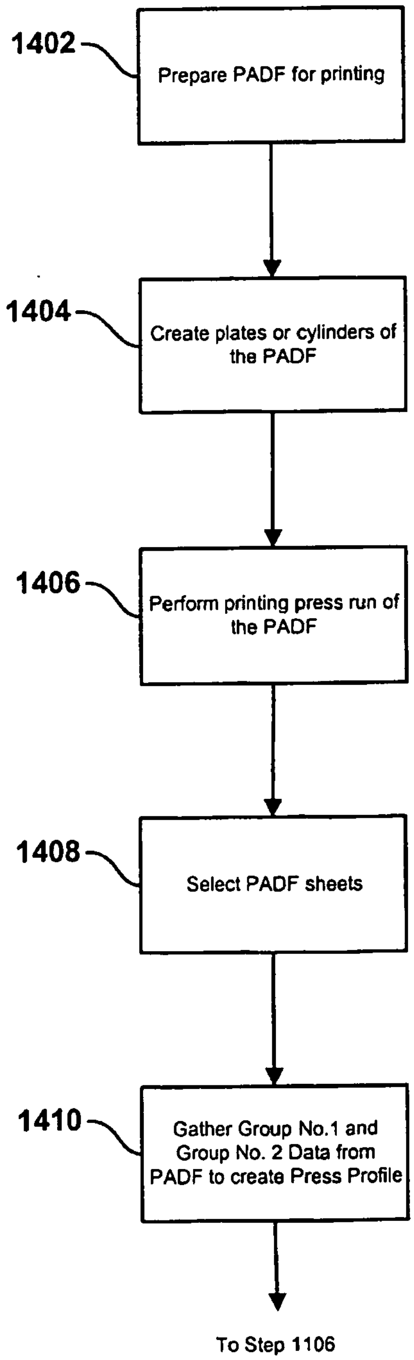
1402
Prepare PADF for printing
1404
Create plates or cylinders of the PADF
1406
Perform printing press run of the PADF
1408
Select PADF sheets
1410
Gather Group No.1 and Group No. 2 Data from PADF to create Press Profile
To Step 1106

FIG. 14

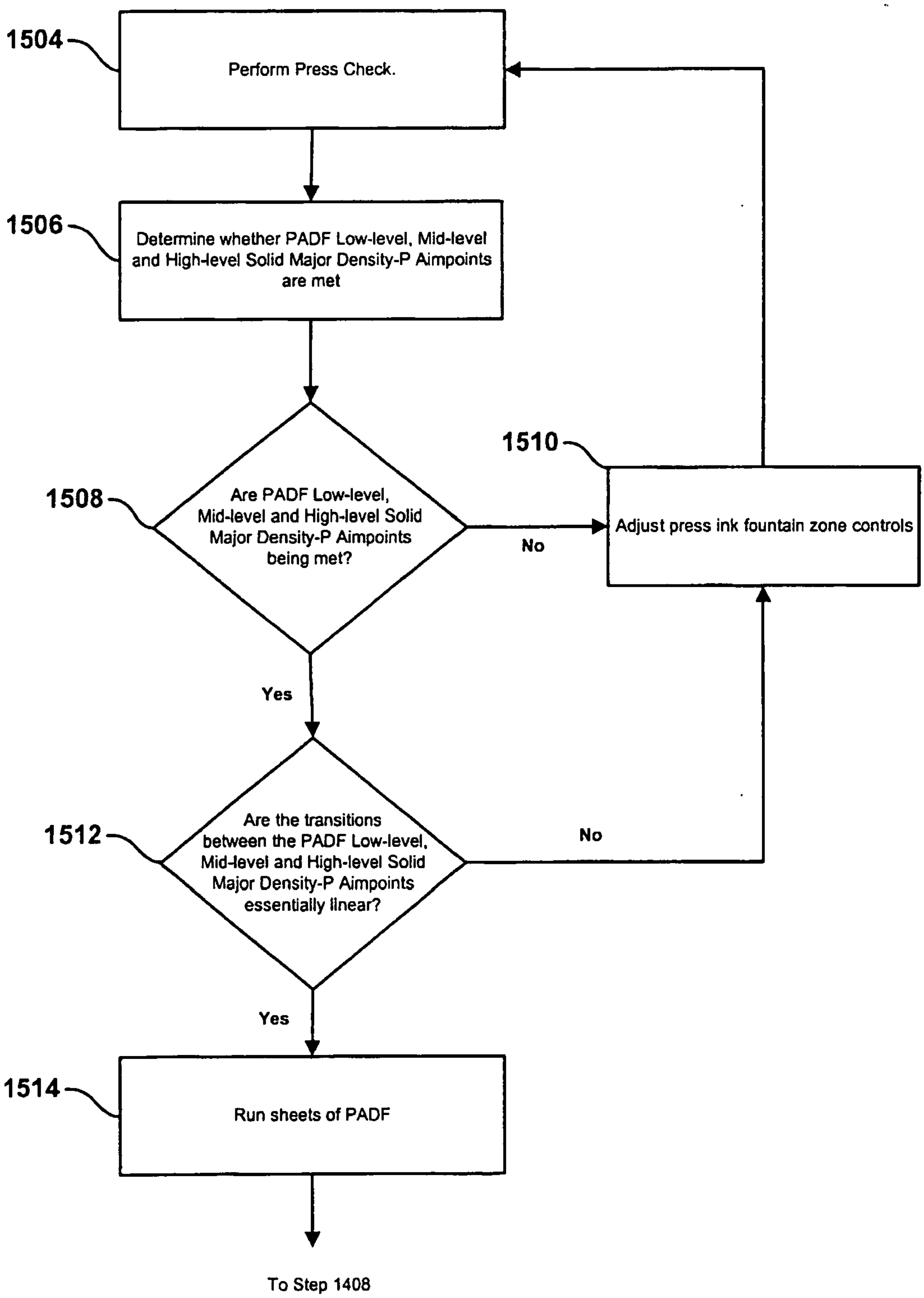
1504
Perform Press Check.
1506
Determine whether PADF Low-level, Mid-level and High-level Solid Major Density-P Aimpoints are met
1508
Are PADF Low-level, Mid-level and High-level Solid Major Density-P Aimpoints being met?
No
1510
Adjust press ink fountain zone controls
Yes
1512
Are the transitions between the PADF Low-level, Mid-level and High-level Solid Major Density-P Aimpoints essentially linear?
No
Yes
1514
Run sheets of PADF
To Step 1408

FIG. 15

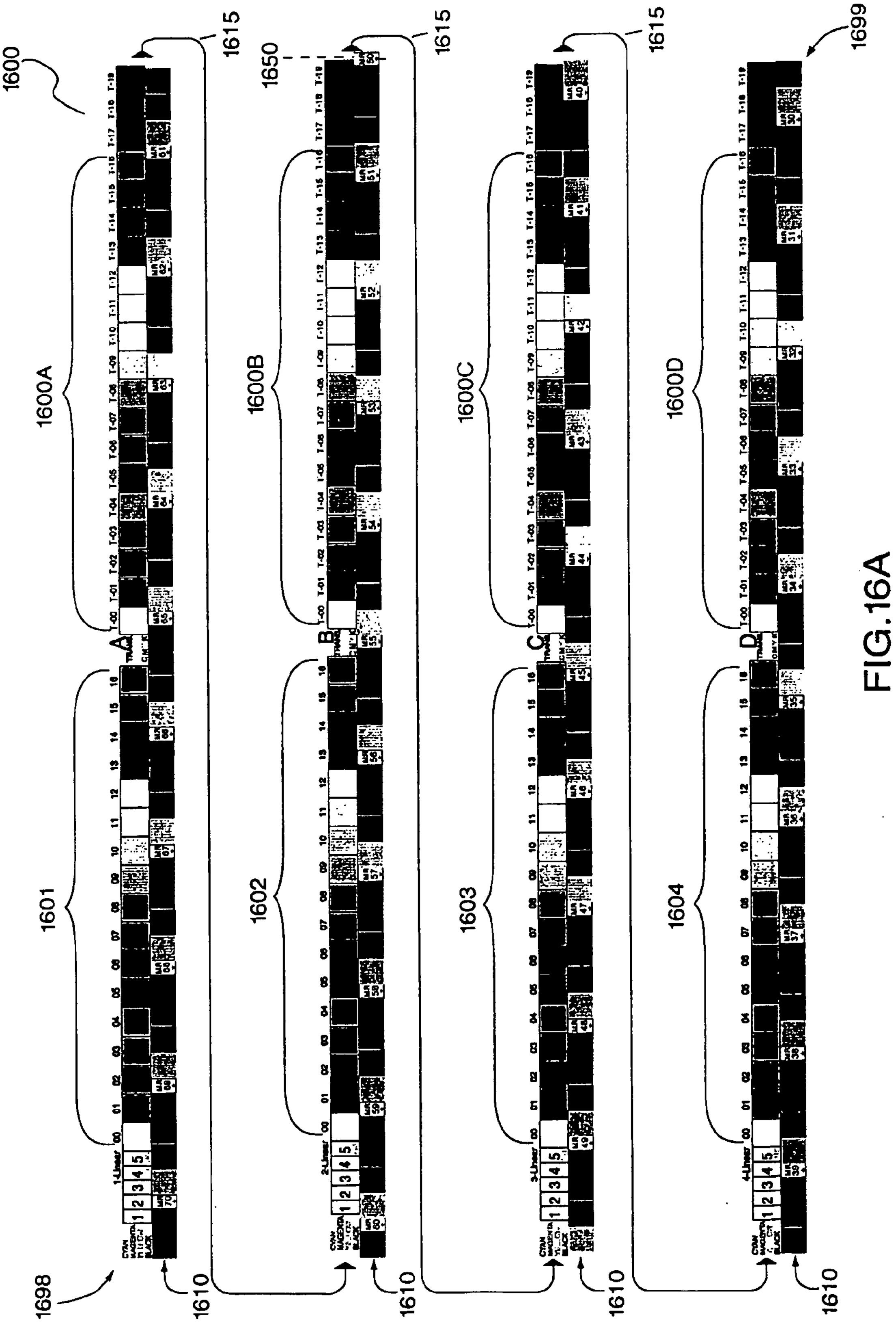
1600
1615
1650
1699
1600A
1600B
1600C
1600D
1601
1602
1603
1604
A
B
C
D
1698
1610

FIG.16A

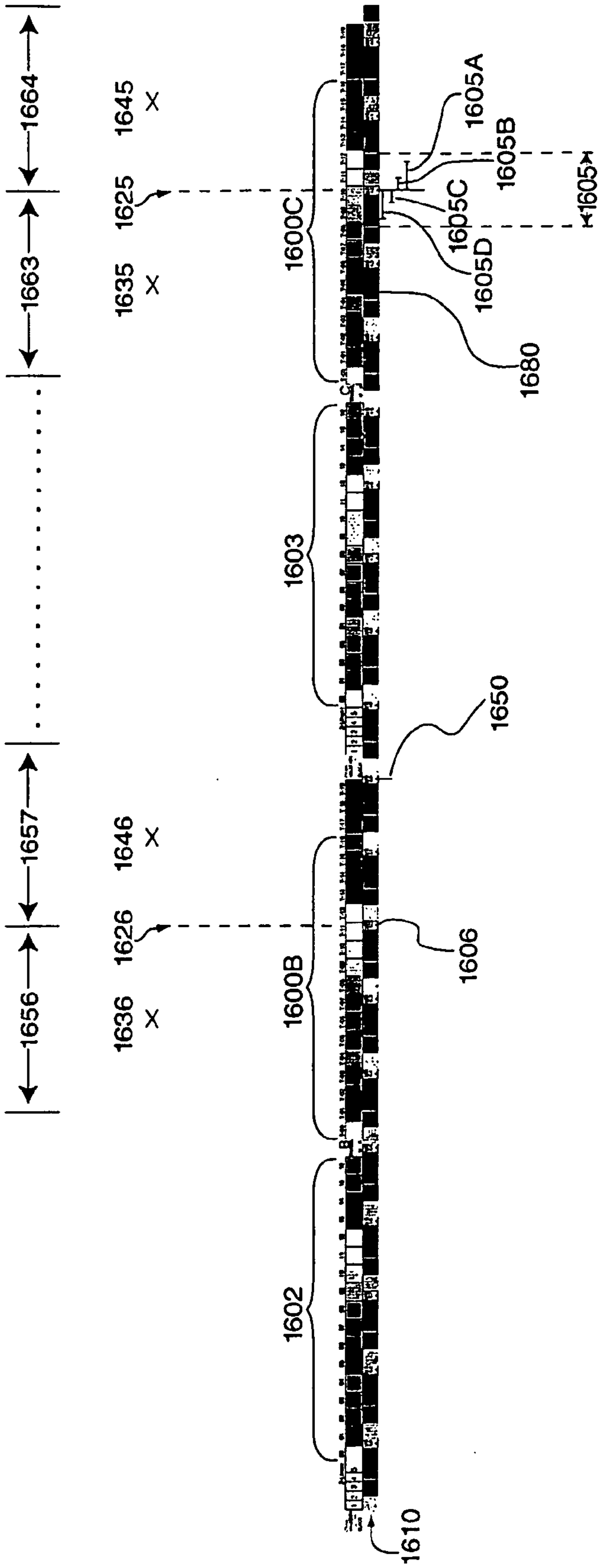
1664
1645
1625
1663
1635
1600C
1605A
1605B
1605C
1605D
1605
1680
1603
1650
1657
1646
1626
1656
1636
1600B
1606
1602
1610

FIG.16B

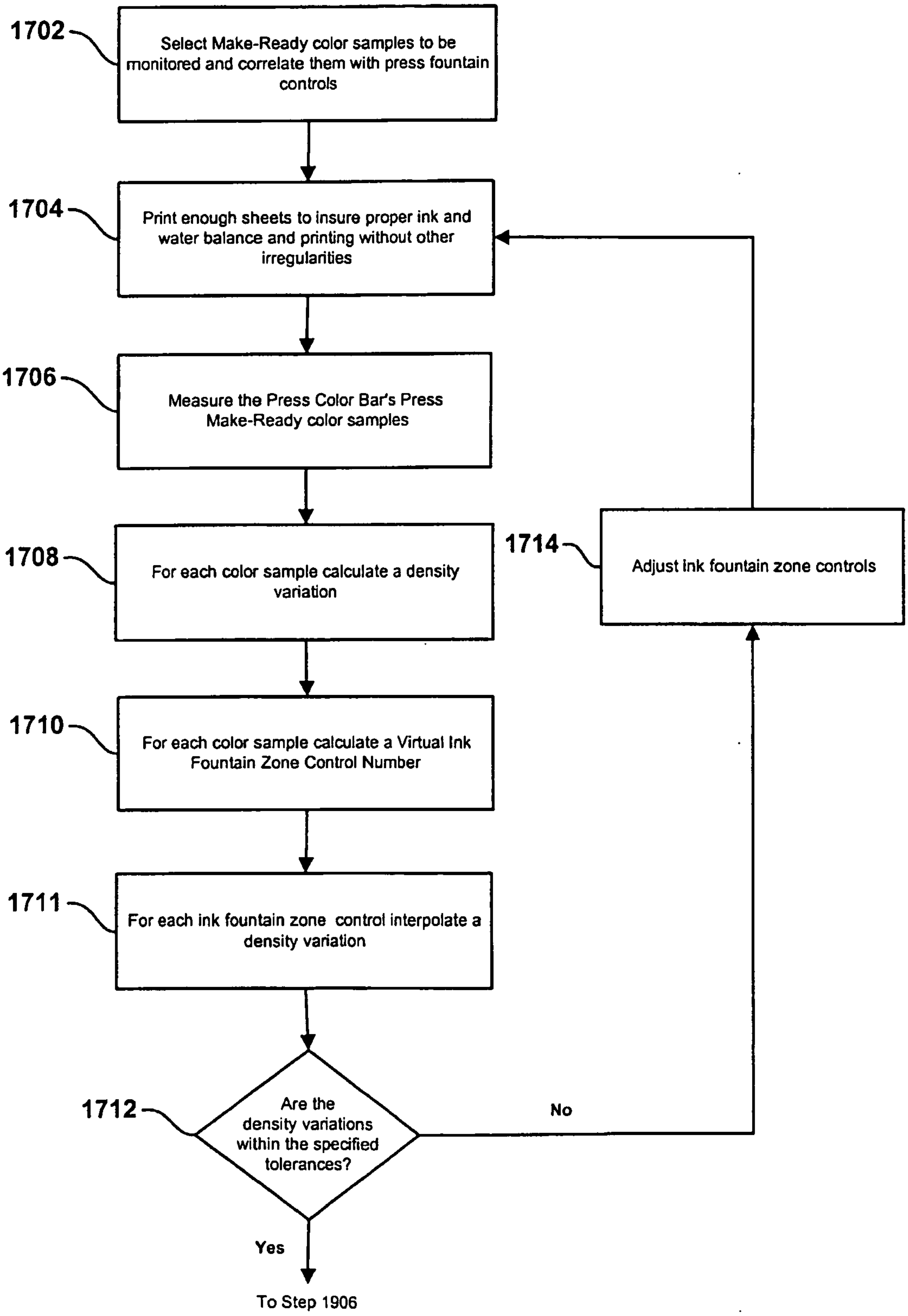
1702
Select Make-Ready color samples to be monitored and correlate them with press fountain controls
1704
Print enough sheets to insure proper ink and water balance and printing without other irregularities
1706
Measure the Press Color Bar's Press Make-Ready color samples
1708
For each color sample calculate a density variation
1710
For each color sample calculate a Virtual Ink Fountain Zone Control Number
1711
For each ink fountain zone control interpolate a density variation
1712
Are the density variations within the specified tolerances?
No
1714
Adjust ink fountain zone controls
Yes
To Step 1906

FIG. 17

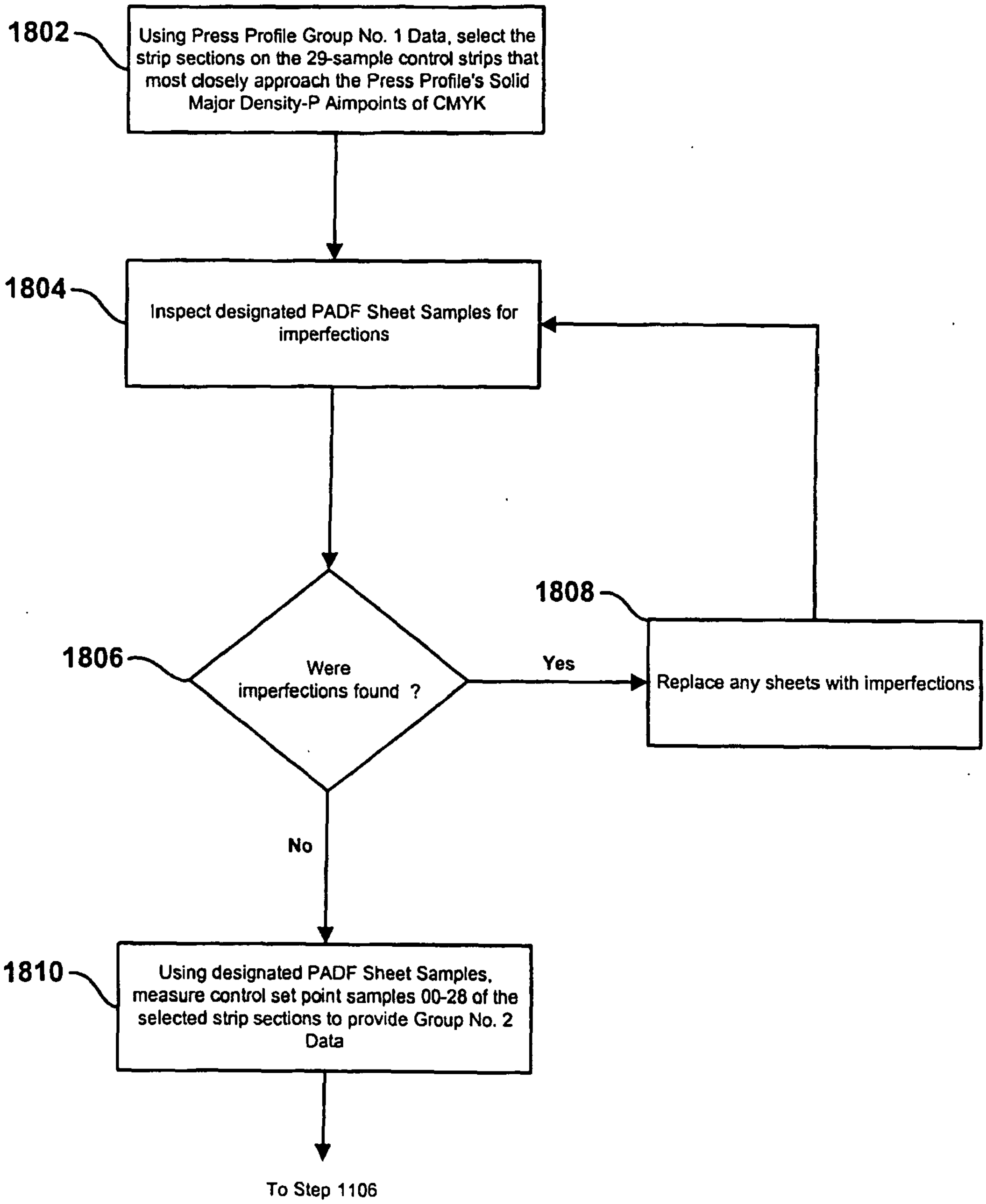
1802
Using Press Profile Group No. 1 Data, select the strip sections on the 29-sample control strips that most closely approach the Press Profile's Solid Major Density-P Aimpoints of CMYK
1804
Inspect designated PADF Sheet Samples for imperfections
1806
Were imperfections found ?
Yes
1808
Replace any sheets with imperfections
No
1810
Using designated PADF Sheet Samples, measure control set point samples 00-28 of the selected strip sections to provide Group No. 2 Data
To Step 1106

FIG. 18

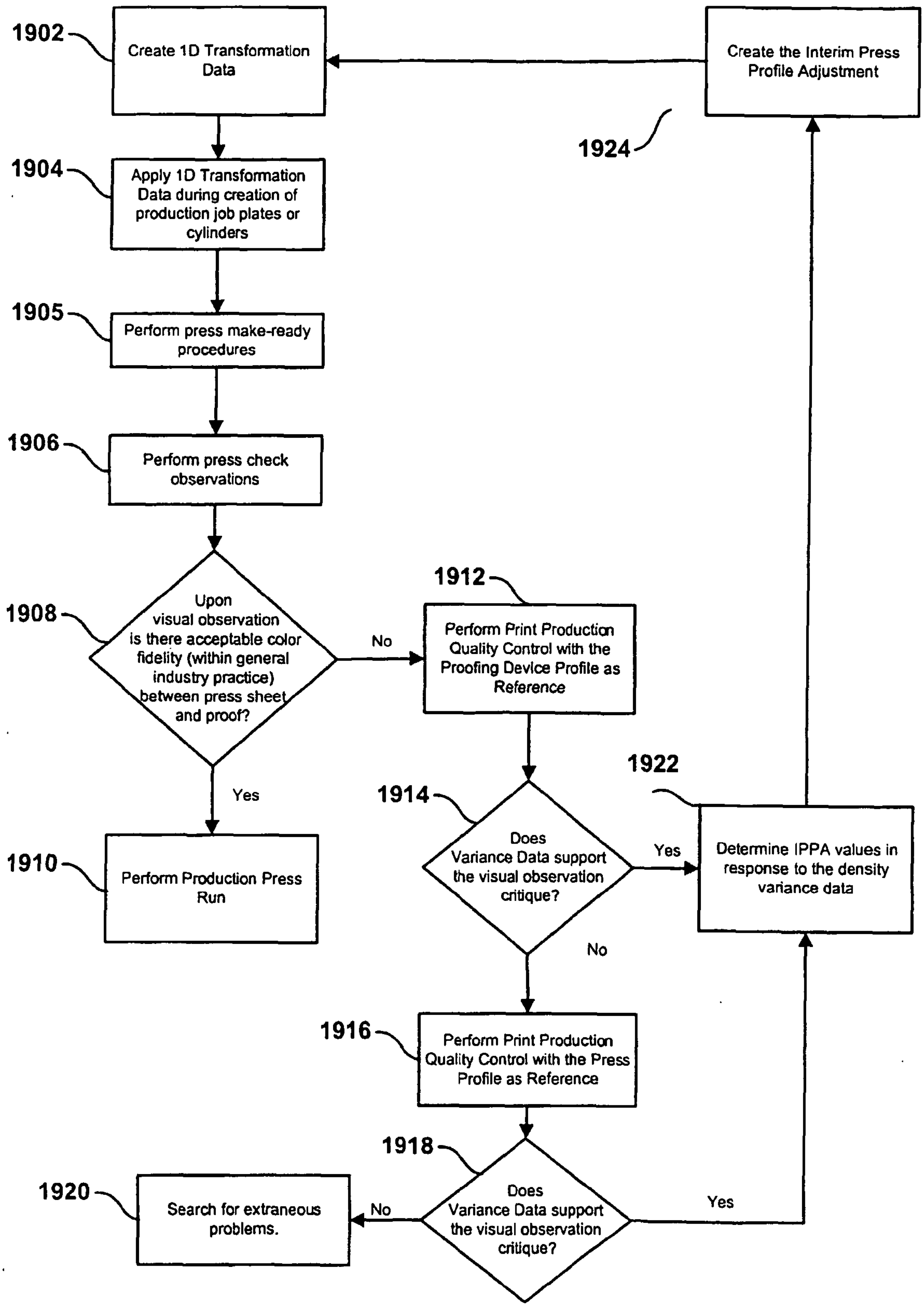
1902
Create 1D Transformation Data
1904
Apply 1D Transformation Data during creation of production job plates or cylinders
1905
Perform press make-ready procedures
1906
Perform press check observations
1908
Upon visual observation is there acceptable color fidelity (within general industry practice) between press sheet and proof?
No
Yes
1910
Perform Production Press Run
1912
Perform Print Production Quality Control with the Proofing Device Profile as Reference
1914
Does Variance Data support the visual observation critique?
Yes
No
1916
Perform Print Production Quality Control with the Press Profile as Reference
1918
Does Variance Data support the visual observation critique?
No
Yes
1920
Search for extraneous problems.
1922
Determine IPPA values in response to the density variance data
1924
Create the Interim Press Profile Adjustment

FIG. 19

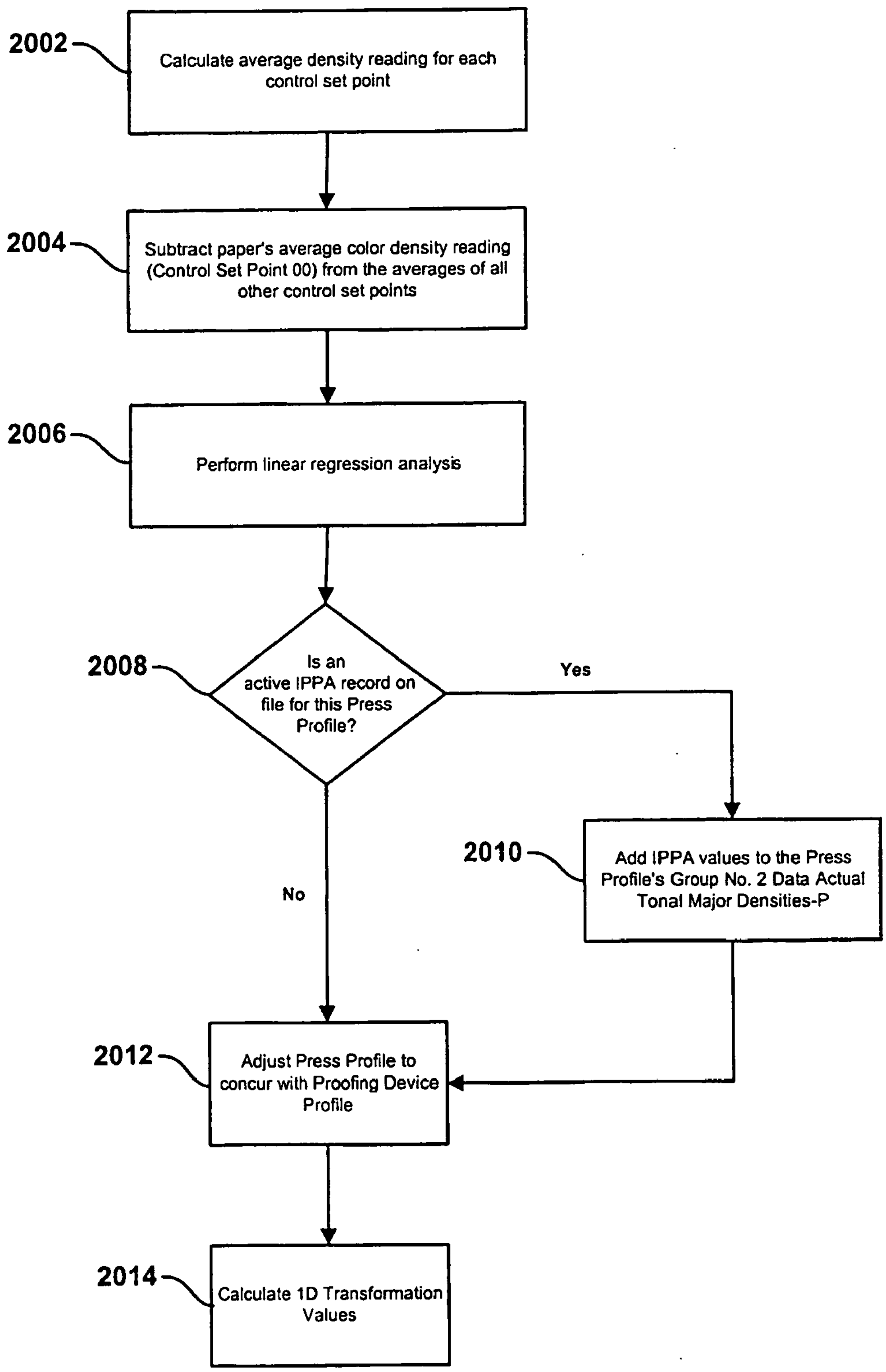
2002
Calculate average density reading for each control set point
2004
Subtract paper's average color density reading (Control Set Point 00) from the averages of all other control set points
2006
Perform linear regression analysis
2008
Is an active IPPA record on file for this Press Profile?
Yes
No
2010
Add IPPA values to the Press Profile's Group No. 2 Data Actual Tonal Major Densities-P
2012
Adjust Press Profile to concur with Proofing Device Profile
2014
Calculate 1D Transformation Values

FIG. 20

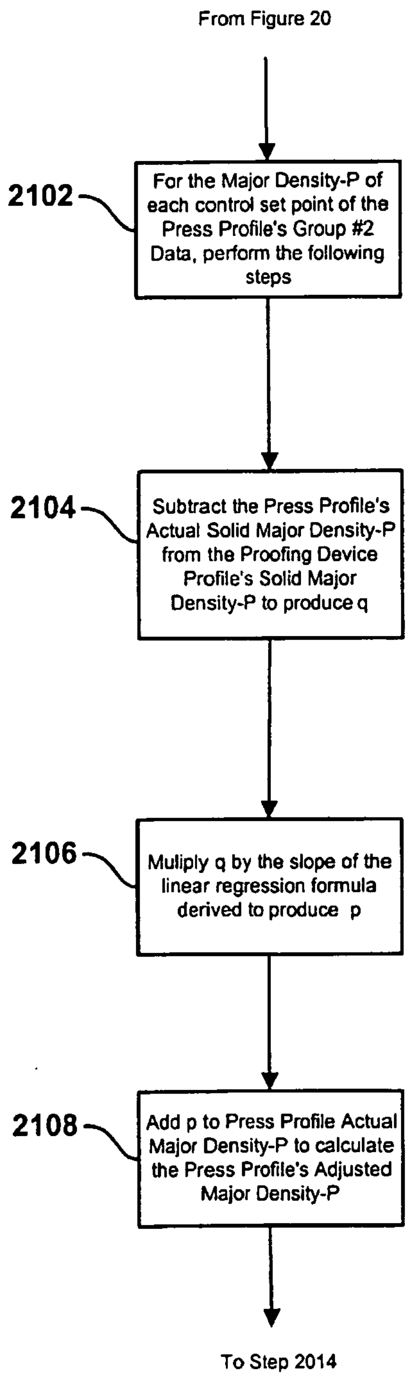
From Figure 20
2102
For the Major Density-P of each control set point of the Press Profile's Group #2 Data, perform the following steps
2104
Subtract the Press Profile's Actual Solid Major Density-P from the Proofing Device Profile's Solid Major Density-P to produce q
2106
Muliply q by the slope of the linear regression formula derived to produce p
2108
Add p to Press Profile Actual Major Density-P to calculate the Press Profile's Adjusted Major Density-P
To Step 2014

FIG. 21

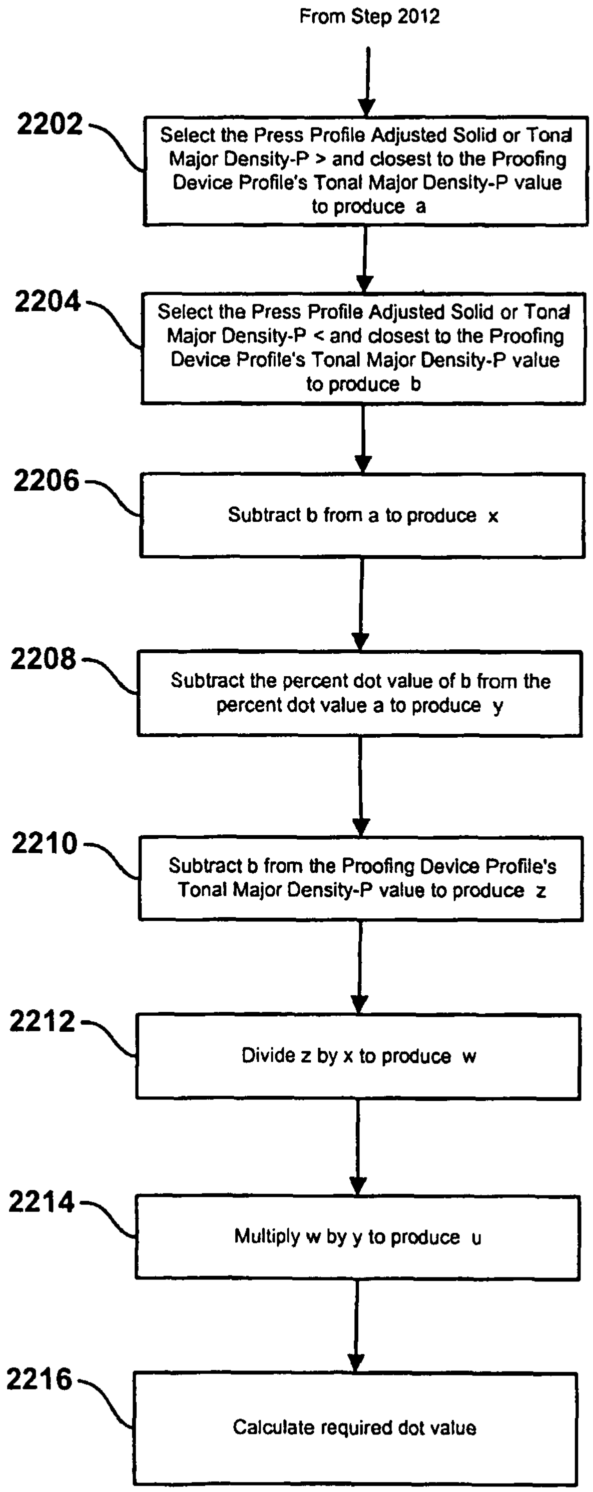
From Step 2012
2202
Select the Press Profile Adjusted Solid or Tonal Major Density-P > and closest to the Proofing Device Profile's Tonal Major Density-P value to produce a
2204
Select the Press Profile Adjusted Solid or Tonal Major Density-P < and closest to the Proofing Device Profile's Tonal Major Density-P value to produce b
2206
Subtract b from a to produce x
2208
Subtract the percent dot value of b from the percent dot value a to produce y
2210
Subtract b from the Proofing Device Profile's Tonal Major Density-P value to produce z
2212
Divide z by x to produce w
2214
Multiply w by y to produce u
2216
Calculate required dot value

FIG. 22

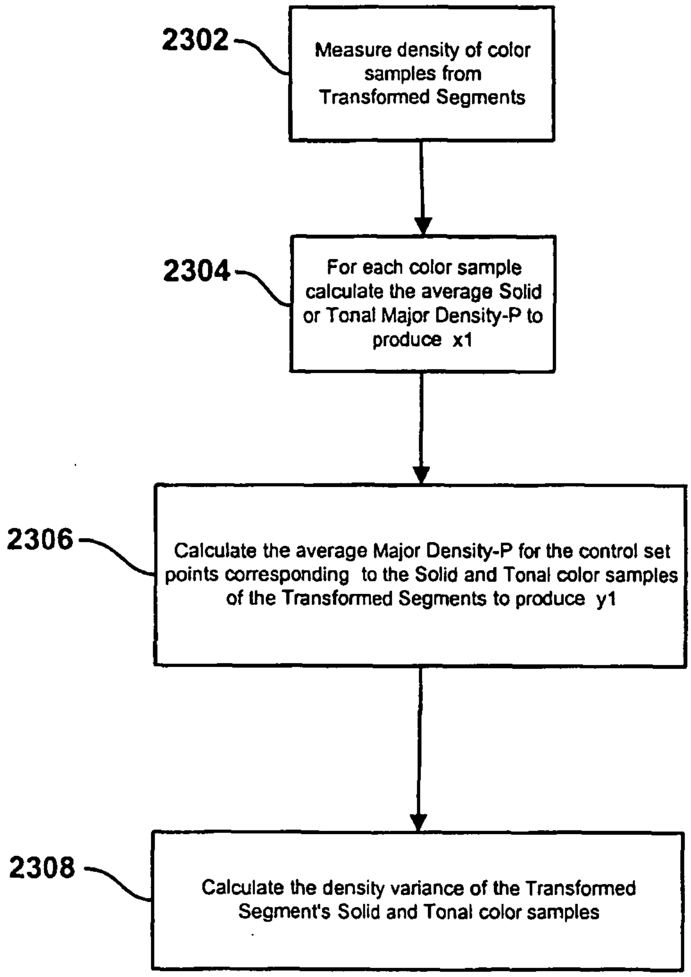
2302
Measure density of color samples from Transformed Segments
2304
For each color sample calculate the average Solid or Tonal Major Density-P to produce x1
2306
Calculate the average Major Density-P for the control set points corresponding to the Solid and Tonal color samples of the Transformed Segments to produce y1
2308
Calculate the density variance of the Transformed Segment's Solid and Tonal color samples

FIG. 23

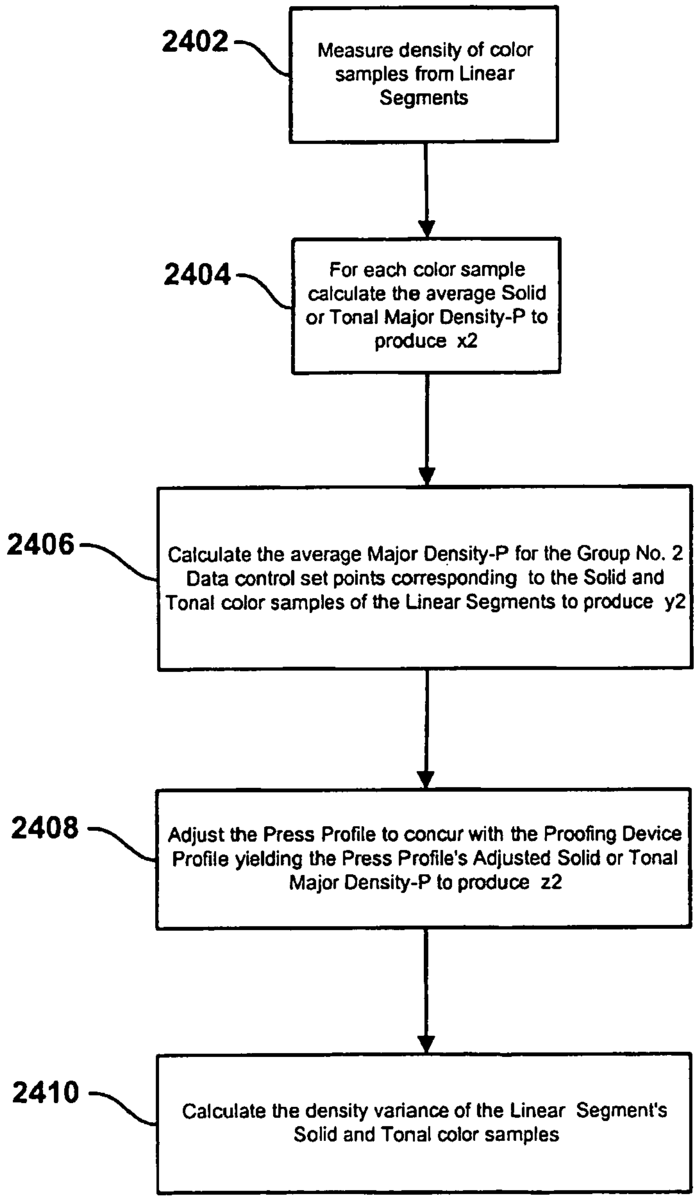
2402
Measure density of color samples from Linear Segments
2404
For each color sample calculate the average Solid or Tonal Major Density-P to produce x2
2406
Calculate the average Major Density-P for the Group No. 2 Data control set points corresponding to the Solid and Tonal color samples of the Linear Segments to produce y2
2408
Adjust the Press Profile to concur with the Proofing Device Profile yielding the Press Profile's Adjusted Solid or Tonal Major Density-P to produce z2
2410
Calculate the density variance of the Linear Segment's Solid and Tonal color samples

FIG. 24

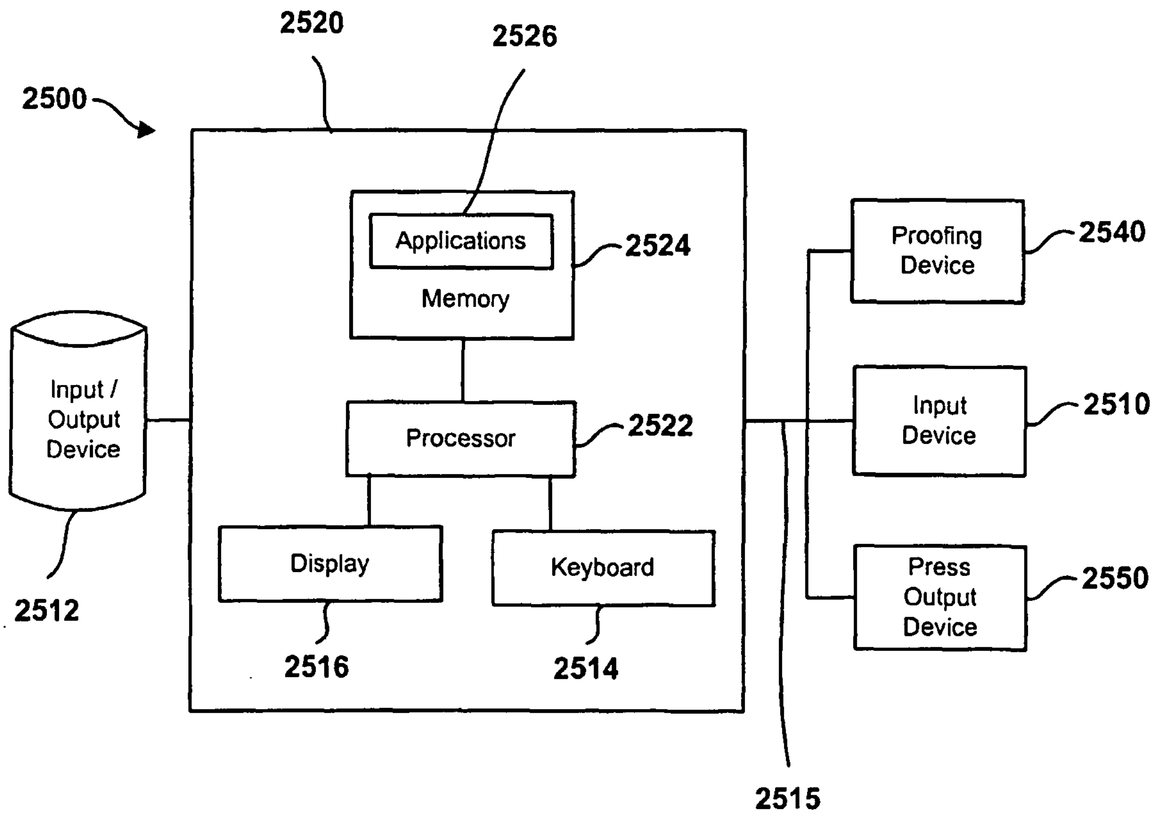
2500
2520
2526
Applications
Memory
2524
Input / Output Device
2512
Processor
2522
Display
2516
Keyboard
2514
Proofing Device
2540
Input Device
2510
Press Output Device
2550
2515

FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 08608002 A

### Non-patent literature cited in the description

- **GARY G. FIELD.** Color and Its Reproduction. GATF Press, 1999, 192-194